Europäisches Patentamt

European Patent Office

Office européen des brevets

(19)

(11)  **EP 1 617 360 A1**

(12)  **EUROPEAN PATENT APPLICATION**
published in accordance with Art. 158(3) EPC

(43) Date of publication:
18.01.2006  Bulletin 2006/03

(51) Int Cl.:
**G06Q 10/00** (0000.00)

(21) Application number: 04720742.8

(22) Date of filing: 15.03.2004

(86) International application number:
**PCT/JP2004/003423**

(87) International publication number:
**WO 2004/084108 (30.09.2004 Gazette 2004/40)**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(30) Priority: 17.03.2003  JP 2003072513

(71) Applicants:
• **Intellectual Property Bank Corp.
Tokyo 105-0001 (JP)**

• **Masuyama, Hiroaki
Toyonaka-shi,
Osaka 560-0054 (JP)**

(72) Inventor: **MASUYAMA, Hiroaki
Toyonaka-shi,
Osaka 560-0054 (JP)**

(74) Representative: **Style, Kelda Camilla Karen et al
Page White & Farrer,
54 Doughty Street
London WC1N 2LS (GB)**

(54)  **ENTERPRISE VALUE EVALUATION DEVICE AND ENTERPRISE VALUE EVALUATION PROGRAM**

(57)    There are provided an enterprise value evaluation device and an enterprise value evaluation program capable of judging validity of an enterprise value such as the rank of stock price of an enterprise to be researched according to the management-finance information and patent information of the enterprise. The enterprise value evaluation device and the enterprise value evaluation program includes: market value information acquisition means for acquiring market value information such as management-finance information, patent information, and the rank of stock price of the enterprise to be researched; management-finance and patent correlation value calculation means for calculating correlation value between management-finance and patent from the management-finance information and the patent information acquired; management-finance and patent correlation value normalization means for calculating the management-finance and patent correlation value normalized; market value information normalization means for calculating the market value information normalized; and validity calculation means for calculating the validity of the enterprise value according to the difference between the normalized management-finance and patent correlation value and the market value information. Thus, it is possible to automatically calculate the validity of the enterprise value such as the rank of stock price of the enterprise to be researched and judge the validity.

FIG. 17

**Description**

TECHNICAL FIELD

The present invention relates to the judgment of enterprise value.

BACKGROUND ART

For financial institutions, investors and corporations, it is extremely important to assess the enterprise value of investment destinations and customers. Thus, conventionally, in order to assess such enterprise value, attempts have been made for objectively judging the enterprise value based on management-finance information regarding management, finance or stock prices. Among such attempts, there are methods of screening and ranking the company to be evaluated via multivariate analysis, statistical techniques and data mining methods.

Japanese Patent Laid-Open Publication No. 2000-348015 describes a technique of reflecting economic changes in enterprise evaluation based on financial data. Specifically, enterprise evaluation based on data in which the renewal period is relatively long (such as every year or every quarter) is calculated. And, based on data in which the renewal period is relatively short such as the stock price, interest and currency exchange that fluctuate from day to day, changes of the enterprise evaluation can be predicted and calculated dynamically.

Further, Japanese Patent Laid-Open Publication No. 2001-76042 describes a technique of comprehending the equity of currently remaining patents by depreciating registered patents and the related sales volume and profits. Moreover, with respect to the evaluation of the value of each patent, the input ranking of evaluation conducted by one's own company and evaluation conducted by other companies is evaluated as the contribution.

DISCLOSURE OF THE INVENTION

Recently, with the increasing ratio of intangible assets making up the enterprise value, the value of intangible assets now has a great influence on the enterprise value. Nevertheless, generally speaking, an enterprise value is not a book value in a balance sheet represented by total assets = liabilities + stockholders' equity, and is roughly calculated by the total market value of shares + liabilities. Therefore, when complete current value accounting is applied, the amount calculated by the total market value of shares - stockholders' equity will represent the validity of invisible assets (intangible assets) of the enterprise. Nevertheless, there was no means for specifically calculating and judging the value of intangible assets.

In addition, the total market value of shares is determined by the stock prices in the market. Thus, whether the current stock price and the value of intangible assets calculated based on the stockholders' equity in the book are valid is an extremely important element for investors in the decision-making of stock trading. This also means that, for enterprises, to increase the value of intangible assets such as the brand image will increase the enterprise value. Therefore, increasing the value of intangible assets will be positioned as an important issue in the management strategy for enterprises.

As described above, the establishment of a method for evaluating the value of intangible assets is a pressing issue. Nevertheless, intangible assets are constituted from various invisible assets such as intellectual property rights including industrial property rights (patents, trademarks and so on) and copyrights, as well as brands and know-how. Thus, it is not easy to evaluate the value of intangible assets.

In light of the above, attempts for evaluating intangible assets have been made in the past. Nevertheless, there was a problem in that it was not possible to evaluate the validity of an enterprise value by incorporating the value of intangible assets quantitatively and qualitatively.

Thus, the present invention calculates the validity of an enterprise value of market value information such as rank of stock price, rank of brand value or rank of hidden assets of the company to be researched based on the management-finance information and patent information of the company to be researched, and an object thereof is to provide an enterprise value evaluation device and enterprise value evaluation program capable of judging the validity of an enterprise value thereby.

Further, another object of the present invention is to provide an enterprise value evaluation device and enterprise value evaluation program capable of calculating a highly reliable management-finance and patent correlation value, calculating the validity of a highly reliable enterprise value and judging the validity thereby even there is time lag between the transition of management-finance information and the transition of patent information in terms of the transition period.

Moreover, yet another object of the present invention is to provide an enterprise value evaluation device and enterprise value evaluation program capable of calculating the validity of an even more highly reliable enterprise value and judging the validity thereof.

In addition, still another object of the present invention is to provide an enterprise value evaluation device and enterprise value evaluation program capable of calculating the validity of an enterprise value of the company to be researched based on even more types of management-finance information and patent information, and judging the validity of the enterprise value thereby.

Further, yet still another object of the present invention is to provide an enterprise value evaluation device and enterprise value evaluation program capable of calculating the validity of various enterprise values in the company to be researched based on management-finance information and patent information, and judging the validity of the enterprise value thereby.

Incidentally, the background of resulting in the creation of technology pertaining to the present invention is explained below.

At the end of the 1990s, pursuant to the significant increase (Note 2) in the ratio of intangible assets (Note 1) making up the enterprise value, particularly in the United States, research studies on trying to measure the value of such invisible assets had actively begun. Further, from several years ago, even in Japan, there is great interest in the value evaluation method of brands and patents constituting the intangible assets of corporations.

(Note 1) "Intangible assets" is a term used in the international accounting standards and refers to intangible non-monetary assets satisfying the requirements as assets. This is referred to as "intangible fixed assets" under the Japanese accounting system, and includes leaseholds and business rights, telephone subscription rights, patent rights, trademark rights and so on. Only identifiable intangible assets are allowed to be recorded in the balance sheet during accounting procedures. Thus, among those constituting "intangible assets", "intellectual assets" such as brands and know-how and "intellectual property" such as patent rights and copyrights may be recorded as assets only for those in which the acquisition cost thereof is clear from M&A or purchases. Therefore, although self-created brands, know-how and patents are evidently important "intangible assets" for corporations, as a general rule, these may not be recorded as assets under the accounting system. These intangible assets are sometimes collectively referred to as "off-balance assets". In the cases of public companies, assuming that the "total market value of shares" calculated by the stock price of a company represents the enterprise value of such company, the valuation amount in the market of the company's "off-balance assets" constituted from self-created brands and patents will be represented by the "difference" between the "total market value of shares (valuation amount of company in the market)" and the "net assets calculated based on current value accounting".

(Note 2) As one background on the increase in the ratio of intangible assets making up the enterprise value of public companies, due to the increase of M&A, cases of recording business rights (including goodwill) and patents have increased. As the background on the increase in the valuated amount of off-balance intangible assets, the cause of rise in the bubble-like stock prices in past stock markets is immanent. Nevertheless, the substantial background on the increase in the valuated amount of intangible assets most likely because the days where the profit of companies is determined based on the size of facilities and tangible fixed assets are gone, and the resource for maximizing profits has changed to intellectual assets such as brands, technology and know-how.

Under these circumstances, we took particular note on the fact that the information concerning patents, which are one of the most important assets constituting intangible assets, is being managed by a public organization (Patent Office), and that all such information is equally disclosed to all under its system. And, we have addressed the theme of developing a highly objective patent value evaluation method based on such public information. During this process, we recognized that the "valuation of patents", which is being discussed widely today, has the following background and purpose that can be broadly classified into 3 categories.

1. Intellectual Property Accounting

The ratio of intangible assets making up the enterprise value is increasing. As a result, the recognition that the disclosure of financial information based on the current accounting system and standards is insufficient as information for judging the value of enterprises is increasing. And, in addition to the introduction of the current value accounting system, the disclosure of information concerning the intangible assets (including off-balance intellectual assets) of companies is being demanded.

2. Intellectual Property Strategy

It is becoming more obvious that the days where the profit of companies is determined based on the size of facilities and tangible fixed assets are gone, and the resource for maximizing profits has changed to intellectual assets such as brands, technology and know-how. In connection with this, the recognition that the creation, management and utilization of such assets must be addressed as management strategy is also increasing. In order to address this kind of theme as the corporate management strategy, a method for correctly comprehending the actual condition of such assets is indispensable. It is not possible to control something that cannot be quantitatively observed. Thus, in terms of patents, in addition to the slogan of "shifting from quantity to quality", the creation of an organization and system capable of comprehensively managing and implementing everything from research and development strategy as issues prior to filing patent applications, to decision-making on whether to file applications from the perspective of costs, comprehension of contents and positioning of pending and acquired patents (patent portfolio), expansion of profit-earning opportunities through the utilization of individual patents and so on are being demanded.

3. Creation of New Business
In order to revitalize our economy, there is growing recognition that the creation of new business around new technology is indispensable. Among other issues, the development of social infrastructure such as the revision of the Commercial Code, and the amplification and creation of a stock market for new companies required for reinforcing and enhancing the fund procurement environment of venture companies have advanced considerably in the 1990s. Nevertheless, in reality, it cannot be said that this development of infrastructure truly contributed to the creation of new business by individuals or medium-to-small venture companies that devised or invented new technology. As one reason for this, it has been recognized in recent years that existing financial suppliers virtually have no scheme for correctly evaluating the new technology of venture companies in a so-called start-up phase which have no assets other than the intellectual assets of such new technology, and providing multilateral support for the commercialization of such new technology.

As described above, the theme of "valuation of patents" relates to an extremely broad background and purpose. Thus, the research thereof needs to be conducted upon sufficiently clarifying its objective.

Under the foregoing recognition, we considered that statistical information to become the foundation of individual evaluation methods each having its own purpose is what is necessary among the foregoing 3 categories. And we have promoted the creation of a "patent economic information database" capable of comprehensively managing patent information and the management-finance information of companies, and freely analyzing diverse data thereby. Further, in order to continuously study the relationship between patents and corporate management upon performing this statistical analysis, we developed an entirely new index.

For example, we established a concept referred to as the "gross operating profit", and estimated the hypothetical gross profit generated by the main business (manufacture and sale activities) excluding the research and development activities in the respective companies. This index was created from the awareness that research and development expenses are all recorded as expenses for the relevant business year under the accounting standards even though they have the quality of an investment for generating future profits, and that it is not possible to correctly comprehend the profitability of the main business of companies with the index of operating profit alone. This is because, when the balance of investments for the future and the securement of current profits is considered to be an important issue in management strategy, there is no choice but to say that the enterprise evaluation depending solely on an index directed to a short-term profit tendency is all too simple. Further, fundamentally, if intellectual assets such as patent technology and know-how are to yield increased profits by contributing to the realization of a relatively high selling price or decrease in the manufacturing costs as a result of added value, to set off the profits generated thereby with the loss created from the insufficient streamlining of inefficient business divisions may even result in the questioning of managerial responsibility. To realize the cycle of maximizing profits through the thorough streamlining in manufacture and sale activities as the commercialization of research and development results, and reinvesting a part of the profits created thereby with a clear vision in research and development activities for creating, expanding and securing future profit-earning opportunities is considered to be the most important management decision making issue (management strategy). In order to realize this, it is important that companies, as well as those conducting the evaluation, further comprehend the actual status of the profitability and management strategy of companies by using "gross operating profit" and "research and development expenses to gross operating profit ratio" without attaching too much importance on short-term profit indexes.

Further, we also established a concept referred to as a "similarity ratio" in order to incorporate the qualitative evaluation of patents (quality of patents) which is impossible merely with financial analysis and quantitative analysis regarding the number of patents. Thereby, the degree of similarity of the individual patent publications filed or registered by the respective companies to all patent publications filed or registered by such companies has been mathematically calculated. Since the average value of the company is calculated upon individually calculating the "similarity ratio" regarding all filings or registrations of that company among all companies subject to the statistical analysis, this can be employed in a multilateral patent information analysis. A distribution chart of patents is created using the "similarity ratio" and "years required for registration" pertaining to individual patents with respect to all filings or registrations acquired by the company during the period of statistical analysis. This distribution chart is used for conducting a survey on the number of patents of a company and the distribution status thereof from the perspective of "similarity ratio" and "years required for registration", and, by dividing the respective indexes into 4 clusters with a prescribed method and sectionalizing these into 16 quadrants, it will be possible to get a feel for the company's patent strategy.

We are trying to promote the examination and research relating to the foregoing indexes, and capture the trend of research and development of the respective companies from a financial aspect and both the quantitative and qualitative aspects of the patent as a part of the results thereof. As a result, we will create highly objective indexes and evaluation/management methods in an area which was difficult for business entrepreneurs and corporate evaluators to measure and control such indexes heretofore.

Under circumstances where there is hardly any precedent, even though there may be insufficiencies in terms of the subject matter thereof, the theme of establishing a statistical method in this unexploited area requires long years of uninterrupted research. From this perspective, we are providing a single specific material for the debate regarding the theme of valuation of intangible assets and patents; that is, we believe that this will be a milestone in the direction of research and development pertaining to this business sector.

In order to overcome the foregoing problems, the enterprise value evaluation device and enterprise value evaluation program of the present invention adopt the following means.

The present invention is an enterprise value evaluation device for calculating the validity of an enterprise value such as rank of stock price of a company to be researched, comprising: management-finance information acquisition means for acquiring management-finance information for a period to be researched from a management-finance information database recording the management-finance information such as information showing the size of the company to be researched or financial information of the company to be researched; patent information acquisition means for acquiring patent information for the period to be researched from a patent information database recording the patent information relating to patents or utility models filed by the company to be researched or registered patents or utility models owned by the company to be researched; market value information acquisition means for acquiring market value information for the period to be researched from a market value information database recording the market value information such as the rank of stock price, rank of brand value or rank of hidden assets of the company to be researched; management-finance and patent correlation value calculation means for calculating the management-finance and patent correlation value as the correlation between the acquired management-finance information and the acquired patent information; management-finance and patent correlation value standardization means for calculating the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value based on the difference between the standardized management-finance and patent correlation value and the standardized market value information.

According to the present invention, as it comprises management-finance information acquisition means for acquiring management-finance information for a period to be researched from the management-finance information database recording the management-finance information such as information showing the size of the company to be researched or financial information of the company to be researched; patent information acquisition means for acquiring patent information for the period to be researched from the patent information database recording the patent information relating to patents or utility models filed by the company to be researched or registered patents or utility models owned by the company to be researched; market value information acquisition means for acquiring market value information for the period to be researched from the market value information database recording the market value information such as the rank of stock price, the rank of brand value or the rank of hidden assets of the company to be researched; management-finance and patent correlation value calculation means for calculating the management-finance and patent correlation value as the correlation between the acquired management-finance information and the acquired patent information; management-finance and patent correlation value standardization means for calculating the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value based on the difference between the standardized management-finance and patent correlation value and the standardized market value information, it will be possible to automatically calculate the validity of the enterprise value such as the rank of stock price of the company to be researched.

Further, in the present invention, the management-finance and patent correlation value calculation means calculates the management-finance and patent correlation value by acquiring the correlation between the acquired management-finance information and the acquired patent information having time lag with the management-finance information.

According to the present invention, as the management-finance and patent correlation value calculation means calculates the management-finance and patent correlation value by acquiring the correlation between the acquired management-finance information and the acquired patent information having time lag with the management-finance information, a highly reliable management-finance and patent correlation value can be calculated even there is time lag between the period when the invention was completed and the period when the sales volume of the enterprise or evaluation of the enterprise will improve. Moreover, it will be possible to calculate the validity of a highly reliable enterprise value and judge the validity thereof.

Further, in the present invention, the validity calculation means provides a prescribed width to a curve of the standardized management-finance and patent correlation value and calculates the validity of the enterprise value based on the length of a curve of the market value information existing in the prescribed width.

According to the present invention, as the validity calculation means provides a prescribed width to the curve of the standardized management-finance and patent correlation value and calculates the validity of the enterprise value based on the length of the curve of the market value information existing in the prescribed width, it will be possible to calculate the validity of a highly reliable enterprise value and judge the validity thereof.

Further, in the present invention, the validity calculation means provides a prescribed width to each of the curves of the standardized management-finance and patent correlation value and the standardized market value information, calculates the area of the region surrounded by both curves having the widths, and calculates the validity of the enterprise value based on the calculated area.

According to the present invention, as the validity calculation means provides a prescribed width to each of the curves of the standardized management-finance and patent correlation value and the standardized market value information, calculates the area of the region surrounded by both curves having the widths, and calculates the validity of the enterprise value based on the calculated area, it will be possible to calculate the validity of an even more highly reliable enterprise value and judge the validity thereof.

Further, in order to overcome the foregoing problems, the present invention further comprises validity threshold acquisition means for acquiring a threshold and judgment results from validity threshold recording means which associates and records the threshold for judging the validity of the enterprise value and the judgment results based on such threshold; validity selection means for selecting a judgment result of the validity from the results upon comparing the calculated validity of the enterprise value and the threshold; and output means for outputting the selected judgment result to display means, to recording means, or to other communication equipment via communication means.

According to the present invention, as it comprises validity threshold acquisition means for acquiring the threshold and judgment results from validity threshold recording means which associates and records the threshold for judging the validity of the enterprise value and the judgment results based on such threshold; validity selection means for selecting the judgment result of the validity from the results upon comparing the calculated validity of the enterprise value and the threshold; and output means for outputting the selected judgment result to display means, to recording means, or to other communication equipment via communication means, the user will be able to learn the validity of an enterprise value.

Further, in order to overcome the foregoing problems, the present invention includes, in the rank of hidden assets, rank of financial assets, rank of asset-impairment accounting, rank of market value claims, rank of human capital, rank of organizational capital or rank of related capital.

According to the present invention, as the rank of hidden assets includes the rank of financial assets, the rank of asset-impairment accounting, the rank of market value claims, the rank of human capital, the rank of organizational capital or the rank of related capital, the validity can be calculated regarding numerous types of market value information.

Further, in order to overcome the foregoing problems, the present invention includes, in the rank of human capital, rank of evaluation of number of employees, rank of ability of human resources, rank of motivation of human resources, rank of leadership of top management or rank of reliability.

According to the present invention, as the rank of human capital includes the rank of evaluation of number of employees, the rank of ability of human resources, the rank of motivation of human resources, the rank of leadership of top management or the rank of reliability, the validity can be calculated regarding numerous types of market value information.

Further, in order to overcome the foregoing problems, the present invention includes, in the management-finance information, information showing the size of the company such as the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis).

According to the present invention, as the management-finance information includes information showing the size of the company such as the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis), the validity of an enterprise value can be calculated based on various types of management-finance information.

Further, in order to overcome the foregoing problems, the present invention includes, in the management-finance information, financial information of the company such as the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, research and development expenses, research and development expenses to sales volume ratio, research and development expenses to gross operating profit ratio, gross operating profit ratio or gross operating profit.

According to the present invention, as the management-finance information includes financial information of the company such as the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, research and development expenses, research and development expenses to sales volume ratio, research and development expenses to gross operating profit ratio, gross operating profit ratio or gross operating profit, the validity of an enterprise value can be calculated based on various types of management-finance information.

Further, in order to overcome the foregoing problems, the present invention includes, in the patent information, information regarding application related matters such as the number of filings, number of filings based on IPC, number of filings based on keywords, number of claims filed, years spent on examination requests, number of inventors, number of applicants, number of joint applications, number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn applications, number of abandoned applications, number of filings in each country, number of inventors in applications in each country, number of applicants in applications in each country, number of priority-claiming applications in each country, number of priority bases claimed in applications in each country or number of divisional applications in each country.

According to the present invention, as the patent information includes information regarding application related matters such as the number of filings, number of filings based on IPC, number of filings based on keywords, number of claims filed, years spent on examination requests, number of inventors, number of applicants, number of joint applications, number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn applications, number of abandoned applications, number of filings in each country, number of inventors in applications in each country, number of applicants in applications in each country, number of priority-claiming applications in each country, number of priority bases claimed in applications in each country or number of divisional applications in each country, the validity of an enterprise value can be calculated based on various types of patent information.

Further, in order to overcome the foregoing problems, the present invention includes, in the patent information, information regarding registration related matters such as the number of registrations, number of registrations based on IPC, number of registrations based on keywords, number of registered claims, years required for registration, registration rate, years spent on examination, number of applications in which preferential examination is conducted, number of rejections issued, number of amendments filed, number of amendments filed for formalities, number of written oppositions filed, number of appeals and trials, number of registrations for creating patent right, number of registrations for extending term of patent right, number of transferred patents, years of payment of patent fees, number of registrations in each country, years required for registration in each country, years spent on examination in each country, number of rejections issued in each country, number of amendments filed in each country, number of amendments filed for formalities in each country or number of written oppositions filed in each country.

According to the present invention, as the patent information includes information regarding registration related matters such as the number of registrations, number of registrations based on IPC, number of registrations based on keywords, number of registered claims, years required for registration, registration rate, years spent on examination, number of applications in which preferential examination is conducted, number of rejections issued, number of amendments filed, number of amendments filed for formalities, number of written oppositions filed, number of appeals and trials, number of registrations for creating patent right, number of registrations for extending term of patent right, number of transferred patents, years of payment of patent fees, number of registrations in each country, years required for registration in each country, years spent on examination in each country, number of rejections issued in each country, number of amendments filed in each country, number of amendments filed for formalities in each country or number of written oppositions filed in each country, the validity of an enterprise value can be calculated based on various types of patent information.

Further, in order to overcome the foregoing problems, the present invention is an enterprise value evaluation device for calculating the validity of an enterprise value such as rank of stock price of a company to be researched, comprising: management-finance information acquisition means for acquiring management-finance information for a period to be researched from a management-finance information database recording the management-finance information such as information showing the size of the company to be researched or financial information of the company to be researched; market value information acquisition means for acquiring market value information for the period to be researched from a market value information database recording the market value information such as the rank of stock price, rank of brand value or rank of hidden assets of the company to be researched; management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value based on the difference between the standardized management-finance information and the standardized market value information.

According to the present invention, as it comprises management-finance information acquisition means for acquiring management-finance information for a period to be researched from the management-finance information database recording the management-finance information such as information showing the size of the company to be researched or financial information of the company to be researched; market value information acquisition means for acquiring market value information for the period to be researched from the market value information database recording the market value information such as the rank of stock price, the rank of brand value or the rank of hidden assets of the company to be researched; management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value based on the difference between the standardized management-finance information and the standardized market value information, it will be possible to automatically calculate the validity of the enterprise value such as the rank of stock price of the company to be researched based on the management-finance information, and judge the validity thereby.

Further, in order to overcome the foregoing problems, the present invention is an enterprise value evaluation device for calculating the validity of an enterprise value such as rank of stock price of a company to be researched, comprising: patent information acquisition means for acquiring patent information for the period to be researched from a patent information database recording the patent information relating to patents or utility models filed by the company to be researched or registered patents or utility models owned by the company to be researched; market value information acquisition means for acquiring market value information for the period to be researched from a market value information database recording the market value information such as the rank of stock price, rank of brand value or rank of hidden assets of the company to be researched; patent information standardization means for calculating the standardized patent information by calculating the average value and the standard deviation regarding the patent information for the period to be researched, subtracting the average value from the patent information for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value based on the difference between the standardized patent information and the standardized market value information.

According to the present invention, as it comprises patent information acquisition means for acquiring patent information for the period to be researched from the patent information database recording the patent information relating to patents or utility models filed by the company to be researched or registered patents or utility models owned by the company to be researched; market value information acquisition means for acquiring market value information for the period to be researched from the market value information database recording the market value information such as the rank of stock price, the rank of brand value or the rank of hidden assets of the company to be researched; patent information standardization means for calculating the standardized patent information by calculating the average value and the standard deviation regarding the patent information for the period to be researched, subtracting the average value from the patent information for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value based on the difference between the standardized patent information and the standardized market value information, it will be possible to automatically calculate the validity of the enterprise value such as the rank of stock price of the company to be researched based on the patent information, and judge the validity thereby.

BRIEF DESCRIPTION OF THE DRAWINGS

FIG. 1 is a diagram showing the overall configuration of the enterprise value evaluation system;
FIG. 2 is a diagram showing a signal processing block diagram of the evaluation device;
FIG. 3 is a chart showing an example of the management-finance information recorded in a database;
FIG. 4 is a chart showing an example of the patent information recorded in a database;
FIG. 5 is a chart showing an example of the stock price ranking recorded in a database;
FIG. 6 is a chart showing an example of the brand value ranking recorded in a database;
FIG. 7 is a chart showing a state of associating the financial assets to equity capital ratio and the rank of financial assets as information recorded in a database;
FIG. 8 is a chart showing a state of associating the asset-impairment accounting to equity capital ratio and the rank of asset-impairment accounting as information recorded in a database;
FIG. 9 is a chart showing a state of associating the market value claims to equity capital ratio and the rank of market value claims as information recorded in a database;
FIG. 10 is a chart showing a state of associating the (sales volume/number of employees) and the evaluation of number of employees as information recorded in a database;
FIG. 11 is a chart showing a state of associating the human capital and the representation for evaluating such human capital as information recorded in a database;
FIG. 12 is a chart showing a state of associating the rank of organization capital such as product/service capital, business process capital, knowledge technology capital, organizational culture capital, organizational personnel system capital and other organizational capital and the representation of evaluating such organizational capital as information recorded in a database;
FIG. 13 is a chart showing a state of associating the related capital such as the customer capital and business partner capital, and the representation of evaluating such related capital as information recorded in a database;
FIG. 14 is a diagram showing the spread information of the management-finance information recorded in a database;
FIG. 15 is a diagram showing an example of the spread information of patent information recorded in a database;
FIG. 16 is a diagram showing an example of the spread information of market value information recorded in a database;
FIG. 17 is a diagram showing a flowchart of the enterprise value validity judgment processing pertaining to the present invention;
FIG. 18 is a diagram showing the transition of the sales volume in the enterprise to be researched;
FIG. 19 is a diagram showing the transition of the number of filings in the enterprise to be researched;
FIG. 20 is a diagram showing the transition of the number of filings in the enterprise to be researched upon addition 2 years;
FIG. 21 is a diagram showing the transition of the number of filings/sales volume of the enterprise to be researched;
FIG. 22 is a diagram showing the transition of the standardized number of filings/sales volume of the enterprise to be researched;
FIG. 23 is a diagram showing linear drawing having prescribed widths of $\pm(1/2)\sigma$ and $\pm\sigma$ regarding the transition of standardized number of filings/sales volume;
FIG. 24 is a diagram showing the transition of the rank of stock price in the enterprise to be researched;
FIG. 25 is a diagram showing the transition of the standardized market value information;
FIG. 26 is a diagram of overlapping the management-finance and patent correlation value and the market value information;
FIG. 27 is a diagram showing a chart indicating the score when the value of management-finance and patent correlation value k and the rank of stock price overlap;
FIG. 28 is a diagram showing an example of the reference value for judging the validity of the market value information based on the average score when the transition of management-finance and patent correlation value and the transition of market value information overlap;
FIG. 29 is a diagram showing the reference value for judging the validity of the market value information based on the length of the curve of the overlapping portion of the transition of management-finance and patent correlation value and the transition of market value information;

FIG. 30 is a diagram showing an example of calculating the validity of the enterprise value by providing a prescribed width to each of the curves of the standardized management-finance and patent correlation value and the market value information, calculating the area of the region surrounded by such curves having the widths, and making such calculation based on the calculated area;

FIG. 31 is a diagram showing a display example of having deleted the line of $\sigma = 0$ in the diagram showing the overlapping portion of the transition of management-finance and patent correlation value and the transition of market value information illustrated in FIG. 30;

FIG. 32 is a diagram showing a display example of the comparison of where smoothing processing is performed regarding the transition of the management-finance and patent correlation value and smoothing processing is performed regarding the market value information;

FIG. 33 is a diagram showing another embodiment of the transition of the rank of stock price;

FIG. 34 is a diagram showing the transition of the rank of stock price after having performed the standardization processing to the market value information;

FIG. 35 is a diagram overlapping the management-finance and patent correlation value and the market value information;

FIG. 36 is a diagram showing a display example of only displaying the line of $\pm(1/2)\sigma$ in the diagram showing the overlapping region of the transition of the management-finance and patent correlation value and the transition of the market value information;

FIG. 37 is a diagram showing the transition of the research and development expenses in the enterprise to be researched;

FIG. 38 is a diagram showing the transition of the number of patent registrations in the enterprise to be researched;

FIG. 39 is a diagram showing the transition of the number of patent registrations in the enterprise to be researched upon adding 5 years;

FIG. 40 is a diagram showing the transition of the research and development expenses to the number of registrations of the enterprise to be researched;

FIG. 41 is a diagram showing the transition of the research and development expenses to the number of registrations after having performed standardization;

FIG. 42 is a diagram having prescribed widths of $\pm(1/2)\sigma$ and $\pm\sigma$ regarding the transition of the research and development expenses to the number of registrations after standardization;

FIG. 43 is a chart showing the process of calculating the rank of human resource capital integrated from the hidden assets of various human resource capitals in a specific period of time;

FIG. 44 is a diagram showing the calculation process of the hidden assets integrated from various hidden assets in a specific period of time;

FIG. 45 is a diagram expressing the transition in terms of time regarding the rank of hidden assets of the enterprise to be researched;

FIG. 46 is a diagram showing the transition of the market value information after standardization;

FIG. 47 is a diagram overlapping the management-finance and patent correlation value and the market value information;

FIG. 48 is a chart showing the combination in a case of designating the transition of the correlation value of the management-finance information showing the size of the company, and the patent information of the application related matters and registration related matters;

FIG. 49 is a chart showing a combination example in a case of judging the validity of the enterprise value by comparing it with the transition of the rank of stock price based on the transition of the correlation value of a part of the management-finance information and a part of the patent information of application related matters;

FIG. 50 is a chart showing a combination example in a case of judging the validity of the enterprise value by comparing it with the transition of the rank of stock price based on the transition of the correlation value of a part of the management-finance information and a part of the patent information of registration related matters;

FIG. 51 is a chart showing a combination example in a case of judging the validity of the enterprise value by comparing it with the transition of hidden assets based on the transition of the correlation value of a part of the management-finance information and a part of the patent information of application related matters;

FIG. 52 is a chart showing a combination example in a case of judging the validity of the enterprise value by comparing it with the transition of hidden assets based on the transition of the correlation value of a part of the management-finance information and a part of the patent information of registration related matters;

FIG. 53 is a chart showing a combination example in a case of judging the validity of the enterprise value by comparing it with the transition of brand value based on the transition of the correlation value of a part of the management-finance information and a part of the patent information of application related matters; and

FIG. 54 is a chart showing a combination example in a case of judging the validity of the enterprise value by comparing it with the transition of brand value based on the transition of the correlation value of a part of the management-finance information and a part of the patent information of registration related matters.

BEST MODE FOR CARRYING OUT THE INVENTION

Embodiments of the present invention are now explained with reference to the drawings.

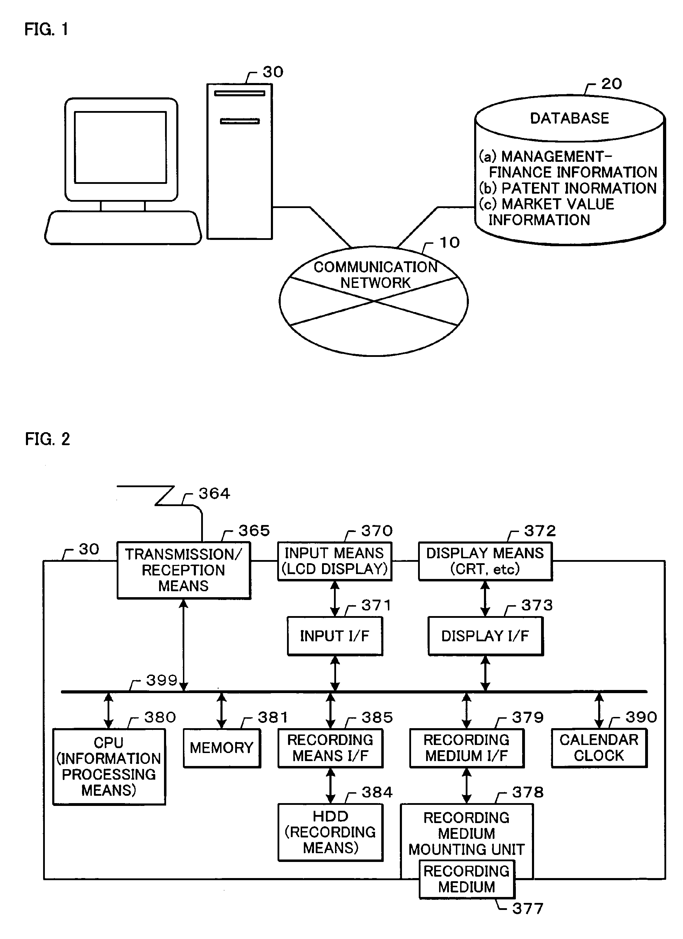

FIG. 1 is a diagram showing the overall configuration of the enterprise value evaluation system pertaining to the present invention.
As shown in FIG. 1, the enterprise value evaluation system is configured from a database 20 recording various types of information such as the management-finance information, patent information (including numerical information concerning utility models in addition to information concerning patents), market value information (numerical information of the market value), threshold for judging the validity of an enterprise value and judgment results of validity based on such threshold; an evaluation device 30 for inputting various types of information such as the management-finance information, patent information and market value information and outputting the judged validity of the enterprise value; and a communication network 10 such as the Internet or dedicated communication line for communicably connecting the evaluation device 30 and database 20.
Incidentally, the database 20 may also be provided inside the evaluation device 30.
FIG. 2 is a signal processing block diagram of the evaluation device 30 pertaining to the present invention.
As shown in FIG. 2, the information transmission-reception unit of the evaluation device 30 is provided with a transmission-reception means 365 (including the functions of the management-finance information acquisition means, patent information acquisition means, market value information acquisition means, validity threshold acquisition means and output means) for transmitting and receiving information to and from other communication devices via a communication network 364 such as a public line or communication network.
Further, the evaluation device 30 is also provided with an input interface 371 for reading the various types of information input by the user via an input means 370 and conveying this to the information processing means described later, or outputting a display command to LCD or the like based on instructions from the information processing means; a display means 372 for displaying information such as images and text; and a display interface 373 (including the function of output means) for outputting image signals to be displayed to the display means 372 based on the command from the information processing means. Incidentally, the input means 370 includes input devices such as a keyboard, mouse or tablet.
Further, the evaluation device 30 is provided with a recording medium mounting unit 378 for detachably mounting a recording medium 377; and a recording medium interface 379 (including the functions of the management-finance information acquisition means, patent information acquisition means, market value information acquisition means, validity threshold acquisition means and output means) for recording or reading various types of information in and from the recording medium 377. Incidentally, the recording medium 377 is a detachable recording medium such as a semiconductor of a memory card or the like, or of a magnetic recording system or optical recording system represented by the likes of an MO or magnetic disk.
Further, the evaluation device 30 is also provided with an information processing means 380 for controlling the overall evaluation device 30; and a memory 381 constituted from a ROM recording programs and various constants to be executed with the information processing means 380 or a RAM as the recording means to become the work area upon the information processing means 380 executing such processes.
Further, the information processing means 380 is capable of realizing the various functions of the management-finance information acquisition means, patent information acquisition means, market value information acquisition means, validity threshold acquisition means, output means, management-finance and patent correlation value calculation means, management-finance and patent correlation value standardization means, market value information standardization means, management-finance information standardization means, patent information standardization means and validity calculation means. Incidentally, instead of the information processing means 380 performing all of these processes, a plurality of dedicated processing devices may also be provided to share and execute such processes in order to achieve the object of the present invention.
Further, the evaluation device 30 is provided with recording means 384 configured from the likes of a hard disk for recording various types of information such as various constants relating to the processing of the evaluation device 30, communication information such as the attribute information, URL (Uniform Resource Locators), gateway information and DNS (Domain Name System) used upon connecting to a communication device on a network, management-finance information relating to the management of a company, patent information relating to patents, market value information, threshold for judging the validity of an enterprise value, and judgment results of the validity based on such threshold; recording means interface 385 (including the functions of management-finance information acquisition means, patent information acquisition means, market value information acquisition means, validity threshold acquisition means and output means) for reading the information recorded in the recording means 384 and writing information in the recording means 384; and a calendar clock 390 for keeping time.

The information processing means 380 in the evaluation device 30, and the various periphery circuits including a display interface 373, a memory 381, a recording means interface 385 and a calendar clock 390 are connected via a bus 399, and the respective peripheral circuits can be controlled based on the processing program to be executed with the information processing means 380.

Incidentally, when the various databases of the management-finance information, patent information and market value information are stored in the recording means 384, or provided by a recording medium 377 such as a CD-ROM, CD-RW, DVD or MO, these may be acquired from other communication devices (database 20, for instance) via the communication network 364.

Further, the evaluation device 30 may also be realized by using various computers such as a personal computer or workstation. Moreover, the evaluation device 30 may also be realized by dispersing the functions thereof as a result of connecting a computer to a network.

The management-finance information acquisition means such as the transmission-reception means 365, recording means interface 375, recording medium interface 379 and information processing means 380 is capable of acquiring management-finance information for a period to be researched from the management-finance information database (database 20, recording means 384, recording medium 377 and so on) recording management-finance information such as information showing the size of the company to be researched or the financial information of the company.

Further, the patent information acquisition means such as the transmission-reception means 365, recording means interface 375, recording medium interface 379 and information processing means 380 is capable of acquiring patent information for a period to be researched from the patent information database (database 20, recording means 384, recording medium 377 and so on) recording patent information relating to patents or utility models filed by the company to be researched or registered patents or utility models owned by the company to be researched.

Further, the market value information acquisition means such as the transmission-reception means 365, recording means interface 375, recording medium interface 379 and information processing means 380 is capable of acquiring market value information for a period to be researched from the market value information database (database 20, recording means 384, recording medium 377 and so on) recording market value information such as the rank of stock price, rank of brand value or rank of hidden assets of the enterprise to be researched.

Further, the information processing means 380 (management-finance and patent correlation value calculation means) is capable of calculating the management-finance and patent correlation value as the correlation between the acquired management-finance information and patent information.

Further, the information processing means 380 (management-finance and patent correlation value standardization means) is capable of calculating the average value and the standard deviation regarding the management-finance and patent correlation value for the period to be researched, subtracting the average value from the management-finance and patent correlation value in each period, and thereafter dividing the outcome of this subtraction by the standard deviation in order to calculate the standardized management-finance and patent correlation value. Moreover, the information processing means 380 (validity calculation means) is capable of providing one or a plurality of prescribed widths to a curve of the standardized management-finance and patent correlation value, and calculating the validity of an enterprise based on the length of a curve of the market value information existing in such prescribed widths. In addition, the information processing means 380 (validity calculation means) is capable of providing a prescribed width to each of the curves of the standardized management-finance and patent correlation value and market value information, calculating the area of the region surrounded by both curves having the widths, and calculating the validity of an enterprise based on the calculated area.

Further, the information processing means 380 (management-finance information standardization means) is capable of calculating the average value and the standard deviation regarding the management-finance information for a period to be researched, subtracting the average value from the management-finance information in each period, and thereafter dividing the outcome of this subtraction by the standard deviation in order to calculate the standardized management-finance information. Moreover, the information processing means 380 (validity calculation means) is capable of providing one or a plurality of prescribed widths to a curve of the standardized management-finance information, and calculating the validity of an enterprise based on the length of a curve of the market value information existing in such prescribed widths. In addition, the information processing means 380 (validity calculation means) is capable of providing one or a plurality of prescribed widths to each of the curves of the standardized management-finance information and market value information, calculating the area of the region surrounded by both curves having the widths, and calculating the validity of an enterprise based on the calculated area.

Further, the information processing means 380 (patent information standardization means) is capable of calculating the average value and the standard deviation regarding the patent information for a period to be researched, subtracting the average value from the patent information in each period, and thereafter dividing the outcome of this subtraction by the standard deviation in order to calculate the standardized patent information. Moreover, the information processing means 380 (validity calculation means) is capable of providing one or a plurality of prescribed widths to a curve of the standardized patent information, and calculating the validity of an enterprise based on the length of a curve of the market value information existing in such prescribed widths. In addition, the information processing means 380 (validity calculation means) is capable of providing one or a plurality of prescribed widths to each of the curves of the standardized patent information and market value information, calculating the area of the region surrounded by both curves having the widths, and calculating the validity of an enterprise based on the calculated area.

Further, the information processing means 380 (market value information standardization means) is capable of calculating standardized market value information by calculating the average value and the standard deviation regarding the market value information for the period to be researched, subtracting the average value from the market value information in each period, and thereafter dividing the outcome of this subtraction by the standard deviation.

Further, the information processing means 380 (validity calculation means) is capable of calculating the validity of an enterprise value based on the difference between the standardized management-finance and patent correlation value and the standardized market value information.

Further, the information processing means 380 (validity calculation means) is capable of calculating the validity of an enterprise value based on the difference between the standardized management-finance information and the standardized market value information.

Further, the information processing means 380 (validity calculation means) is capable of calculating the validity of an enterprise value based on the difference between the standardized patent information and the standardized market value information.

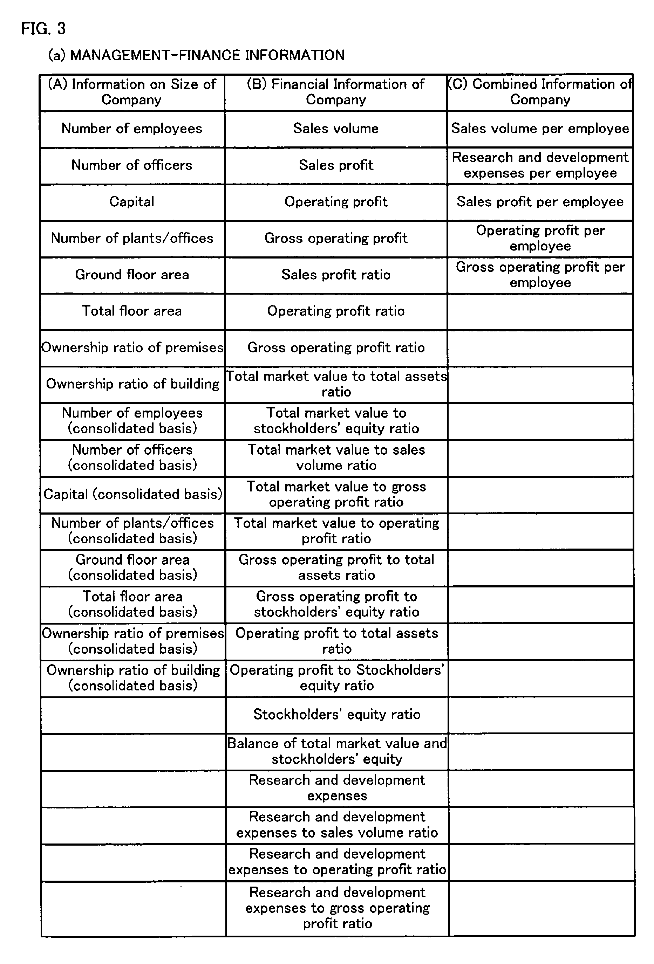

FIG. 3 shows a chart of an example of the management-finance information recorded in a recording means such as the database 20.

As shown in FIG. 3, management-finance information includes information showing the size of the company, information showing the financial information of the company, and combined information of the company calculated by combining the various types of information of the company. Incidentally, as the data of management-finance information, the annual security report of the company to be researched, and information acquired from commercial databases provided by newspaper publishers and research institutes may be used.

Information showing the size of the company includes the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis).

The financial information of the company includes the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, research and development expenses, research and development expenses to sales volume ratio, research and development expenses to gross operating profit ratio, gross operating profit ratio or gross operating profit.

The combined information of the company includes the sales volume per employee, research and development expenses per employee, sales profit per employee, operating profit per employee, gross operating profit per employee and so on.

The gross operating profit is now explained.

Pursuant to the revision of the accounting standards, as a general rule in Japan, research and development expenses must be recorded entirely as expenses in the settlement of accounts after the term ending March 2000. Conventionally, there were numerous companies that did not disclose the breakdown of the research and development expenses included in the manufacturing costs and general administrative expenses. Nevertheless, after the enforcement of these regulations, the amount of research and development expenses pertaining to the calculation of profits and losses became clear. Thereupon, for the purpose of multilaterally analyzing the actual status of such research and development expenses of the company, and index referred to as the "gross operating profit" has been developed. This is based on a trial calculation of hypothetical profits (main business excluding research and development activities; that is, gross profit generated from the manufacture and sale activities) sought by adding the research and development expenses to the operating profit. As a result of the research and development expenses being entirely recorded as expenses, upon calculating profits and losses, the more research and development activities are positively engaged, the more operating profit will be compressed. Thus, while the importance of technology development (intellectual property) is being discussed, there is a problem in that it is difficult to grasp the actual condition of the profitability of the company only from the perspective of operating profit. The foregoing provisional estimate is considered to provide a perspective to this problem. This gross operating profit is an index that is positioned roughly between the sales profit and operating profit. By using the gross operating profit simultaneously with the sales profit and operating profit, it will be possible to grasp the profitability of the company in a more three-dimensional manner.

The sales profit is the gross margin sought by subtracting the manufacturing cost from the sales volume. Nevertheless, some research and development expenses are included in manufacturing costs, whereas others are included in general administrative expenses. Thus, strictly speaking, the gross operating profit cannot be called a profit index positioned between the sales profit and operating profit. The relationship of the gross operating profit and other profit indexes can be represented with the formula indicated below.

```
Gross operating profit

= (sales profit) + (research and development expenses included

in the manufacturing costs) - {(general administrative expenses)

- (research and development expenses included in the general

administrative expenses)}

= operating profit + research and development expenses
```

Further, the research and development expenses to gross operating profit ratio is now explained.

This is a calculation of the ratio of the "research and development expenses" accounted for in the "gross operating profit". Thereby, it will be possible to see the ratio of the gross profits generated from the manufacture and sale activities being reinvested as the research and development expenses. This ratio has a slightly different shade of meaning from the "research and development expenses to sales volume ratio" generally referred to as the R&D ratio. Multilateral analysis such as the analysis to see what kind of ratio could be called the appropriate level is performed.

The value of the "research and development expenses to gross operating profit ratio" is not for comparing the relative merits or quality of companies. This index will differ considerably depending on the business line and size of the company, and the situation of the management strategy and operating revenue of the respective companies. Therefore, this index may be used as a reference index for performing the relative comparison among companies of the same size in the same line of business.

Further, the gross operating profit ratio is now explained.

The "gross operating profit ratio" is sought by dividing the "gross operating profit" by the "sales volume". Therefore, this index is a provisional estimate of the ratio accounting for in the sales volume of the gross profit generated from the main business; that is, the manufacture and sale activities excluding the research and development activities. This index is considered to be positioned roughly between the sales profit ratio (sales ratio of the gross margin generated from manufacture activities) and operating profit ratio (sales ratio of profits generated from main business including research and development activities).

The balance of total market value and stockholders' equity is now explained.

It could be said that the total market value of shares determined by the stock price is a valuation of the enterprise value in the market. Thus, it could also be said that the difference between the total market value of shares and the stockholders' equity in the books is the valuation of the off-balance assets (intangible assets not recorded as assets) of the company in the market. In the future, while the accounting system of Japan will change to the current value accounting, the significance of this difference is considered to become more important. This is because, when complete current value accounting is performed, a company where the "balance of total market value and stockholders' equity" is 0 or less (that is, the value of the price book value ratio (PBR) shown below is 1 or less) will have off-balance intangible assets valuation of 0.

The price book value ratio (Price Book Value Ratio) described above can be calculated with the following calculation formula. This index is an index showing at what level the stock price is at in relation to the stockholders' equity per share.

```
Price book value ratio (PBR) = (total market value of shares) /

(equity capital)
```

Accordingly, when the value of this price book value ratio (PBR) is 1 or less, the market will view that the company has no off-balance assets, or that the company has potential loss (deterioration of off-balance assets or off-the-book debts) in excess of the value of such assets.

Under the current stock market, numerous companies have a PBR of 1 or less. For instance, if the "balance of total market value and stockholders' equity" of a company owning patents that will be effective in yielding profits in the future and which has no bad debts or deteriorated assets is 0 or less, there is a possibility that the company is underestimated in the market.

Today, under the Japanese accounting system, accounting procedures are gradually but surely being changed to the current value accounting system. Thus, the amount of stockholders' equity in the books differs from the theoretical net assets. Accordingly, it is not possible to merely estimate the valuation of the company's off-balance intangible assets in the market with only the "balance of total market value and stockholders' equity" in order to judge the underestimation or overestimation of such evaluation.

The average years required for registration is now explained.

The "years required for registration" means the number of years required from the filing until the registration as a patent via examination. The "average years required for registration (based on the registered year)" is a calculation of the average value of the years required from the filing to the registration of the respective patents, based on the registered year, during the period subject to registration statistics. The "average years required for registration (based on the filed year)" is the calculation of the average value of the years required from the filing to the registration of the respective patents, based on the filed year, that were registered by the end of the period subject to registration statistics among those filed after the period subject to registration statistics and before the end of the period subject to filing statistics.

Therefore, the "average years required for registration (based on the filed year)" will change (increase) by the occurrence of new registrations. Incidentally, by shortening the term of examination request, it is anticipated that the "years required for registration" relating to filings in or after October 2001 will become shortened considerably.

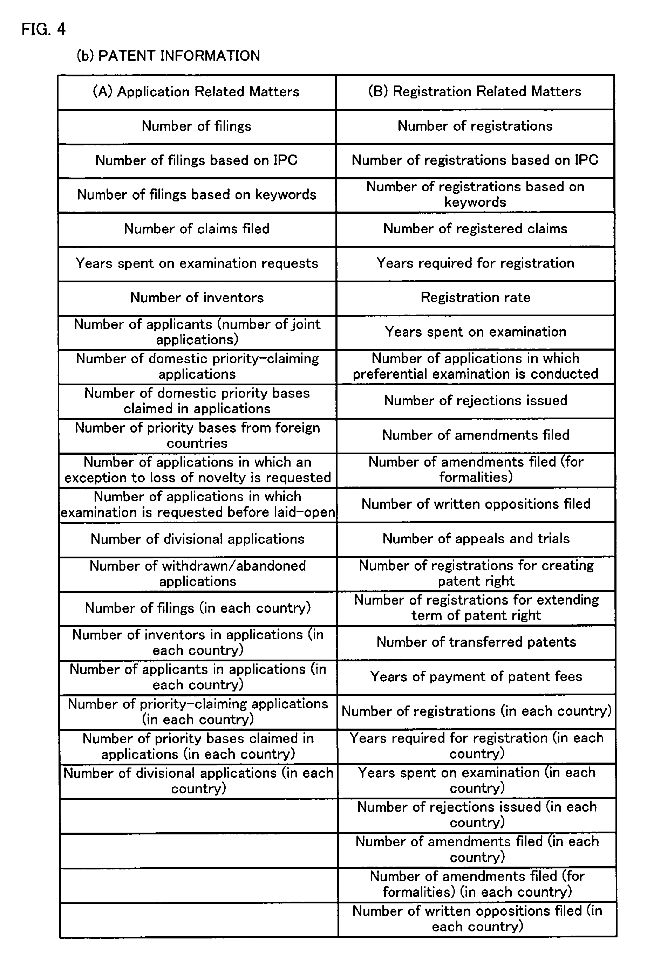

FIG. 4 shows a chart of an example of the patent information recorded in a recording means such as the database 20.

As shown in FIG. 4, patent information includes application information and registration information. As data of the patent information, for instance, information relating to patents and utility models acquired from the database of the Industrial Property Digital Library provided by the Japanese Patent Office may be used.

Application information includes, for instance, per enterprise, the following: the number of filings, number of filings based on IPC, number of filings based on keywords, number of claims filed, years spent on examination requests, number of inventors (including creators), number of applicants (number of joint applications), number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn applications, number of abandoned applications, number of filings in each country, number of inventors in applications in each country, number of applicants in applications in each country, number of priority-claiming applications in each country, number of priority bases claimed in applications in each country or number of divisional applications in each country.

Further, registration information includes, for example, per enterprise, the following: the number of registrations, number of registrations based on IPC, number of registrations based on keywords, number of registered claims, years required for registration, registration rate, years spent on examination, number of applications in which preferential examination is conducted, number of rejections issued, number of amendments filed, number of amendments filed for formalities, number of written oppositions filed, number of appeals and trials, number of registrations for creating patent right, number of registrations for extending term of patent right, number of transferred patents, years of payment of patent fees, number of registrations in each country, years required for registration in each country, years spent on examination in each country, number of rejections issued in each country, number of amendments filed in each country, number of amendments filed for formalities in each country or number of written oppositions filed in each country.

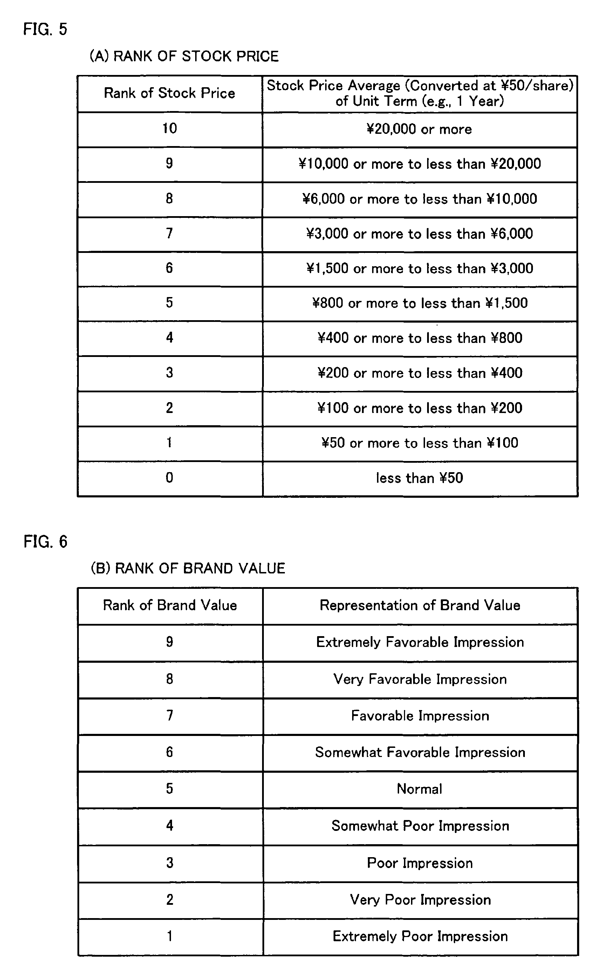

FIG. 5 shows an example of the chart of stock price ranking recorded in a recording means such as the database 20.

The rank of stock price can be considered as an example of the market value information. With respect to stock prices, for instance, the stock prices may be ranked as shown in FIG. 5. As data of the rank of stock price, information acquired from commercial databases provided by newspaper publishers and research institutes may be used.

FIG. 6 shows an example of the chart of brand value ranking recorded in a recording means such as the database 20.

The rank of brand value can be considered as an example of the market value information. With respect to brand values, for instance, the brand values may be ranked as shown in FIG. 5. As data of the rank of brand value, information acquired from commercial databases provided by newspaper publishers and research institutes may be used.

Next, contents of the rank of financial assets, rank of asset-impairment accounting, rank of market value claims, rank of human capital, rank of organizational capital and rank of related capital included in the rank of hidden assets are explained.

Assets of the company include intellectual assets in addition to financial achievements. As the hidden assets of a company, the rank of financial assets, asset-impairment accounting and market value claims contained in the financial achievements can be considered. Further, as the hidden assets of a company, human capital, organizational capital and related capital contained in the intellectual assets can be considered.

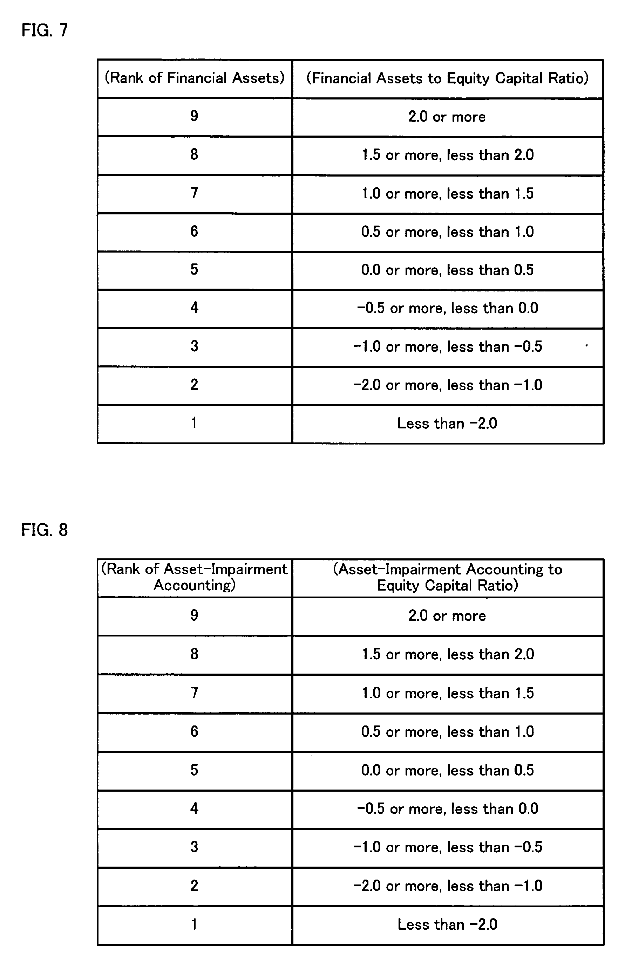

FIG. 7 is a chart showing the state of associating financial assets/equity capital ratio and the rank of financial assets as information recorded in a recording means such as the database 20.

In recent years, intellectual assets take on an important position in management as the power to generate sustainable values in implementing the vision or strategy of business as a representation of the true value of corporate performance.

As an operation method of classifying hidden assets into a rank comparable as numerical values, after individually ranking the rank of financial assets, asset-impairment accounting, market value claims, human capital, organizational capital and related capital according to the respective evaluation methods, the average values may be sought in order to make the decision.

Incidentally, weighting may be performed as necessary to each of the calculated ranks, and the summarization of the respective evaluation methods is not limited to the simple arithmetic average. Therefore, the following calculation method of the rank of hidden assets is not limited to the following operation method.

The rank of financial assets, for example, is calculated as follows.

Foremost, as shown in (Formula 1) below, after calculating the stock holdings, bond holdings and bad debts at the market value, this is divided by the equity capital in order to calculate the ratio (financial assets/equity capital ratio). Here, as shown in (Formula 1), the calculated financial assets/equity capital ratio could be a negative number.

Next, according to the value of the financial assets/equity capital ratio, the processing of determining the rank of financial assets is performed with the chart shown in FIG. 7. For example, as shown in FIG. 7, the case where the financial assets/equity capital ratio is "1.0 or more, less than 1.5" is established as "rank 7" to determine the rank for evaluation.

```
Financial assets to equity capital ratio

= {(stock holdings) + (bond holdings) + (bad debts) + (other

claims)} / (equity capital)                          …(Formula 1)
```

FIG. 8 is a chart showing a state of associating the asset-impairment accounting/equity capital ratio with the rank of asset-impairment accounting as information recorded in the database 20.

The rank of asset-impairment accounting, for instance, is calculated as follows.

Foremost, as shown in (Formula 2) below, after calculating the dormant assets and bad assets at the market value, this is divided by the equity capital in order to calculate the ratio (asset-impairment accounting/equity capital ratio). In this case also, as shown in (Formula 2), the calculated financial assets/equity capital ratio could be a negative number.

Next, according to the value of the asset-impairment accounting/equity capital ratio, the processing for determining the rank of asset-impairment accounting is performed with the chart shown in FIG. 8. Therefore, the case where the asset-impairment accounting/equity capital ratio is "1.0 or more, less than 1.5" is established as "rank 7" to determine the rank for evaluation.

```
Asset-impairment accounting to equity capital ratio

= {(dormant assets) + (bad assets) + (other assets)} / (equity

capital)                                             …(Formula 2)
```

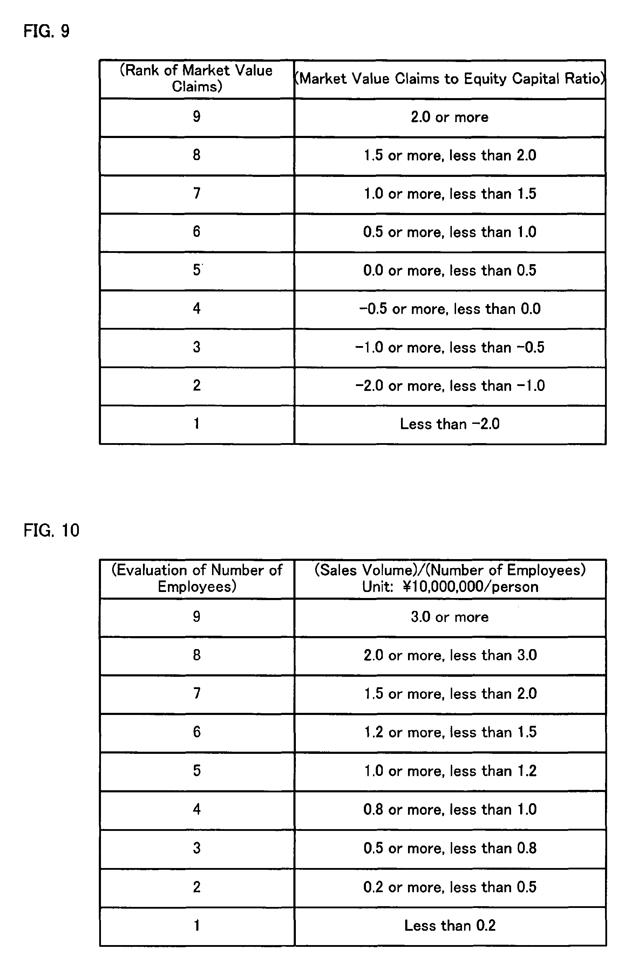

FIG. 9 is a chart showing a state of associating the market value claims/equity capital ratio and the rank of market value claims as information recorded in the database 20.

The rank of market value claims, for instance, is calculated as follows.

The rank of market value claims is the rank of claims based on the fact that the accounts receivable or lease loans will depreciate in relation to the receipt thereof in the future. When calculating the rank of market value claims, as shown in (Formula 3) below, the depreciation of accounts receivable, depreciation of lease loans and other depreciation are divided by the equity capital, and the market value claims/equity capital ratio is foremost calculated.

In this case also, as shown in (Formula 3) below, the calculated financial assets/equity capital ratio could be a negative number.

Next, according to the value of the asset-impairment accounting/equity capital ratio, the processing for determining the rank of market value claims is performed with the chart shown in FIG. 9. Therefore, the case where the asset-impairment accounting/equity capital ratio is "1.0 or more, less than 1.5" is established as "rank 7" to determine the rank for evaluation.

```
Market value claims/equity capital ratio

= {(depreciation of accounts receivable) + (depreciation of

lease loans) + (other depreciation)} / (equity capital)

                                        …(Formula 3)
```

FIG. 10 is a chart showing a state of associating the (sales volume/number of employees) and evaluation of the number of employees as information recorded in the database 20.

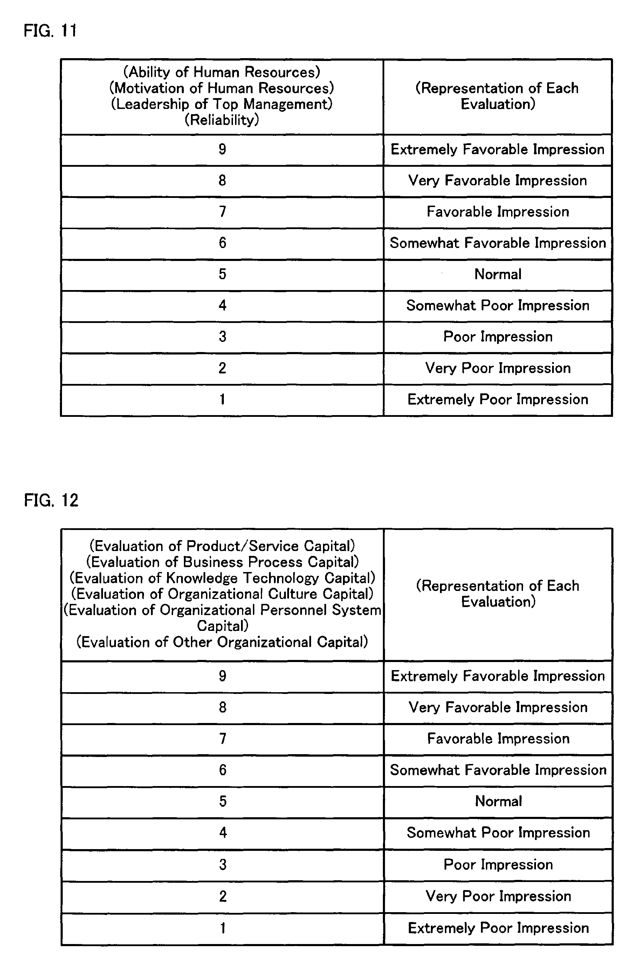

FIG. 11 is a chart showing a state of associating the human capital and the representation of the evaluation of such human capital as information recorded in the database 20.

Upon determining the rank of human capital, in addition to the evaluation of number of employees, it would be preferable to use the evaluation results of the management capital; for instance, human capital such as the ability of human resources and motivation of human resources, leadership of top management and reliability.

Foremost, based on the value of the (sales volume/number of employees), the value of the corresponding evaluation of number of employees is acquired by referring to the chart shown in FIG. 10.

Next, the person in charge inputs the representation of the respective evaluations of the other 4 items and acquires each rank of human capital respectively based on the chart shown in FIG. 11. Next, each rank of human capital is averaged to calculate the final rank of human capital. Here, weighting may be performed to each rank of human capital (evaluation) according to the importance thereof. Further, the method of summarization upon calculating the final rank of human capital from each rank of human capital is not limited to a simple arithmetic average, and the final rank of human capital may be calculated with other operation methods.

The calculation example of the rank of human capital is shown in (Formula 4) below.

```
Rank of human capital

= {(evaluation of number of employees) + (ability of human

resources) + (motivation of human resources) + (leadership of

top management) + (reliability)} / (number of items) …(Formula 4)
```

FIG. 12 is a chart showing the state of associating the rank of organizational capital (evaluation) such as the product/service capital, business process capital, knowledge technology capital, organizational culture capital, organizational personnel system capital and other organizational capital as information recorded in the database 20, and the representation for evaluating such organizational capital.

The product/service capital includes the organizational capital showing the excellence and innovation of products and services.

The business process capital includes the organizational capital showing the efficiency and stability of the business process.

The knowledge technology capital includes the organizational capital showing the advantage and difficulty of imitation of knowledge and technology.

The organizational culture capital includes the organizational capital showing the culture for promoting innovation and the culture for urging customer orientation.

The organizational personnel system capital includes the organizational capital showing the system for supporting the strategy deployment and method of motivating human resources.

Other organizational capital includes the organizational capital such as the system or process, database, value and culture.

Foremost, the person in charge inputs the representation of the respective evaluations of the other 4 items and acquires each rank of organizational capital respectively based on the chart shown in FIG. 12. Next, each rank of organizational capital is averaged to calculate the final rank of organizational capital. Here, weighting may be performed to each rank of organizational capital (evaluation) according to the importance thereof.

Further, the method of summarization upon calculating the final rank of organizational capital from each rank of organizational capital is not limited to a simple arithmetic average, and the final rank of organizational capital may be calculated with other operation methods.

The calculation example of the rank of organizational capital is shown in (Formula 5) below.

```
Rank of organizational capital

= {(product or service capital) + (business process capital)

+ (knowledge technology capital) + (organizational culture

capital) + (organizational personnel system capital) + (other

organizational capital)} / (number of items)        …(Formula 5)
```

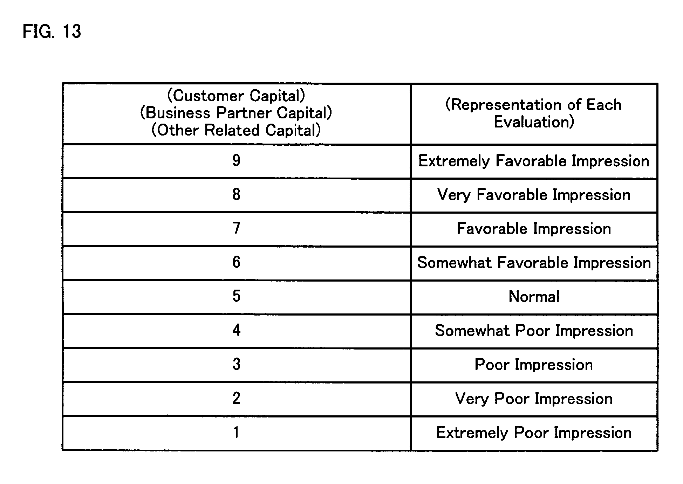

FIG. 13 is a chart showing a state of associating the related capital such as the customer capital and business partner capital, and the representation of evaluating such related capital as information recorded in the database 20.

The rank of related capital, for instance, calculates the average using the evaluation results of the customer capital showing the extensity of customer relations and strength of customer base, business partner capital showing the partner's competence and other related capital.

Foremost, the person in charge inputs the representation of the respective evaluations of the other 4 items and acquires each rank of related capital respectively based on the chart shown in FIG. 13. Next, each rank of related capital is averaged to calculate the final rank of related capital. Here, weighting may be performed to each rank of related capital (evaluation) according to the importance thereof. Further, the method of summarization upon calculating the final rank of related capital from each rank of related capital is not limited to a simple arithmetic average, and the final rank of related capital may be calculated with other operation methods.

The calculation example of the rank of related capital is shown in (Formula 6) below.

```
Rank of related capital

= {(customer capital) + (business partner capital)

+ (other related capital)} / (number of items)        …(Formula 6)
```

Further, with similar methods, the rank of various hidden assets may be added based on evaluations such as whether the company has acquired, is trying to acquire, currently acquiring, or not considering the certification of ISO9001 or ISO14001.

Further, as another method of calculating the rank of hidden assets, the market value of the rank of financial assets, asset-impairment accounting, market value claims, human capital, information capital and related capital may be sought, totaled, and thereafter calculated by being weighted according to the respective evaluation methods. When a part of the assets is significantly in the minus or plus, the sought rank will be closer to the actual status.

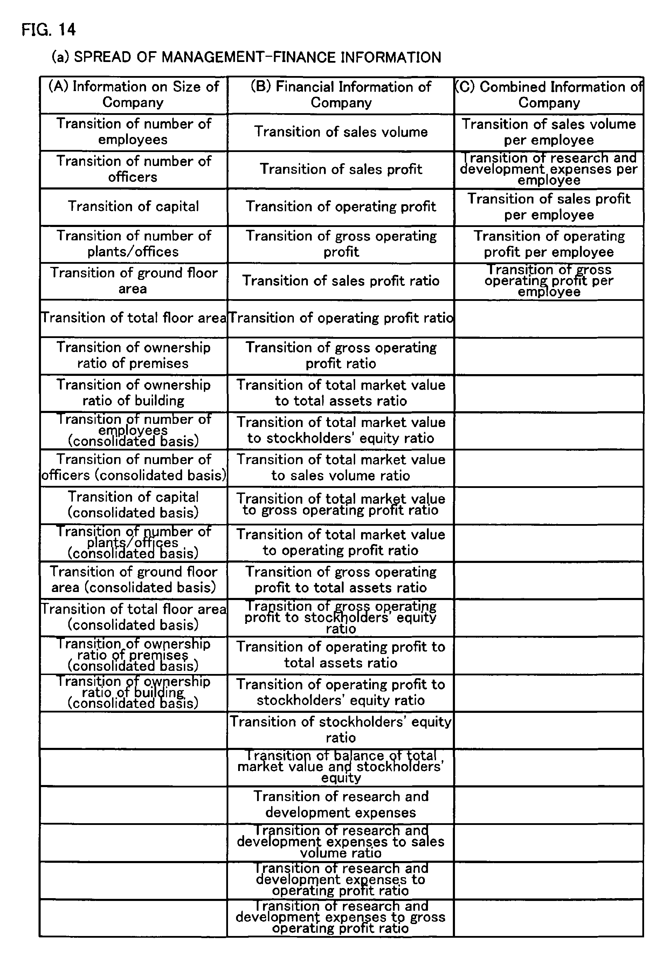

FIG. 14 shows the spread information of the management-finance information recorded in the database 20.

As shown in FIG. 14, the spread information of the management-finance information includes spread information of the information showing the size of the company, spread information of the financial information of the company, and spread information of the combined information of the company.

For example, spread information of the information showing the size of the company includes, for each business year, the transition of number of employees, transition of number of officers, transition of capital, transition of number of plants, transition of number of offices, transition of ground floor area, transition of total floor area, transition of ownership ratio of premises, transition of ownership ratio of building, transition of number of employees (consolidated basis), transition of number of officers (consolidated basis), transition of capital (consolidated basis), transition of number of plants (consolidated basis), transition of number of offices (consolidated basis), transition of ground floor area (consolidated basis), transition of total floor area (consolidated basis), transition of ownership ratio of premises (consolidated basis), transition of ownership ratio of building (consolidated basis) and so on.

Further, spread information of the financial information of the company includes, for each business year, the transition of sales volume, transition of sales profit, transition of operating profit, transition of sales profit ratio, transition of operating profit ratio, transition of total market value to total assets ratio, transition of total market value to stockholders' equity ratio, transition of total market value to sales volume ratio, transition of total market value to gross operating profit ratio, transition of total market value to operating profit ratio, transition of gross operating profit to total assets ratio, transition of gross operating profit to stockholders' equity ratio, transition of operating profit to total assets ratio, transition of operating profit to stockholders' equity ratio, transition of stockholders' equity ratio, transition of balance of total market value and stockholders' equity, transition of research and development expenses, transition of research and development expenses to sales volume ratio, transition of research and development expenses to gross operating profit ratio, transition of gross operating profit ratio, transition of gross operating profit and so on.

Further, spread information of the combined information of the company includes, for each business year, the transition of sales volume per employee, transition of research and development expenses per employee, transition of sales profit per employee, transition of operating profit per employee, transition of gross operating profit per employee and so on.

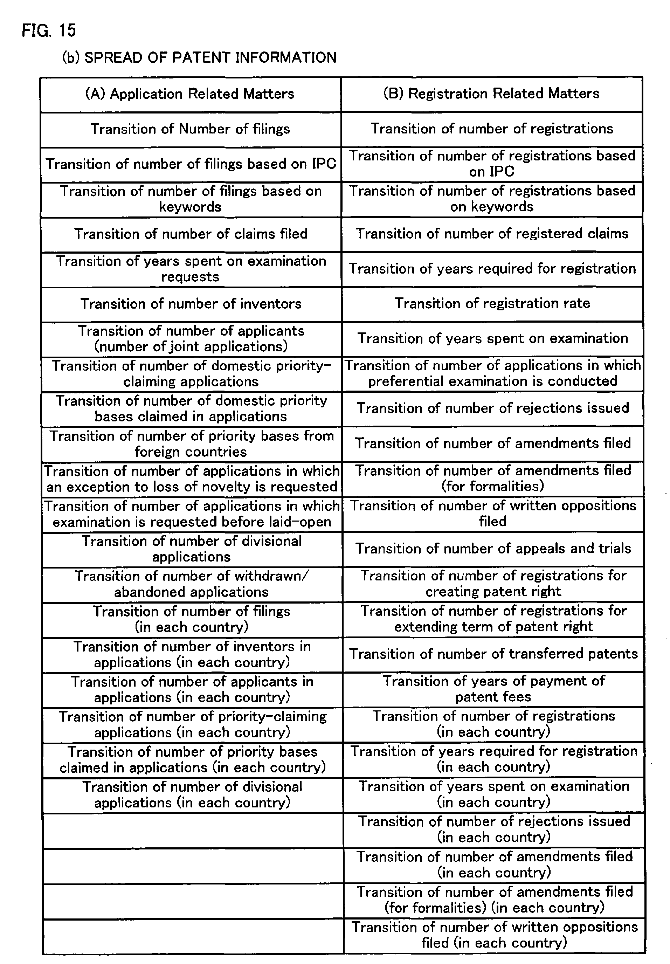

FIG. 15 shows an example of the spread information of patent information recorded in the database 20.

As shown in FIG. 15, the spread information of patent information includes the spread information of application information and the spread information of registration information.

The spread information of application information includes, for instance, for each business year per enterprise, the following: the transition of number of filings, transition of number of filings based on IPC, transition of number of filings based on keywords, transition of average number of claims filed, transition of average years spent on examination requests, transition of average number of inventors, transition of average number of applicants, transition of number of joint applications, transition of average number of domestic priority-claiming applications, transition of average number of domestic priority bases claimed in applications, transition of average number of priority bases from foreign countries, transition of number of written requests for exception to loss of novelty, transition of number of examination requests before laid-open, transition of number of divisional applications, transition of number of withdrawn applications, transition of number of abandoned applications, transition of number of filings in each country, transition of average number of inventors in applications in each country, transition of average number of applicants in applications in each country, transition of number of priority-claiming applications in each country, transition of number of priority bases claimed in applications in each country, transition of number of divisional applications in each country and so on.

The spread information of registration information includes, for example, for each business year per enterprise, the following: the transition of number of registrations, transition of number of registrations based on IPC, transition of number of registrations based on keywords, transition of average number of registered claims, transition of average years required for registration, transition of average registration rate, transition of average years spent on examination, transition of number of preferential examinations, transition of average number of rejections issued, transition of average number of amendments filed, transition of average number of amendments (formalities) filed, transition of average number of amendments filed for formalities, transition of the number of written oppositions filed, transition of number of appeals and trials, transition of number of registrations for creating patent right, transition of number of registrations for extending term of patent right, transition of number of patent right transfers, transition of average years of payment of patent fees, transition of number of registrations in each country, transition of average years required for registration in each country, transition of average years spent on examination in each country, transition of average number of rejections issued in each country, transition of average number of amendments filed in each country, transition of average number of amendments (formalities), transition of average number of amendments filed for formalities in each country, transition of number of written oppositions filed in each country and so on.

Incidentally, the spread information of management-finance information and the spread information of patent information include information regarding the growth rate, average growth rate, trend of increase and decrease in the transition of information of each business year.

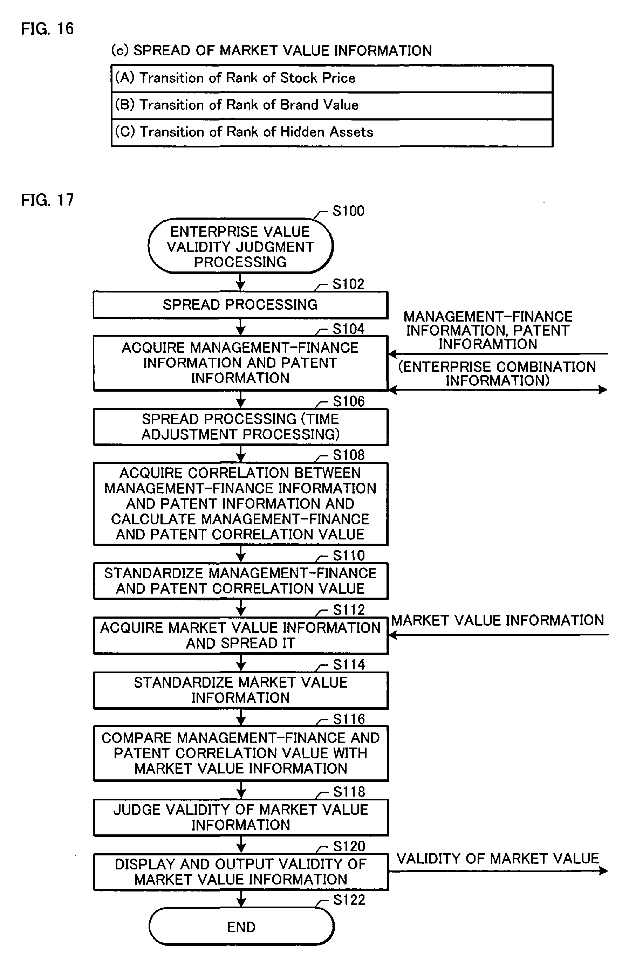

FIG. 16 shows an example of the spread information of market value information recorded in the database 20.

As shown in FIG. 16, spread information is also created for the rank of market value information such as the stock price, rank of brand value and rank of various hidden assets to calculate the transition of each type of market value information, and this is recorded in the database 20.

FIG. 17 shows a flowchart of the enterprise value validity judgment processing pertaining to the present invention. Incidentally, in the first embodiment of the present invention, an example of the processing for judging the validity of the evaluated enterprise value by comparing the transition of the number of filings per unit sales volume and the transition of the rank of stock price is explained.

When a user inputs instructions via the input means 370 for judging the validity of an enterprise value of the enterprise to be researched, the processing to be performed by the information processing means 380 is branched to S100 "enterprise value validity judgment processing" (hereinafter abbreviated as S100 and the like), and the processing proceeds to the subsequent processing of S102 "spread processing".

At S102, the information processing means 380 foremost performs the processing of acquiring management-finance information, patent information or market value information of the enterprise to be researched via the reception means 365, recording medium interface 379 or recording means interface 385.

For example, in order to spread the information showing the size of the company, which is management-finance information required for implementing the enterprise value validity judgment processing desired by the user, information showing the size of the company such as the number of employees and capital is acquired from the database 20, and processing for calculating the transition of information showing the size of the company is performed. For instance, processing for calculating the transition of number of employees in each business year is performed regarding the number of employees, and processing for calculating the transition of capital is performed regarding the capital. Information showing the various transitions calculated above is recorded in the database 20 as required.

Further, among the management-finance information, when spreading the financial information of the company, information showing the financial information of the company such as the sales volume and sales profit is acquired from the database 20, and processing for calculating the transition of financial information of the company is performed. For example, processing for calculating the transition of sales volume in each business year is performed regarding the sales volume, processing for calculating the transition of sales profit is performed regarding the sales profit, and processing for calculating the transition of research and development expenses in each business year is performed regarding the research and development expenses.

Further, among the management-finance information, when spreading the combined information of the company, information showing the size of the company and the financial information of the company are acquired from the database 20, and processing for calculating the transition of combined information of the company is performed. For example, when calculating the transition of research and development expenses per employee, the research and development expenses per employee of each business year are acquired from the database 20, and the transition of research and development expenses per employee is calculated for each year or for each month.

Further, among the patent information, when spreading application information, information showing the number of filings such as the transition of number of filings and average number of claims filed is acquired from the database 20, and processing for calculating the transition of application information is performed. For instance, processing for calculating the transition of number of filings for each business year is performed regarding the number of filings, and processing for calculating the transition of average number of claims filed is performed regarding the average number of claims filed.

Further, among the patent information, when spreading registration information, information showing the number of registrations such as the transition of number of registrations and average number of registered claims is acquired from the database 20, and processing for calculating the transition of registration information is performed. For instance, processing for calculating the transition of number of registrations for each business year is performed regarding the number of registrations, and processing for calculating the transition of average number of registered claims is performed regarding the average number of registered claims.

Further, when spreading market value information, market value information such as the rank of stock price, rank of brand value and rank of hidden assets is acquired from the database 20, and processing for calculating the transition of market value information is performed. For example, processing for calculating the transition of rank of stock price is performed regarding the rank of stock price, processing for calculating the transition of rank of brand value is performed regarding the rank of brand value, and processing for calculating the transition of rank of hidden assets is performed regarding the rank of hidden assets.

When the spread processing of information required for implementing the enterprise value validity judgment processing desired by the user at S102 is completed, the processing to be performed by the information processing means 380 proceeds to S104 "acquire management-finance information and patent information" in order to perform the processing acquiring the correlation between the spread of management-finance information and the spread of patent information.

At S104, the information processing means 380 performs processing for acquiring the spread information of management-finance information and the spread information of patent information from the database 20 via the reception means 365, recording medium interface 379 or recording means interface 385.

For example, when calculating the correlation of the transition of number of filings per employee, for instance, data regarding the number of employees for each unit period; each year for instance, from the period to be researched of the company to be researched is acquired from the management-finance information database of the company recorded in the database 20.

When the data regarding the number of employees exists in each unit period described above, such data is used as is. When two or more data exist in the unit period containing such data regarding the number of employees, the average or optimum numerical value through extrapolation is sought. When there is no data in the unit period containing the data regarding the number of employees and data exists in other unit periods, the average or optimum numerical value through extrapolation is sought from the other data.

Next, the number of filings for each unit period; for each year for instance, among the period to be researched of the enterprise to be researched is sought from the patent information database recorded in the database 20. In other words, among the patents or the like filed by the company, the number of cases where the filing date exists during the unit period is sought.

The number of filings is divided by the number of employees for each unit period of the period to be researched in order to seek the number of filings per employee. By arranging this value across the period to be researched, it will be possible to calculate the transition of number of filings per employee.

As described above, as the correlation of application related matters, for instance, it will be possible to calculate the management-finance and patent correlation value such as the transition of number of filings per employee and the transition of research and development expenses per claim filed. Further, as the correlation of registration related matters, for instance, it will be possible to calculate the management-finance and patent correlation value such as the transition of number of registrations per employee and the transition of research and development expenses per registered claim.

Incidentally, when the user desires to judge the validity of market value information based on the movement of number of filing in relation to the sales volume, the number of filings is divided by the sales volume, and the transition of number of filing in relation to the sales volume is calculated. Further, for example, when the user desires to judge the validity of market value information based on the movement of number of registrations in relation to the research and development expenses, the number of registrations is divided by the research and development expenses, and the transition of number of registrations in relation to the research and development expenses is calculated.

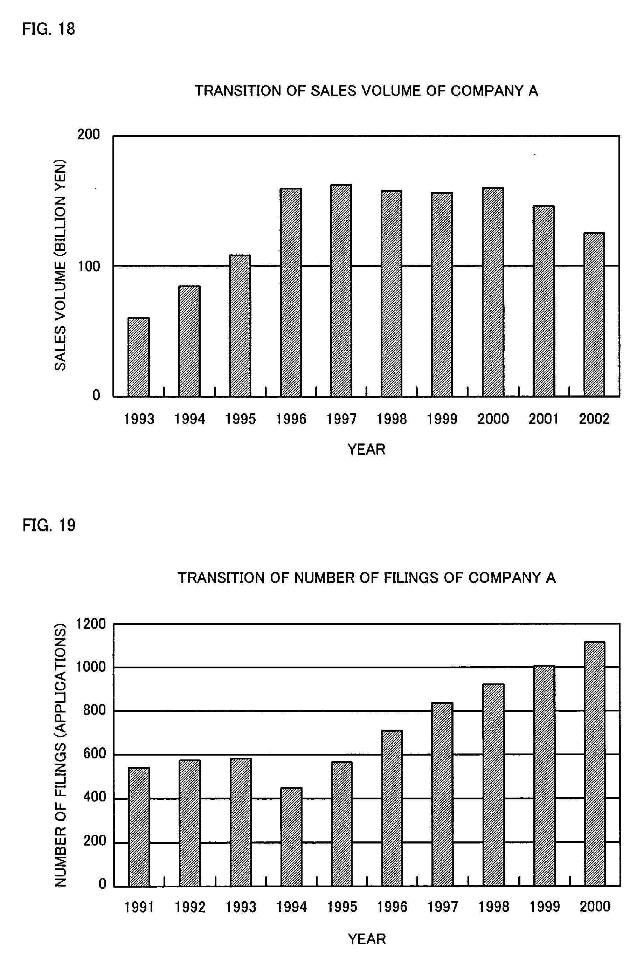

FIG. 18 is a diagram showing the transition of the sales volume in the enterprise to be researched.
In the processing at S104, the transition of sales volume as shown in FIG. 18 can be obtained by acquiring the financial information of the company from the database 20.

FIG. 19 is a diagram showing the transition of the number of filings in the enterprise to be researched.
In the processing at S104, the transition of number of filings as shown in FIG. 19 can be obtained by acquiring the patent information of application related matters from the database 20.

When the acquisition processing of the management-finance information and patent information at S104 is completed, the processing to be performed by the information processing means 380 proceeds to the subsequent processing of S106 "spread processing (period adjustment processing)".

At S106, the information processing means 380 (management-finance and patent correlation value calculation means) performs spread processing of period adjustment against the transition of patent information by adding and shifting a prescribed period (years) as required. Generally speaking, a patent application is filed at the time an invention is completed, and the design and sale of the product are conducted after the filing. Since the sales volume and evaluation of the company increase after the product is released, a processing of adding 2 years to the patent information is performed at the period adjustment processing of S106.

Incidentally, with respect to this adjustment of period, although 2 years is added to the filing year since roughly 2 years is required from the filing until it can be perused by those skilled in the art, when there are other factors, the period may be adjusted in consideration of such factors. Further, generally speaking, since even more time will lapse from the filing to the actual registration, the period may be adjusted, for instance, by adding 5 years based on the past achievements.

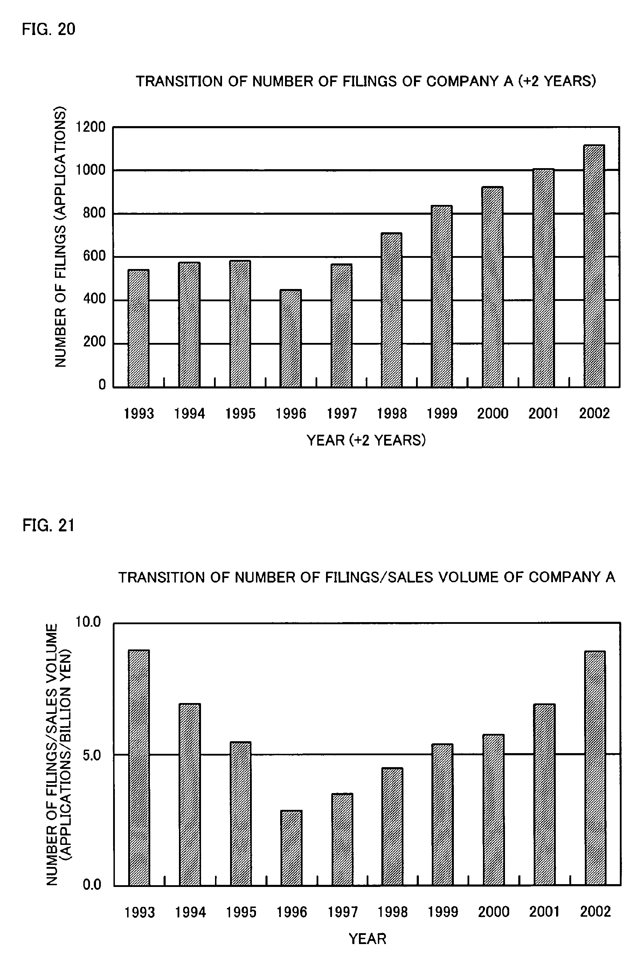

FIG. 20 is a diagram showing the transition of the number of filings in the enterprise to be researched upon addition 2 years.
In the processing at S106, the transition of number of filings can be obtained after adjusting the period as shown in FIG. 20.

At S108 "acquire correlation between management-finance information and patent information, and calculate management-finance and patent correlation value", the information processing means 380 (management-finance and patent correlation value calculation means) performs processing of acquiring the correlation between the acquired management-finance information and the acquired patent information having time lag with the management-finance information acquired at S104 and S106, and calculating the management-finance and patent correlation value.

For example, the number of filings per unit sales volume is calculated from the transition of sales volume of the enterprise to be researched shown in FIG. 18 and the transition of number of filings shown in FIG. 20. In such a case, the processing of dividing the number of filings (number of filings after implementing the period adjustment may be used as necessary, or number of filings in a case of not implementing the period adjustment may be used as necessary) of the enterprise to be researched of each period, and calculating the number of filings/sales volume (management-finance and patent correlation value).

FIG. 21 is a diagram showing the transition of the number of filings/sales volume of the enterprise to be researched calculated as described above.

As shown in FIG. 21, by calculating the transition of number of filings/sales volume based on the number of filings after the implementation of the period adjustment, the comparison of the sales volume and number of filings can be effectively expressed, and the significance in the numerical value of the sales/number of filings can be clarified.

With the foregoing processing, the management-finance and patent correlation value (transition of number of filings/sales volume) has been calculated. Nevertheless, is nothing is done, it is not possible to directly compare the management-finance and patent correlation value and market value information such as the rank of stock price, rank of brand value or rank of hidden assets. This is because the mutual units are different. Therefore, at subsequent S110 "standardize management-finance and patent correlation value", processing for standardizing the management-finance and patent correlation value is performed in order to enable the direct comparison of the market value information and other various types of information.

At S110, the information processing means 380 (management-finance and patent correlation value standardization means) performs processing of calculating the average value and the standard deviation regarding the management-finance and patent correlation value of each period calculated at S108. The information processing means 380 then performs processing of calculating the difference from the average value regarding the management-finance and patent correlation value of each period, and further dividing this difference by the standard deviation σ. In other words, when the management-finance and patent correlation value of a certain period is equivalent to the average value, the calculated value will become "0". Further, when the difference from the average value of the management-finance and patent correlation value of a certain period is equivalent to the standard deviation σ, the value will become "1". Further, when the difference from the average value of the management-finance and patent correlation value of a certain period is equivalent to standard deviation 2σ, the value will become "2". A calculation example of standardization is shown in (Formula 7) below.

```
Number of filings/sales volume (after standardization)

= ((number of filings/sales volume) - Av) / σ          …(Formula 7)
```

Provided that,

Av: Average value of total (number of filings/sales volume)

σ : Standard deviation of total (number of filings/sales volume)

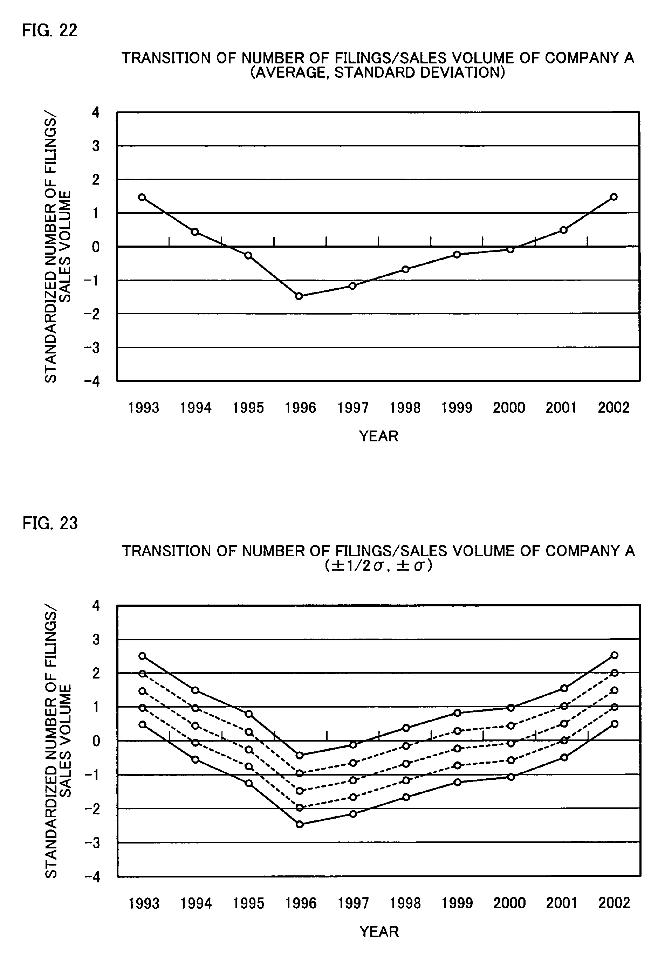

FIG. 22 is a diagram showing the transition of the standardized number of filings/sales volume of the enterprise to be researched calculated as described above.

By implementing the standardization processing of S110, the vertical axis can be unified as the standard deviation, and it will be possible to conduct a direct comparison with other information. Incidentally, the average value of number of filings/sales volume in the scope shown in FIG. 21 is 5.916 (applications/billion yen), and the standard deviation is σ = 2.078.

FIG. 23 is a diagram showing linear drawing having prescribed widths of $\pm(1/2)\sigma$ and $\pm\sigma$ regarding the transition of standardized number of filings/sales volume. As shown in FIG. 23, the information processing means 380 (validity calculation means) is able to easily compare the market value information as described later by setting a width regarding the transition of number of filings per standardized sales volume.

Next, as S112 "acquire market value information and perform spread processing", the information processing means 380 performs processing of acquiring market value information such as the rank of stock price, rank of brand value or rank of hidden assets from the database 20 via the reception means 365, recording medium interface 379 or recording means interface 385.

For example, when calculating the correlation with the transition of the rank of stock price, market value information such as the rank of stock price of the enterprise recorded in the database 20 is acquired for each unit period during the period to be research of the target company.

When the data regarding market value information such as the rank of stock price exists in each unit period described above, such data is used as is. When two or more types of market value information exist in the unit period, the average or optimum numerical value through extrapolation is sought. When there is no market value information in the unit period and exists in other unit periods, the average or optimum numerical value through extrapolation is sought from the other data.

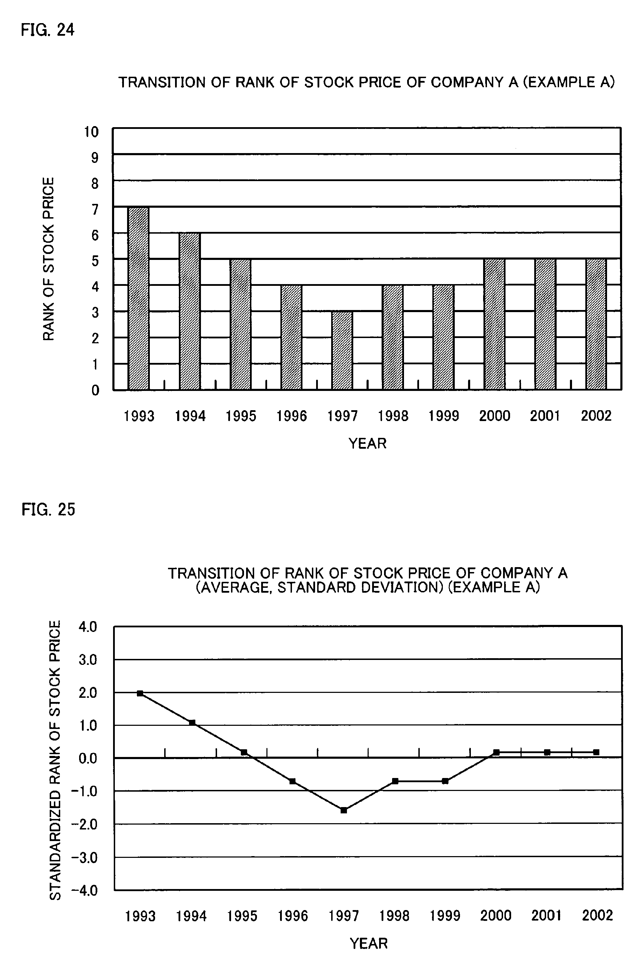

FIG. 24 is a diagram showing the transition of the rank of stock price in the enterprise to be researched. Since the rank of stock price shown in FIG. 24 is a value or ranking the average stock price of a unit period shown in FIG. 5, it is difficult to directly compare the number of filings/sales volume (c.f. FIG. 23). Thus, standardization processing is also performed regarding the market value information at the subsequent processing of S114 "standardize market value information".

At S114, the information processing means 380 (market value information standardization means) performs processing of calculating the average value and the standard deviation regarding the value of market value information of each period acquired at S112. The information processing means 380 then performs processing of calculating the difference from the average value regarding the market value information of each period, and further dividing this difference by the standard deviation σ. In other words, when the market value information of a certain period is equivalent to the average value, the calculated value will become "0". Further, when the difference from the average value of the market value information of a certain period is equivalent to the standard deviation σ, the value will become "1". Further, when the difference from the average value of the market value information of a certain period is equivalent to standard deviation 2σ, the value will become "2". A calculation example of standardization is shown in (Formula 8) below.

```
Market value information (after standardization)


= ((market value information) - Av) / σ          …(Formula 8)
```

Provided that,
Av: average value of total market value information
σ : standard deviation of total market value information

FIG. 25 is a diagram showing the transition of the standardized market value information calculated as described above.

By implementing the standardization processing of S114, the vertical axis can be unified as the standard deviation, and it will be possible to conduct a direct comparison with other information. Incidentally, the average value of the rank of stock price in the scope shown in FIG. 25 is 4.800, and the standard deviation is σ = 1.135.

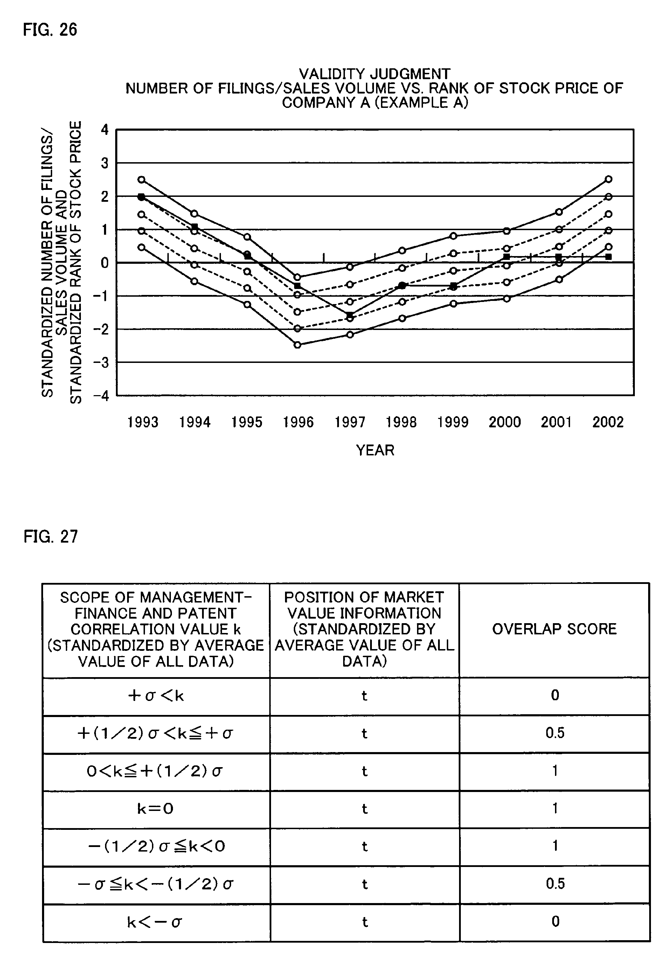

At subsequent S116 "compare management-finance and patent correlation value, and market value information", the information processing means 380 (validity calculation means) performs processing which overlaps and displays the linear drawings of the management-finance and patent correlation value and market value information in order to visually compare the two. FIG. 26 is a diagram of overlapping the management-finance and patent correlation value and the market value information.

As shown in FIG. 26, by overlapping the curves (a curve includes a straight line; hereinafter the same) showing the transition of the two and displaying these on the display means 372, the validity of market value information of stock prices and the like can be visually judged. When the overlapping processing is completed, the processing to be performed by information processing means 380 proceeds to the subsequent processing at S118 "judge validity of market value information".

At S118, the information processing means 380 (validity calculation means) performs processing of quantifying the validity regarding market value information such as the stock price. A plurality of operation methods may be considered for the quantification processing of validity. As the first operation method, an operation method of quantifying the validity of an enterprise value based on the difference (position of point) of the standardized management-finance and patent correlation value and market value information is now explained.

After performing the standardization processing at S110 above, a linear drawing given prescribed widths of $\pm(1/2)\sigma$ and $\pm\sigma$ as shown in FIG. 23 is created. At S118, for instance, in the linear drawing shown in FIG. 23, with respect to the portion given prescribed widths of $\pm(1/2)\sigma$ and $\pm\sigma$ to the management-finance and patent correlation value k, processing is performed for making the scores (numerical values showing the validity) when the market value information t (rank of stock price) is included in such widths 1 and 0.5, respectively, and making the score (numerical value showing the validity) when it is not included in such width 0. Incidentally, the relationship of the scope and score of the management-finance and patent correlation value k are not limited to the foregoing example.

FIG. 27 is a diagram showing a chart indicating the score when the value of management-finance and patent correlation value k and the rank of stock price overlap.

As described above, the management-finance and patent correlation value and market value information are compared in order to calculate the respective "overlap scores". When the "overlap scores" of all periods to be researched are averaged, the validity of market evaluation information based on this average value can be judged.

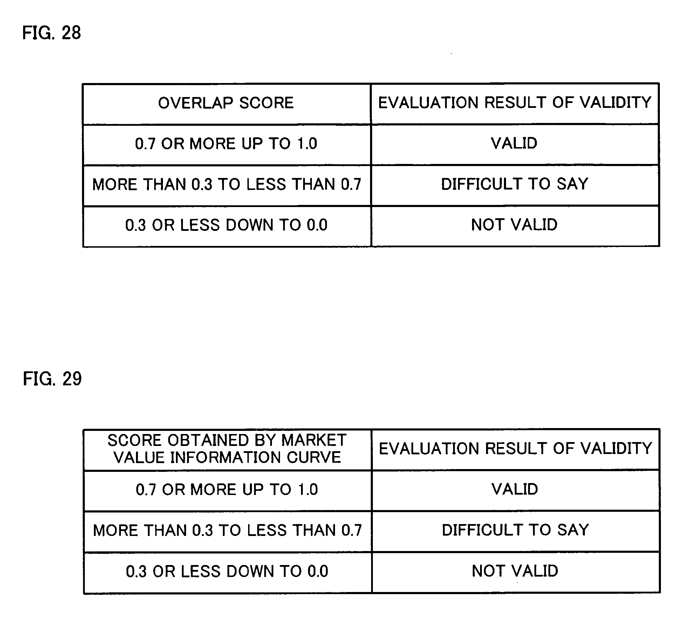

FIG. 28 shows an example of the reference value (evaluation result of validity) for judging the validity of the market value information based on the average score when the transition of management-finance and patent correlation value and the transition of market value information overlap.

As shown in FIG. 28, by extracting the average of scores in the period to be researched, and the evaluation results of the validity of market value information according to the respective scores, the validity of market value information can be judged.

For example, in the case of the number of filings/sales volume vs. stock price rank shown in FIG. 26, the score in 1993 is calculated as 1 point, the score in 1994 as 0.5 points, and the score in 1995 as 1 point. And, in the example not displayed in FIG. 26, for instance, the average score (numerical value showing the validity) in the period to be researched is calculated as 0.80. What kind of relationship this calculated average score of 0.80 is against the validity of market value information is judged as being "valid" based on FIG. 28.

Incidentally, the chart shown in FIG. 28 is for associating and recording the threshold for judging the validity of an enterprise value and the validity of judgment result based on such threshold, and is information recorded in a validity threshold recording means such as the database 20. The validity threshold acquisition means such as the transmission-reception means 365 is capable of acquiring the threshold and judgment result recorded in the validity threshold recording means.

The validity selection means such as the information processing means 380 is capable of calculating the judgment result of validity based on the results of comparing the calculated validity of the enterprise value and acquired threshold.

Further, the display interface 373 (one form of the output means) is capable of outputting and displaying the selected judgment result to and on the display means 372. Further, the judgment result may be output to the recording means 384 via the recording means interface 385 (one form of the output means), or may be output to other communication devices via a communication means such as the transmission-reception means 365.

FIG. 29 shows the reference value for judging the validity of the market value information based on the length of the curve of the overlapping portion of the transition of management-finance and patent correlation value and the transition of market value information.

The management-finance and patent correlation value and market value information are standardized in all periods to be researched similar to the above. The validity calculation means such as the information processing means 380 gives prescribed widths of $\pm(1/2)\sigma$ and $\pm\sigma$ to the curve of the standardized management-finance and patent correlation value. Then, processing for calculating the overlapping length of the band of the curve having this width and the market value information curve is performed.

Next, the processing of multiplying the weighting of 1 and 0.5 to the overlapping length is performed regarding the portion overlapping with the band having the prescribed widths of $\pm(1/2)\sigma$ and $\pm\sigma$. Incidentally, 0 is multiplied to nonoverlapping portions.

Incidentally, here, the ratio of the portion where the market value information curve overlaps with the prescribed area (e.g., respective areas of $\pm(1/2)$ and $\pm\sigma$) of the management-finance and patent correlation value may be calculated in order to operate the validity of an enterprise value by selecting respectively different scores in a plurality of areas.

As described above, the length and weight of the market value information curve overlapping with the width of the management-finance and patent correlation value curve across the entire length of the market value information curve (market value information curve) to be researched, and processing for calculating the average value thereof is further performed. Then, based on the calculated average value (score obtained by the market value information curve), the evaluation results of the validity of market value information from the chart shown in FIG. 29 are acquired.

Incidentally, the chart shown in FIG. 29 is for associating and recording the threshold for judging the validity of an enterprise value and the judgment result of validity based on such threshold, and is information recorded in the validity threshold recording means such as the database 20. The validity threshold acquisition means such as the transmission-reception means 365 is capable of acquiring the threshold and judgment result recorded in the validity threshold recording means.

The validity selection means such as the information processing means 380 is capable of selecting the judgment result of validity based on the result of comparing the calculated validity of the enterprise value and the acquired threshold.

At S120 "display and output validity of market value information", the information processing means 380 performs processing of outputting the numerical value of the validity (acquired evaluation result) of market value information or the text (evaluation result of validity) representing the validity so as to be displayed on the display means 372. Incidentally, such numerical value or text representing the validity may also be transmitted and output to a database or other communication devices via the transmission-reception means 365. Further, this may also be output to the recording medium 377 or recording means 384 via the recording medium interface 379 or recording means interface 375.

As described above, the length and weight of the market value information curve overlapping with the width of the management-finance and patent correlation value curve across the entire length of the market value information curve to be researched are calculated and averaged. Thereby, it will be possible to judge the validity of market value information more accurately and display the judgment result thereof.

When the output processing of market value information at S120 is completed, the processing to be performed by the information processing means 380 proceeds to S122 "end", and the enterprise value validity judgment processing is completed thereby.

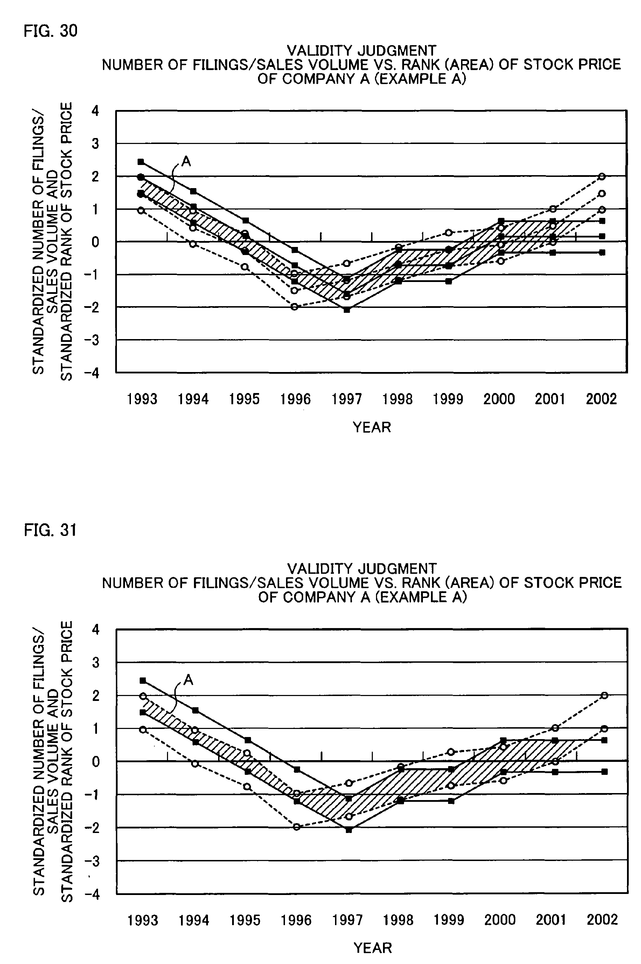

FIG. 30 shows an example of calculating the validity of the enterprise value by providing a prescribed width to each of the curves of the standardized management-finance and patent correlation value (e.g. number of filings/sales volume) and the market value information (e.g. rank of stock price), calculating the area of the region surrounded by such curves having the widths, and making such calculation based on the calculated area;

The management-finance and patent correlation value is standardized in the entire period to be researched similar to above, and a prescribed width of $\pm(1/2)\sigma$ is given to the management-finance and patent correlation value curve. Further, the market value information is also standardized in the entire period to be researched, and a prescribed width of $\pm(1/2)\sigma$ is given to the market value information curve.

And, when the two curves are made to overlap as shown in FIG. 30, processing for calculating the area of the portions (area of "A" in the illustrated example) surrounded by both curves of $\pm(1/2)\sigma$ is performed. Then, the evaluation results of the validity of market value information are acquired from the calculated area and the table shown in FIG. 29.

As described above, the area where width of the market value information curve and width of the management-finance and patent correlation value curve to be researched overlap is calculated. Thereby, the validity of market value information can be judged accurately. Incidentally, the validity of market value information may also be judged based only on the calculated area. Further, the validity may also be judged based on the area per short period calculated by dividing the calculated area by the number of years to be researched.

Further, the area of the region surrounded by the respective curves of the two can be calculated by providing a plurality of prescribed widths (e.g. $\pm(1/2)\sigma$ and $\pm\sigma$) against both curves of the standardized management-finance and patent correlation value and standardized market value information. Here, the validity of an enterprise value is calculated based on the area of the calculated region and weighting of such region. For instance, the score of the portion surrounded by the $\pm(1/2)\sigma$ curve of the management-finance and patent correlation value and the $\pm(1/2)\sigma$ curve of the market value information may be set higher than the portion surrounded with the $\pm\sigma$ curve.

FIG. 31 is a diagram showing a display example of having deleted the line of $\sigma = 0$ in the diagram showing the overlapping portion of the transition of management-finance and patent correlation value and the transition of market value information illustrated in FIG. 30.

As shown in FIG. 31, by making the display upon deleting the center line of $\sigma = 0$, the overlapping portion of the transition of standardized management-finance and patent correlation value and the transition of standardized market value information can be displayed in an easy-to-see manner.

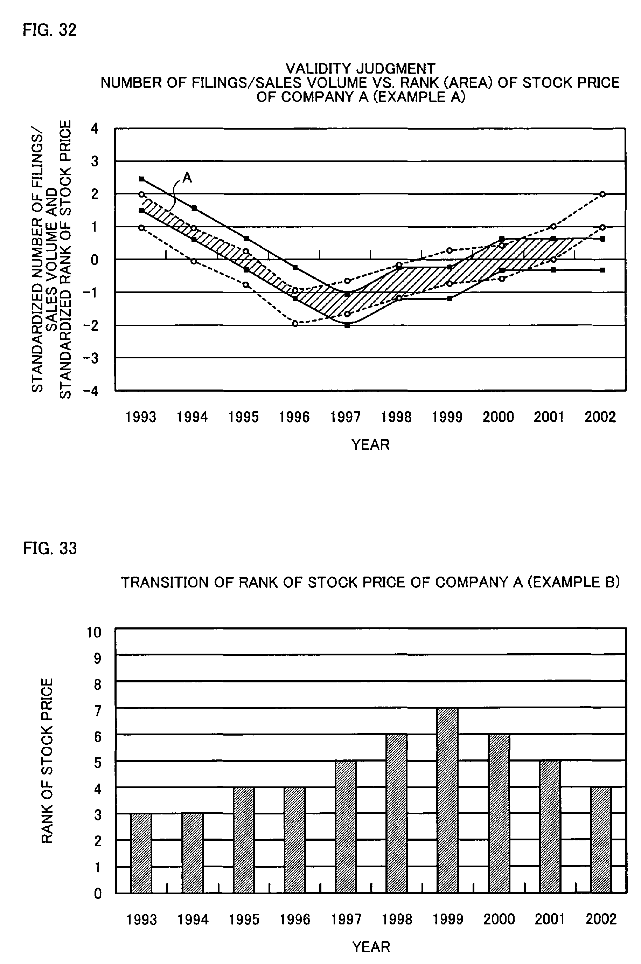

FIG. 32 is a diagram showing a display example of the comparison of where smoothing processing is performed regarding the transition of the standardized management-finance and patent correlation value and smoothing processing is performed regarding the standardized market value information in the diagram illustrated in FIG. 31.

As shown in FIG. 32, the transition of standardized management-finance and patent correlation value and the transition of standardized market value information are subject to smoothing processing in order to approximate both curves for comparison. Thereby, the overlapping portion of the transition of standardized management-finance and patent correlation value and the transition of standardized market value information is displayed in an easy-to-see manner, and the judgment of validity can be made more accurately.

FIG. 33 is a diagram showing a comparative example of a case having a different transition that the transition of the rank of stock price shown in FIG. 24.

The rank of stock price shown in FIG. 33 shows the fluctuation that is roughly the opposite to the rank of stock price shown in FIG. 24. When employing the validity judgment means of the market value information pertaining to the present invention, how the validity of the transition of the rank of stock price is calculated is explained below.

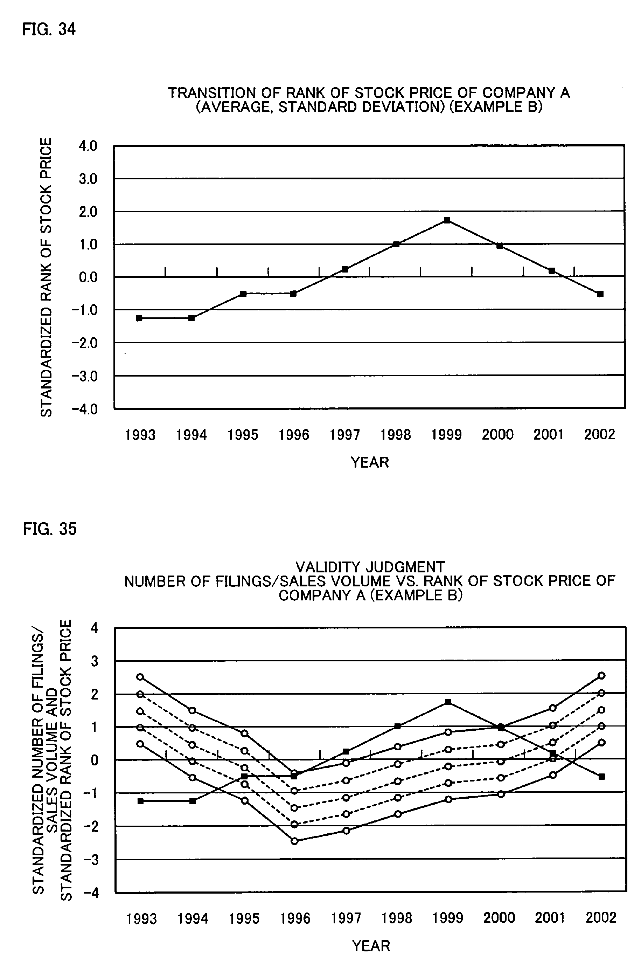

FIG. 34 is a diagram showing the transition of the rank of stock price after having performed the standardization processing to the market value information.

In this case also, foremost, at S114, the information processing means 380 performs processing for calculating the average value and the standard deviation regarding the value of market value information of each period. Then, processing for calculating the difference from the average value regarding the market value information of each period, and further dividing this difference by the standard deviation $\sigma$ is performed.

Next, at S116, the information processing means 380 performs processing of overlapping and displaying the two linear drawings for visually comparing the management-finance and patent correlation value and market value information. FIG. 35 is a diagram overlapping the management-finance and patent correlation value and the market value information.

In the case of FIG. 35, in comparison to the case shown in FIG. 26, there are only a few points where the rank of stock price is contained in the prescribed scope ($\pm\sigma$) of the number of filings/sales volume. In the illustrated example, there are only two ranks of stock price existing in the area of $\pm(1/2)\sigma$ of the number of filings/sales volume of 1995 and 2001. Further, there is only one rank of stock price existing in the area of $\pm\sigma$ of 1996, the total score is 2.5 points, and the average value of scores for 10 years is calculated as 0.25.

When the validity of the rank of stock price in this case is judged based on FIG. 28, the judgment result of validity will be "not valid". It could be said that the judgment result according to this numerical value represents the status of the rank of stock price represented in FIG. 35 well.

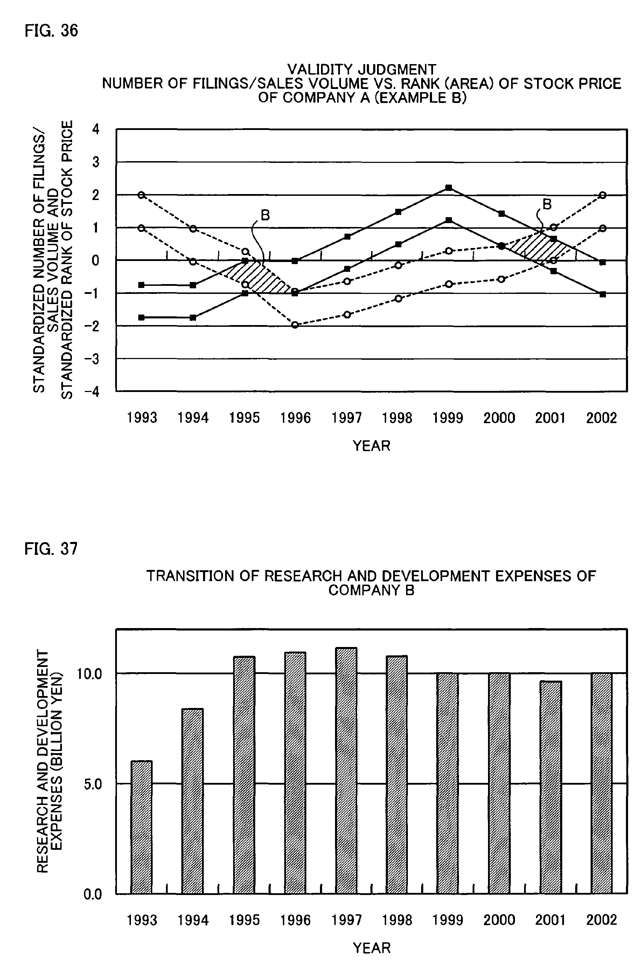

FIG. 36 is a diagram showing a display example of only displaying the line of $\pm(1/2)\sigma$ in the diagram showing the overlapping region of the transition of the standardized management-finance and patent correlation value and the transition of the standardized market value information.

As shown in FIG. 36, it is evident that the area (area of "B") surrounded by the curve of $\pm(1/2)\sigma$ of the transition of standardized number of filings/sales volume and the transition of standardized hidden assets is extremely small in comparison to the case illustrated in FIG. 31. Thereby, information for accurately and easily judging the validity of market value information can be output.

Now, an embodiment of calculating the transition of research and development expenses to the number of registrations using research and development expenses among the financial information of the company as management-finance information, and using the number of registrations as the patent information is explained.

For example, when calculating the correlation of the transition of research and development expenses against the number of registrations, at S104 shown in FIG. 17, data regarding the research and development expenses for each unit period; each year for instance, from the period to be researched of the company to be researched is acquired from the management-finance information database of the company recorded in the database 20. When the data regarding the research and development expenses exists in each unit period described above, such data is used as is. When two or more data regarding the research and development expenses exist in the unit period, the average or optimum numerical value through extrapolation is sought. When there is no data regarding the research and development expenses in the unit period and exists in other unit periods, the average or optimum numerical value through extrapolation is sought from the other data. Similarly to the above processing, the processing of S106 is performed.

At S108, the number of registrations is divided by the research and development expenses for each unit period of the period to be researched in order to seek the number of registrations per unit of research and development expenses. By arranging this value across the period to be researched, it will be possible to calculate the transition of number of registrations per research and development expense.

Like this, the correlation of the transition of number of registrations per research and development expense can be calculated.

FIG. 37 is a diagram showing the transition of the research and development expenses in the enterprise to be researched.

Based on the processing at S104, the transition diagram of the research and development expenses as shown in FIG. 27 can be obtained.

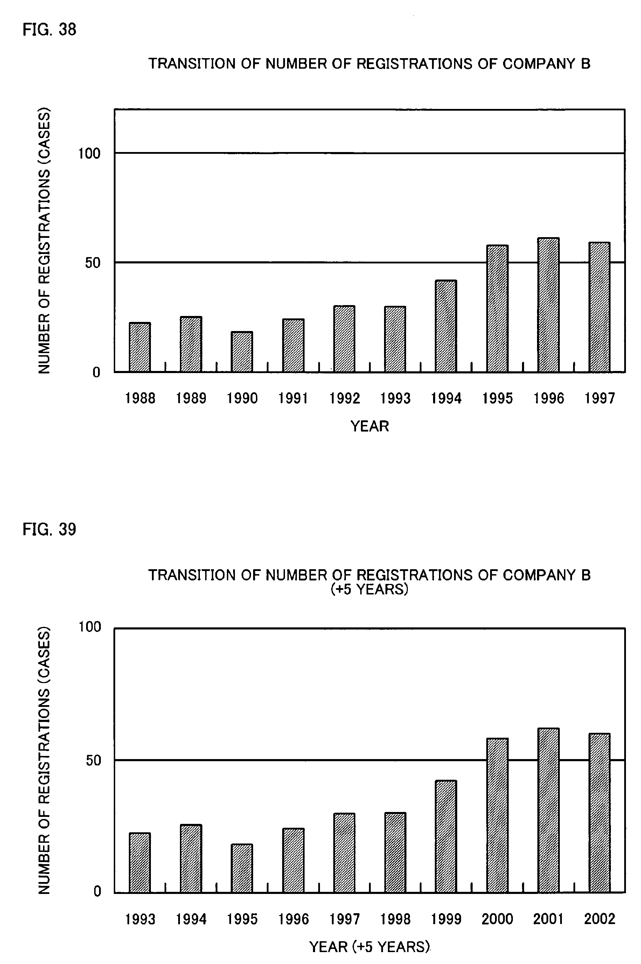

FIG. 38 is a diagram showing the transition of the number of patent registrations in the enterprise to be researched.

Based on the processing at S104, the transition diagram of the number of patent registrations as shown in FIG. 38 can be obtained.

At S106, the information processing means performs spread processing of period adjustment for adding a prescribed period (years) to the transition of patent information (transition of filed year in this embodiment). Generally speaking, it takes several years from the filing until the actual registration. During this time, although the number of years will differ depending on the period that the examination request can be made from the filing or the period required for the examination, the number of years that automatically saturates based on the statistics on the number of years from each filing to registration or the time required until analysts are able to search the invention after the filed invention is publicly disclosed may be determined. Further, the period may be specified based on the operator's experience.

For example, conventionally, although the period of requesting examination after the filing was 7 years, this has been recently shortened to 3 years. Further, although it generally takes an additional 2 years from the examination request to the actual registration, since examination requests are made early in many cases, an average value may be also be calculated.

At the period adjustment processing of S106, processing of adding 5 years to the registration related patent information is performed. Incidentally, this addition is not limited to 5 years, and, for instance, 9 years may be added upon calculating the transition regarding the "number of appeals and trials".

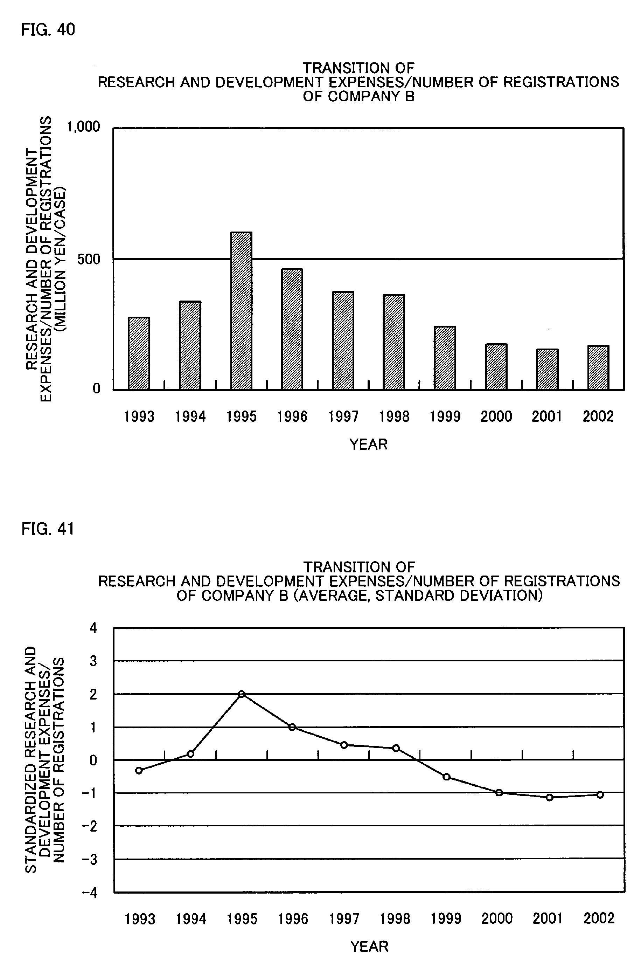

FIG. 39 is a diagram showing the transition of the number of patent registrations in the enterprise to be researched upon adding 5 years.

At S108, the information processing means performs processing for acquiring the correlation between the management-finance information and patent information acquired at S104 and S106, and calculating the management-finance and patent correlation value.

For instance, the number of registrations per unit of research and development expenses is calculated from the transition of research and development expenses of the enterprise to be researched shown in FIG. 37 and the transition of number of registrations shown in FIG. 39. Here, processing of dividing the number of registrations of the enterprise to be researched (number of registrations after the implementation of period adjustment may be used as necessary; number of registrations in a case of not implementing period adjustment may also be used as necessary) for each period (year for instance) by the research and development expenses, and calculating the research and development expenses to number of registrations is performed.

FIG. 40 is a diagram showing the transition of the research and development expenses to the number of registrations of the enterprise to be researched calculated as described above.

As shown in FIG. 40, by calculating the transition of research and development expenses to number of registrations based on the number of registrations after implementing the period adjustment, the comparison of the research and development expenses and number of registrations can be effectively expressed, and the significance in the numerical value of the number of registrations can be clarified.

With the foregoing processing, the management-finance and patent correlation value (transition of research and development expenses to number of registrations) has been calculated. Nevertheless, is nothing is done, it is not possible to directly compare the management-finance and patent correlation value and market value information such as the rank of hidden assets. Therefore, at subsequent S110, processing for standardizing the management-finance and patent correlation value is performed.

FIG. 41 is a diagram showing the transition of the research and development expenses to the number of registrations after having performed standardization at S110.

By performing the standardization processing at S110, the vertical axis can be made the standard deviation, and the direct comparison with other information will become possible. Incidentally, the average value of the research and development expenses to the number of registrations in the scope shown in FIG. 41 is 313 (million yen/number of registrations), and the standard deviation is $\sigma = 143$.

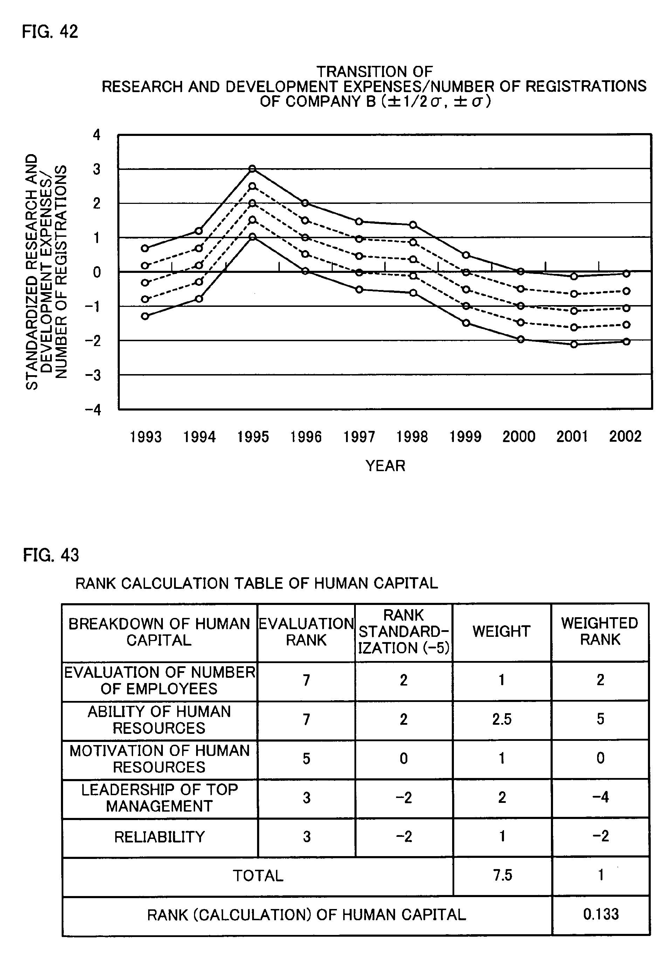

Further, FIG. 42 is a diagram having prescribed widths of $\pm(1/2)\sigma$ and $\pm\sigma$ regarding the transition of the research and development expenses to the number of registrations after standardization. As shown in FIG. 42, by setting a width regarding the transition of standardized research and development expenses to number of registrations, comparison with the market value information can be conducted easily as described later.

At subsequent S112, the information processing means 380 performs processing for acquiring market value information such as the rank of hidden assets from the database 20 via the reception means 365, recording medium interface 379 or recording means interface 385.

The hidden assets contain a plurality of hidden assets as illustrated in FIG. 7 to FIG. 13. According to the present invention, although is it possible to judge the validity of the market value information regarding the respective hidden assets, the following example shows an embodiment of integrating the elements of the plurality of hidden assets and then judging the validity of the market value information.

Regarding the human capital among the hidden assets, elements of the plurality of human capital depicted in FIG. 11 exist. An embodiment of calculating the controlled rank of the plurality of human capital is shown below.

FIG. 43 is a chart showing the process of calculating the rank of human resource capital integrated from the hidden assets of various human resource capitals such as the evaluation of number of employees, ability of human resources, motivation of human resources, leadership of top management and reliability in a specific period of time.

Let it be assumed that the evaluation ranking of various human resource capitals is evaluated as shown in FIG. 43. Foremost, the information processing means 380 acquires at S114 "standardize market value information" the evaluation rank of the human resource capital designated as the subject of evaluation among the various human resource capital recorded in the database 20.

Next, the information processing means 380 performs standardization processing for calculating the distance from the center of the evaluation rank regarding the evaluation rank of the various human capitals (when the evaluation rank is represented with the numerical values of 1 to 9, since the center of the evaluation rank is the rank of 5, 5 is subtracted from the evaluation rank of the various hidden assets.

Next, the information processing means 380 performs the processing of calculating the weighted rank by multiplying the weighting coefficient based on the respective levels of importance regarding the standardized evaluation rank of various human capitals. This weighting coefficient may also be recorded in the database 20 in advance by the operator by calculating the level of importance for each of the various human capitals. The information processing means 380 calculates the weighted rank by acquiring the weighting coefficient of various human capitals from the database 20 and multiplying the weighting coefficient to the standardized evaluation rank of various human capitals.

Next, the information processing means 380 performs the processing for calculating the weighted rank total for each of the calculated various human capitals, dividing such weighted rank total by the total of weight to derive the weighted rank of the integrated human capitals. The weighted rank of this integrated human capital is output to and recorded in a recording means such as the database 20, recording medium 377, recording means 384, memory 381 or the like.

In the example shown in FIG. 43, the integrated rank of human capital is calculated as 0.133.

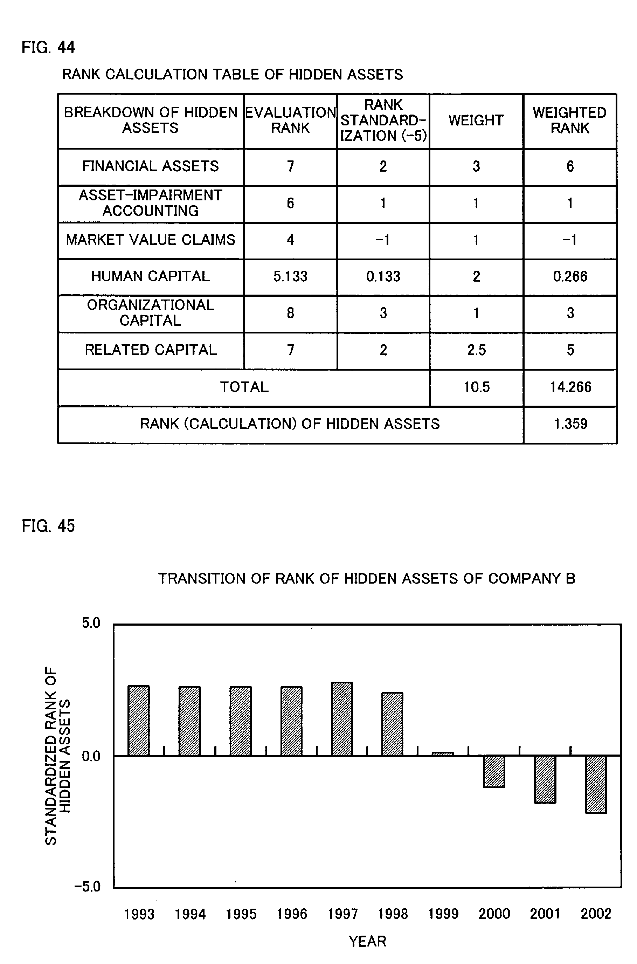

FIG. 44 is a diagram showing the calculation process of the hidden assets integrated from various hidden assets such as the rank of financial assets, asset-impairment accounting, market value claims, human capital, organizational capital and related capital in a specific period of time.

Let it be assumed that the evaluation rank of the various hidden assets is evaluated as illustrated in FIG. 44. Incidentally, as the human capital, the integrated rank of human capital shown in FIG. 43 is used. Foremost, the information processing means 380 at S114 "standardize market value information" acquires the hidden assets designated as the subject of evaluation among the various hidden assets recorded in the database 20.

Next, the information processing means 380 performs the standardization processing of calculating the distance from the center of the evaluation rank regarding the evaluation rank of various hidden assets. For example, when the evaluation rank is represented with the numerical values of 1 to 9, since the center of evaluation rank is the rank of 5, 5 is subtracted from the evaluation rank of various hidden assets.

Next, the information processing means 380 performs the processing of calculating the weighted rank by multiplying the weighting coefficient based on the respective levels of importance regarding the standardized evaluation rank of various hidden assets. This weighting coefficient may also be recorded in the database 20 in advance by the operator by calculating the level of importance for each of the various hidden assets. The information processing means 380 calculates the weighted rank by acquiring the weighting coefficient of various hidden assets from the database 20 and multiplying the weighting coefficient to the standardized evaluation rank of various hidden assets.

Next, the information processing means 380 performs the processing for calculating the weighted rank total for each of the calculated various hidden assets, and dividing such weighted rank total by the total of weight to derive the weighted rank of the integrated hidden assets. The weighted rank of the integrated hidden assets is output to and recorded in a recording means such as the database 20, recording medium 377, recording means 384, memory 381 or the like.

In the example shown in FIG. 44, the integrated rank of hidden assets is calculated as 1.359.

FIG. 45 is a diagram expressing the transition in terms of time regarding the rank of hidden assets of the enterprise to be researched calculated in FIG. 44.

Since the rank of hidden assets shown in FIG. 45 is a value where the integrated hidden assets of a unit period were ranked, it is difficult to directly compare the rank of hidden assets with the research and development expenses to number of registrations (c.f. FIG. 42). Thus, standardization processing is also performed to the rank of hidden assets.

At S114, the information processing means 380 performs the processing for calculating the average value and the standard deviation regarding the value of the market value information (integrated hidden assets) of each period acquired at S112. Then, processing for calculating the difference from the average value regarding the market value information of each period and further dividing such difference by the standard deviation $\sigma$ is performed. In other words, when the market value information (integrated hidden assets) of a certain period is equivalent to the average value, the calculated value will become "0".

Further, when the difference from the average value of the market value information of a certain period is equivalent to the standard deviation $\sigma$, the value will become "1". Further, when the difference from the average value of the market value information of a certain period is equivalent to standard deviation $2\sigma$, the value will become "2".

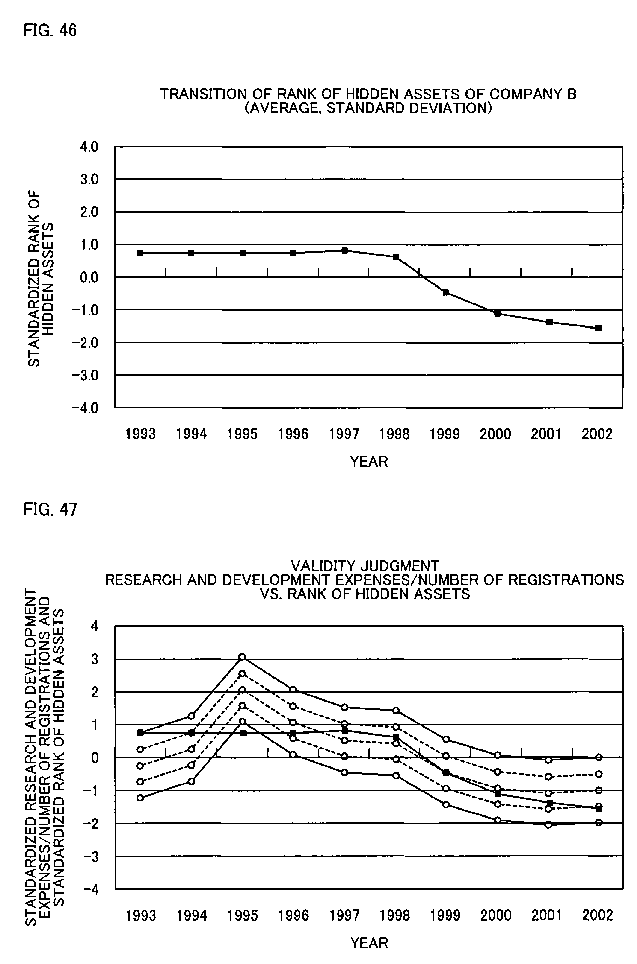

FIG. 46 is a diagram showing the transition of the market value information (rank of hidden assets) after standardization calculated as described above.

By implementing the standardization processing of S114, the vertical axis can be unified as the standard deviation, and it will be possible to conduct a direct comparison with other information.

At S116, the information processing means 380 performs processing which overlaps and displays the linear drawings of the management-finance and patent correlation value and market value information in order to visually compare the two. FIG. 47 is a diagram overlapping the standardized management-finance and patent correlation value and the standardized market value information.

At S118, the information processing means 380 performs processing for quantifying the validly regarding market value information such as hidden assets. At S118, for instance, in the linear drawing shown in FIG. 47, with respect to the portion given prescribed widths of $\pm(1/2)\sigma$ and $\pm\sigma$ to the management-finance and patent correlation value k, processing is performed for making the scores (numerical values showing the validity) when the market value information t (rank of hidden assets) is included in such widths 1 and 0.5, respectively, and making the score (numerical value showing the validity) when it is not included in such width 0. Incidentally, the relationship of the scope and score of the management-finance and patent correlation value k are not limited to the foregoing example.

In the example shown in FIG. 47, the score of validity shown in the diagram of the standardized research and development expenses to number of registrations, and the standardized hidden assets rank is sequentially calculated as 0 points in 1993, 0.5 points in 1994 and 0 points in 1995. And the average score (numerical value showing the validity) in the period to be researched in the foregoing case is calculated as 0.70. What kind of relationship this calculated average score of 0.70 is against the validity of market value information is judged as being "valid" based on FIG. 28.

In the first embodiment described above, an example of judging the validity of the rank of stock price (market value information) in a case of designating the sales volume as the management-finance information, and designating the number of filings as the patent information was explained.

In the second embodiment described above, an example of judging the validity of the hidden assets (market value information) in a case of designating the research and development expenses as the management-finance information and designating the number of registration as the patent information was explained.

The present invention is not limited to the foregoing two embodiments, and the object of the present invention can still be achieved by designating the various types of information shown in FIG. 3 as the management-finance information.

Further, the object of the present can still be achieved by designating the various types of information shown in FIG. 4 as the patent information.

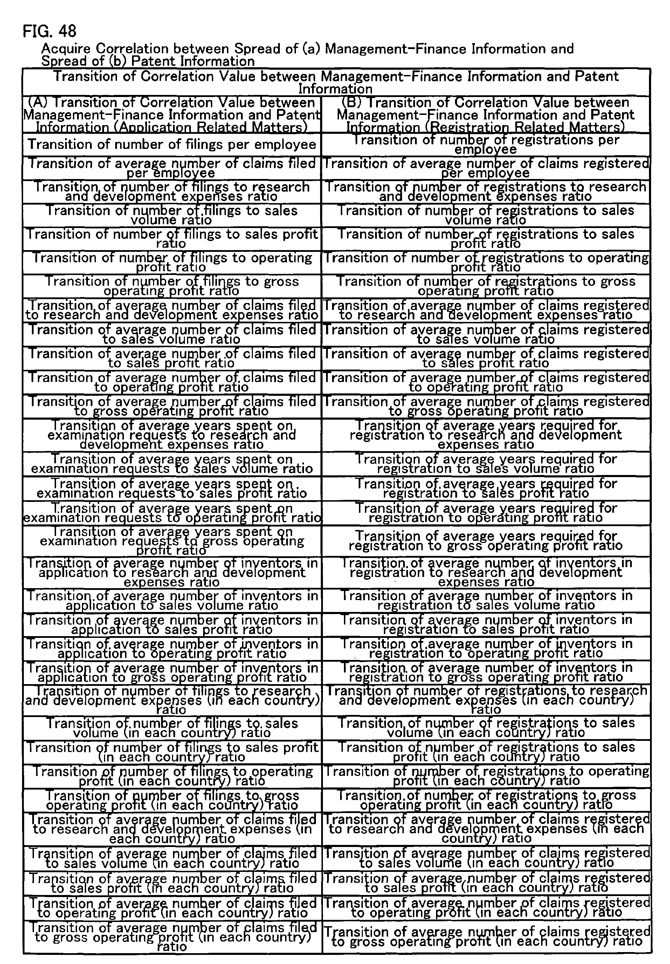

In such a case, the combinations shown in FIG. 48 to FIG. 54 may be considered by combining the various types of management-finance information shown in FIG. 3 and the various types of patent information shown in FIG. 4.

FIG. 48 is a chart showing the combination in a case of designating the transition of the correlation value of the management-finance information (c.f. FIG. 3) showing the size of the company, and the patent information (c.f. FIG. 4) of the application related matters and registration related matters.

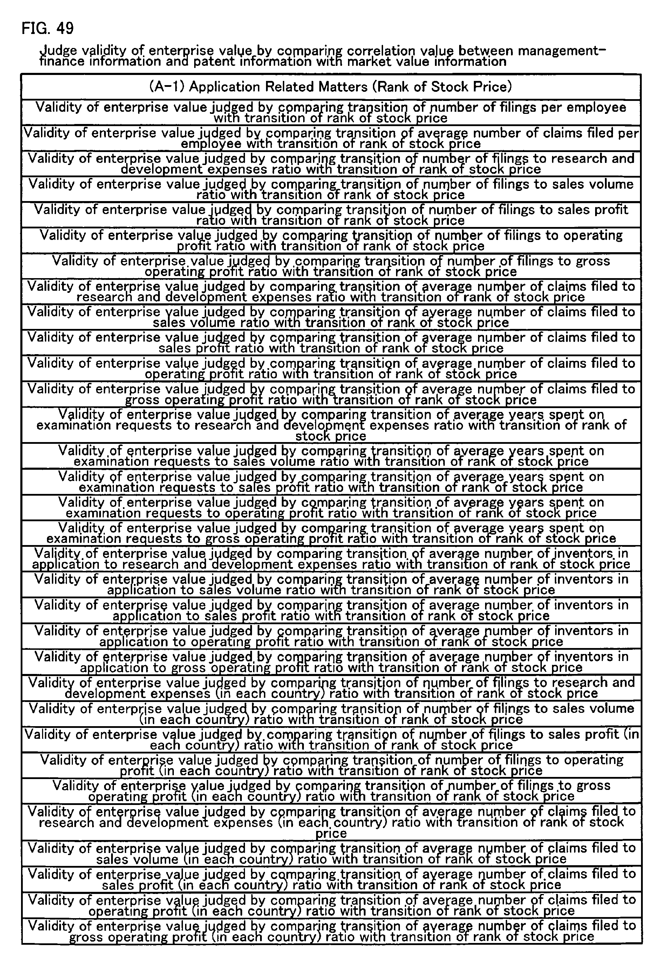

FIG. 49 is a chart showing a combination example in a case of judging the validity of the enterprise value by comparing it with the transition of the rank of stock price based on the transition of the correlation value of a part of the management-finance information shown in FIG. 3 and a part of the patent information of application related matters shown in FIG. 4.

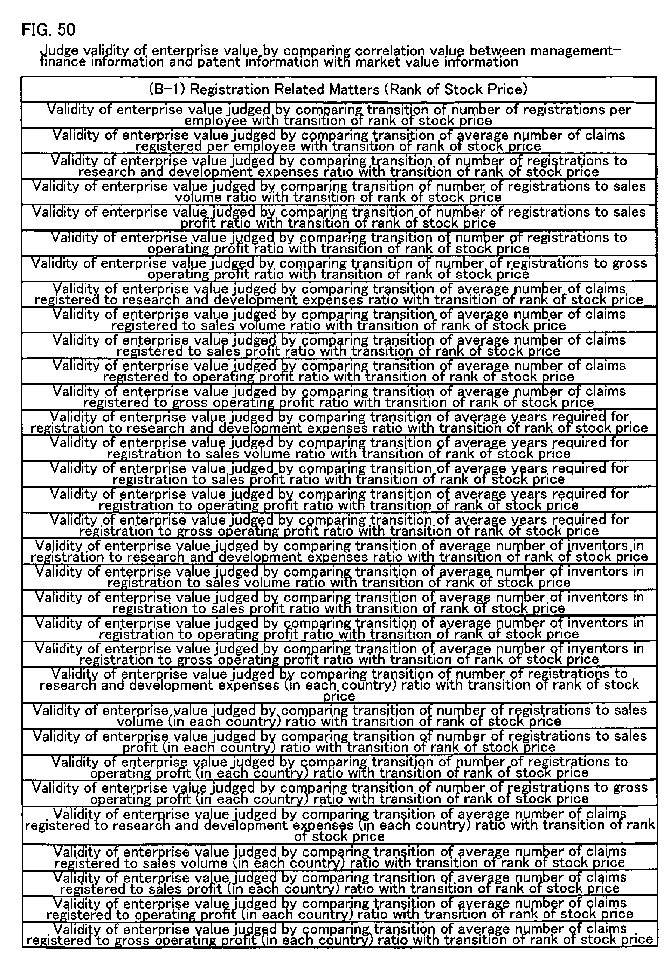

FIG. 50 is a chart showing a combination example in a case of judging the validity of the enterprise value by comparing it with the transition of the rank of stock price based on the transition of the correlation value of a part of the management-finance information shown in FIG. 3 and a part of the patent information of registration related matters shown in FIG. 4.

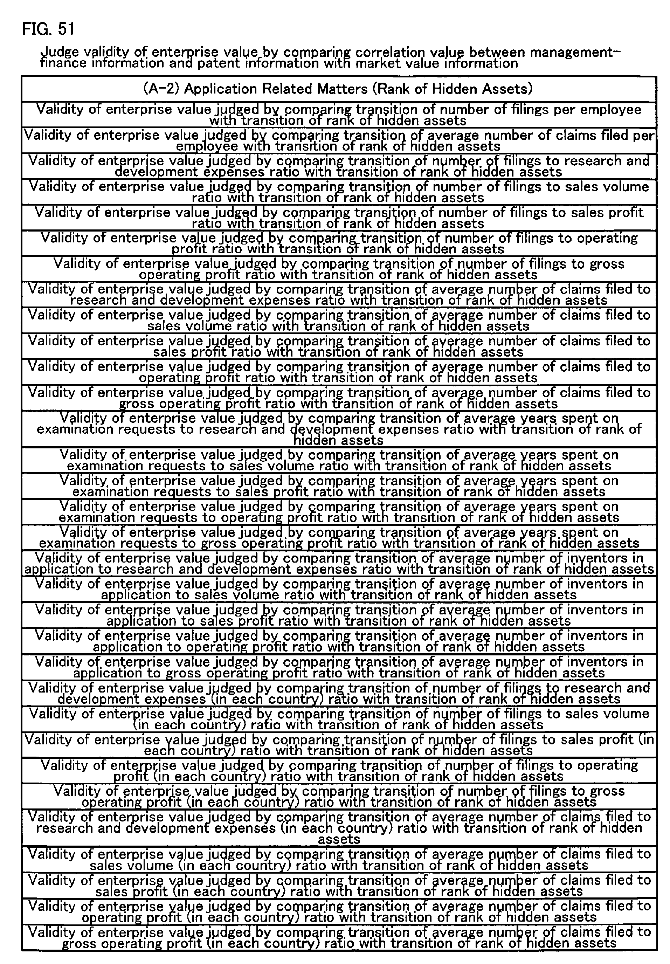

FIG. 51 is a chart showing a combination example in a case of judging the validity of the enterprise value by comparing it with the transition of hidden assets based on the transition of the correlation value of a part of the management-finance information shown in FIG. 3 and a part of the patent information of application related matters shown in FIG. 4.

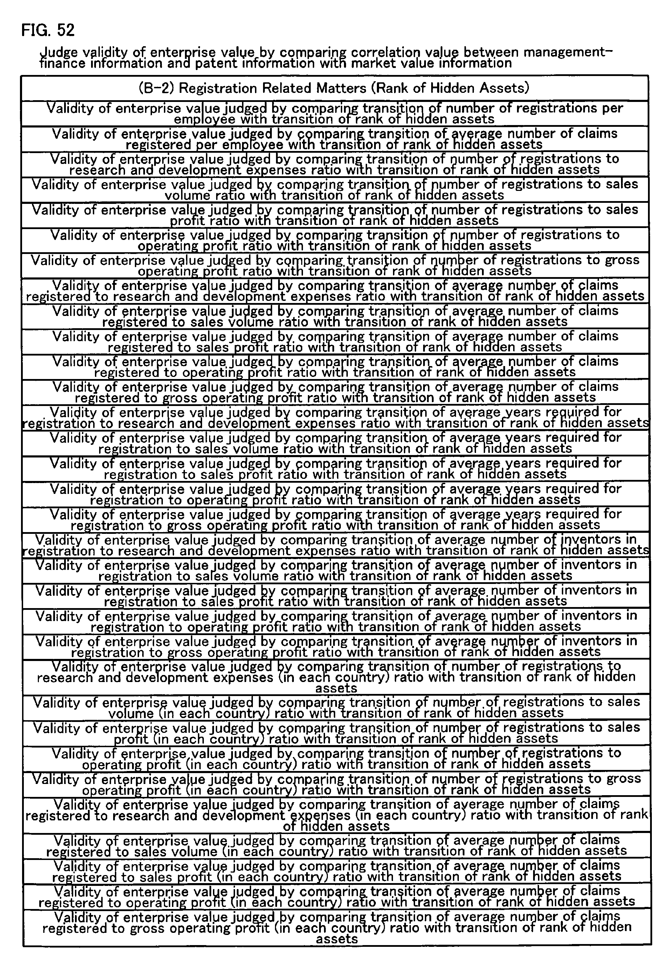

FIG. 52 is a chart showing a combination example in a case of judging the validity of the enterprise value by comparing it with the transition of hidden assets based on the transition of the correlation value of a part of the management-finance information shown in FIG. 3 and a part of the patent information of registration related matters shown in FIG. 4.

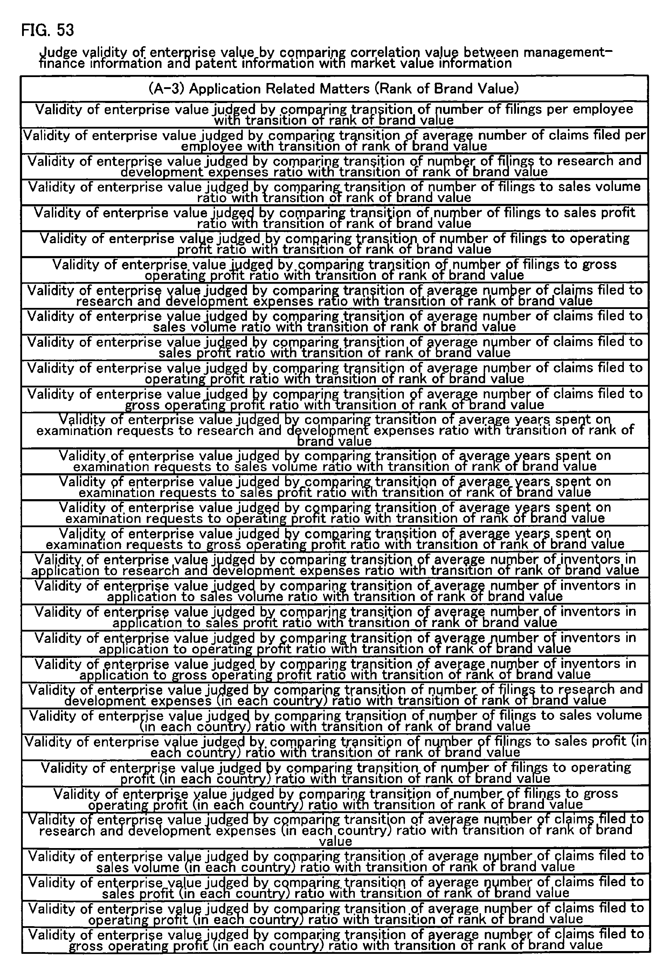

FIG. 53 is a chart showing a combination example in a case of judging the validity of the enterprise value by comparing it with the transition of brand value based on the transition of the correlation value of a part of the management-finance information shown in FIG. 3 and a part of the patent information of application related matters shown in FIG. 4.

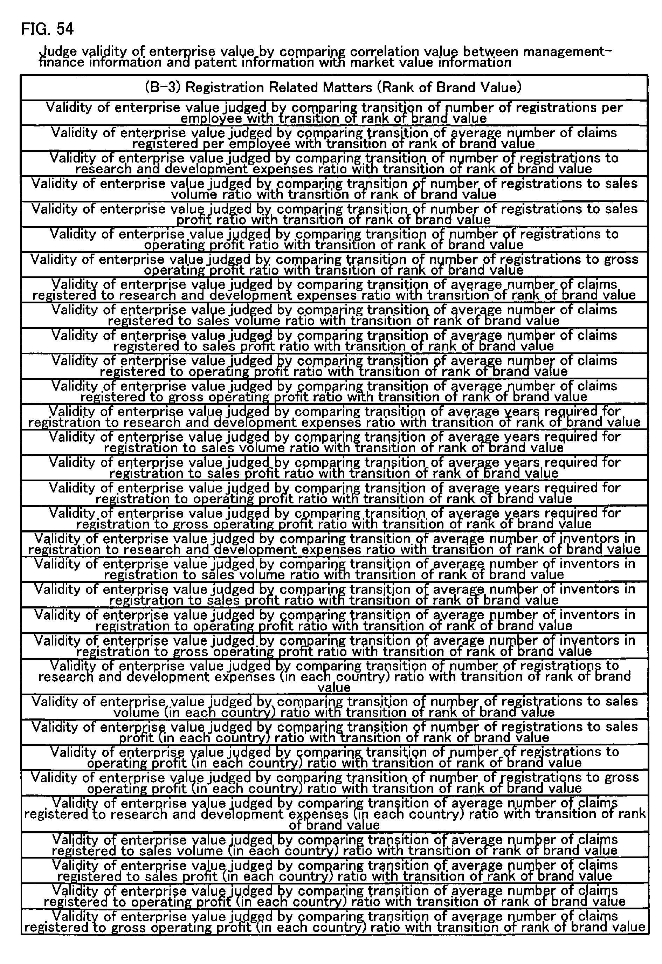

FIG. 54 is a chart showing a combination example in a case of judging the validity of the enterprise value by comparing it with the transition of brand value based on the transition of the correlation value of a part of the management-finance information shown in FIG. 3 and a part of the patent information of registration related matters shown in FIG. 4.

According to the present invention, it will be possible to quantify and judge the validity of the market value information based on a plurality of pieces of management-finance information and a plurality of pieces of patent information.

Incidentally, in the foregoing embodiments, explained was an example of acquiring the management-finance information and patent information for a period to be researched from a database, calculating the management-finance and patent correlation value as the correlation between the acquired management-finance information and patent information and thereafter performing the standardization processing, and calculating the validity of an enterprise value based on the difference between the standardized management-finance and patent correlation value and the standardized market value information. Nevertheless, the present invention is not limited thereto, the object of the present invention can also be achieved by calculating the validity of an enterprise as follows.

As another embodiment, foremost, the management-finance information and market value information for a period to be researched are acquired from the management-finance information database and market value information database. Then, the average value and the standard deviation regarding the management-finance information for a period to be researched are calculated, the average value is subtracted from the management-finance information in each period, and this is thereafter divided by the standard deviation in order to calculate the standardized management-finance information. Next, the average value and the standard deviation are also calculated regarding the market value information for a period to be researched, the average value is subtracted from the market value information in each period, and this is thereafter divided by the standard deviation in order to calculate the standardized market value information. Next, the validity of an enterprise value if calculated based on the difference between the standardized management-finance information and the standardized market value information.

Further, as another embodiment, foremost, the patent information and market value information for a period to be researched are acquired from the patent information database and market value information database. Then, the average value and the standard deviation regarding the patent information for a period to be researched are calculated, the average value is subtracted from the patent information in each period, and this is thereafter divided by the standard deviation in order to calculate the standardized patent information. Next, the average value and the standard deviation regarding the market value information for a period to be researched are calculated, the average value is subtracted from the market value information in each period, and this is thereafter divided by the standard deviation in order to calculate the standardized market value information. Next, the validity of an enterprise value is calculated based on the difference between the standardized patent information and the standardized market value information.

<u>INDUSTRIAL APPLICABILITY</u>

As explained above, according to the present invention, as it comprises management-finance information acquisition means for acquiring management-finance information for a period to be researched from the management-finance information database recording the management-finance information such as information showing the size of the company to be researched or financial information of the company to be researched; patent information acquisition means for acquiring patent information for the period to be researched from the patent information database recording the patent information relating to patents or utility models filed by the company to be researched or registered patents or utility models owned by the company to be researched; market value information acquisition means for acquiring market value information for the period to be researched from the market value information database recording the market value information such as the rank of stock price, the rank of brand value or the rank of hidden assets of the company to be researched; management-finance and patent correlation value calculation means for calculating the management-finance and patent correlation value as the correlation between the acquired management-finance information and the acquired patent information; management-finance and patent correlation value standardization means for calculating the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value based on the difference between the standardized management-finance and patent correlation value and the standardized market value information, it will be possible to automatically calculate the validity of the enterprise value such as the rank of stock price of the company to be researched.

Further, according to the present invention, as the management-finance and patent correlation value calculation means calculates the management-finance and patent correlation value by acquiring the correlation between the acquired management-finance information and the acquired patent information having time lag with the management-finance information, a highly reliable management-finance and patent correlation value can be calculated even there is time lag between the period when the invention was completed and the period when the sales volume of the enterprise or evaluation of the enterprise will improve. Moreover, it will be possible to calculate the validity of a highly reliable enterprise value and judge the validity thereof.

Further, according to the present invention, as the validity calculation means provides a prescribed width to the curve of the standardized management-finance and patent correlation value and calculates the validity of the enterprise value based on the length of the curve of the market value information existing in the prescribed width, it will be possible to calculate the validity of a highly reliable enterprise value and judge the validity thereof.

Further, according to the present invention, as the validity calculation means provides a prescribed width to each of the curves of the standardized management-finance and patent correlation value and the standardized market value information, calculates the area of the region surrounded by both curves having the widths, and calculates the validity of the enterprise value based on the calculated area, it will be possible to calculate the validity of an even more highly reliable enterprise value and judge the validity thereof.

Further, according to the present invention, as it comprises validity threshold acquisition means for acquiring the threshold and judgment results from validity threshold recording means which associates and records the threshold for judging the validity of the enterprise value and the judgment results based on such threshold; validity selection means for selecting the judgment result of the validity from the results upon comparing the calculated validity of the enterprise value and the threshold; and output means for outputting the selected judgment result to display means, to recording means, or to other communication equipment via communication means, the user will be able to learn the validity of an enterprise value.

Further, according to the present invention, as the rank of hidden assets includes the rank of financial assets, rank of asset-impairment accounting, rank of market value claims, rank of human capital, rank of organizational capital or rank of related capital, the validity can be calculated regarding numerous types of market value information.

Further, according to the present invention, as the rank of human capital includes the rank of evaluation of number of employees, rank of ability of human resources, rank of motivation of human resources, rank of leadership of top management or rank of reliability, the validity can be calculated regarding numerous types of market value information.

Further, according to the present invention, as the management-finance information includes information showing the size of the company such as the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis), the validity of an enterprise value can be calculated based on various types of management-finance information.

Further, according to the present invention, as the management-finance information includes financial information of the company such as the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, research and development expenses, research and development expenses to sales volume ratio, research and development expenses to gross operating profit ratio, gross operating profit ratio or gross operating profit, the validity of an enterprise value can be calculated based on various types of management-finance information.

Further, according to the present invention, as the patent information includes information regarding application related matters such as the number of filings, number of filings based on IPC, number of filings based on keywords, number of claims filed, years spent on examination requests, number of inventors, number of applicants, number of joint applications, number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn applications, number of abandoned applications, number of filings in each country, number of inventors in applications in each country, number of applicants in applications in each country, number of priority-claiming applications in each country, number of priority bases claimed in applications in each country or number of divisional applications in each country, the validity of an enterprise value can be calculated based on various types of patent information.

Further, according to the present invention, as the patent information includes information regarding registration related matters such as the number of registrations, number of registrations based on IPC, number of registrations based on keywords, number of registered claims, years required for registration, registration rate, years spent on examination, number of applications in which preferential examination is conducted, number of rejections issued, number of amendments filed, number of amendments filed for formalities, number of written oppositions filed, number of appeals and trials, number of registrations for creating patent right, number of registrations for extending term of patent right, number of transferred patents, years of payment of patent fees, number of registrations in each country, years required for registration in each country, years spent on examination in each country, number of rejections issued in each country, number of amendments filed in each country, number of amendments filed for formalities in each country or number of written oppositions filed in each country, the validity of an enterprise value can be calculated based on various types of patent information.

Further, according to the present invention, as it comprises management-finance information acquisition means for acquiring management-finance information for a period to be researched from the management-finance information database recording the management-finance information such as information showing the size of the company to be researched or financial information of the company to be researched; market value information acquisition means for acquiring market value information for the period to be researched from the market value information database recording the market value information such as the rank of stock price, the rank of brand value or the rank of hidden assets of the company to be researched; management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value based on the difference between the standardized management-finance information and the standardized market value information, it will be possible to automatically calculate the validity of the enterprise value such as the rank of stock price of the company to be researched based on the management-finance information, and judge the validity thereby.

Further, according to the present invention, as it comprises patent information acquisition means for acquiring patent information for the period to be researched from the patent information database recording the patent information relating to patents or utility models filed by the company to be researched or registered patents or utility models owned by the company to be researched; market value information acquisition means for acquiring market value information for the period to be researched from the market value information database recording the market value information such as the rank of stock price, the rank of brand value or the rank of hidden assets of the company to be researched; patent information standardization means for calculating the standardized patent information by calculating the average value and the standard deviation regarding the patent information for the period to be researched, subtracting the average value from the patent information for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value based on the difference between the standardized patent information and the standardized market value information, it will be possible to automatically calculate the validity of the enterprise value such as the rank of stock price of the company to be researched based on the patent information, and judge the validity thereby.

**Claims**

1. An enterprise value evaluation device for calculating the validity of an enterprise value such as rank of stock price of a company to be researched, comprising:

   management-finance information acquisition means for acquiring management-finance information for a period to be researched from a management-finance information database recording the management-finance information such as information showing the size of the company to be researched or financial information of the company to be researched;

   patent information acquisition means for acquiring patent information for the period to be researched from a patent information database recording the patent information relating to patents or utility models filed by the company to be researched or registered patents or utility models owned by the company to be researched;

   market value information acquisition means for acquiring market value information for the period to be researched from a market value information database recording the market value information such as the rank of stock price, rank of brand value or rank of hidden assets of the company to be researched;

   management-finance and patent correlation value calculation means for calculating the management-finance and patent correlation value as the correlation between the acquired management-finance information and the acquired patent information;

   management-finance and patent correlation value standardization means for calculating the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

   market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

   validity calculation means for calculating the validity of the enterprise value based on the difference between said standardized management-finance and patent correlation value and said standardized market value information.

2. An enterprise value evaluation device for calculating the validity of an enterprise value such as rank of stock price of a company to be researched, comprising:

management-finance information acquisition means for acquiring management-finance information for a period to be researched from a management-finance information database recording the management-finance information such as information showing the size of the company to be researched or financial information of the company to be researched;

patent information acquisition means for acquiring patent information for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

management-finance and patent correlation value calculation means for calculating the management-finance and patent correlation value by acquiring the correlation between the acquired management-finance information and the acquired patent information having time lag with the management-finance information;

management-finance and patent correlation value standardization means for calculating the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value based on the difference between said standardized management-finance and patent correlation value and said standardized market value information.

3. An enterprise value evaluation device for calculating the validity of an enterprise value such as rank of stock price of a company to be researched, comprising:

management-finance information acquisition means for acquiring management-finance information for a period to be researched from a management-finance information database recording the management-finance information such as information showing the size of the company to be researched or financial information of the company to be researched;

patent information acquisition means for acquiring patent information for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

management-finance and patent correlation value calculation means for calculating the management-finance and patent correlation value as the correlation between the acquired management-finance information and the acquired patent information;

management-finance and patent correlation value standardization means for calculating the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to a curve of said standardized management-finance and patent correlation value and then calculating the validity of the enterprise value based on the length of a curve of the market value information existing in said prescribed width.

4. An enterprise value evaluation device for calculating the validity of an enterprise value such as rank of stock price of a company to be researched, comprising:

management-finance information acquisition means for acquiring management-finance information for a period to be researched from a management-finance information database recording the management-finance information such as information showing the size of the company to be researched or financial information of the company to be researched;

patent information acquisition means for acquiring patent information for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

management-finance and patent correlation value calculation means for calculating the management-finance and patent correlation value by acquiring the correlation between the acquired management-finance information and the acquired patent information having time lag with the management-finance information;

management-finance and patent correlation value standardization means for calculating the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to a curve of said standardized management-finance and patent correlation value and then calculating the validity of the enterprise value based on the length of a curve of the market value information existing in said prescribed width.

5. An enterprise value evaluation device for calculating the validity of an enterprise value such as rank of stock price of a company to be researched, comprising:

management-finance information acquisition means for acquiring management-finance information for a period to be researched from a management-finance information database recording the management-finance information such as information showing the size of the company to be researched or financial information of the company to be researched;

patent information acquisition means for acquiring patent information for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

management-finance and patent correlation value calculation means for calculating the management-finance and patent correlation value as the correlation between the acquired management-finance information and the acquired patent information;

management-finance and patent correlation value standardization means for calculating the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to each of the curves of said standardized management-finance and patent correlation value and said standardized market value information, then calculating the area of the region surrounded by both curves having the widths, and then calculating the validity of the enterprise value based on the calculated area.

6. An enterprise value evaluation device for calculating the validity of an enterprise value such as rank of stock price of a company to be researched, comprising:

management-finance information acquisition means for acquiring management-finance information for a period to be researched from a management-finance information database recording the management-finance information such as information showing the size of the company to be researched or financial information of the company to be researched;

patent information acquisition means for acquiring patent information for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

management-finance and patent correlation value calculation means for calculating the management-finance and patent correlation value by acquiring the correlation between the acquired management-finance information and the acquired patent information having time lag with the management-finance information;

management-finance and patent correlation value standardization means for calculating the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to each of the curves of said standardized management-finance and patent correlation value and said standardized market value information, then calculating the area of the region surrounded by both curves having the widths, and then calculating the validity of the enterprise value based on the calculated area.

7. The enterprise value evaluation device according to any one of claims 1 to 6, wherein said rank of hidden assets includes rank of financial assets, rank of asset-impairment accounting, rank of market value claims, rank of human capital, rank of organizational capital or rank of related capital.

8. The enterprise value evaluation device according to any one of claims 1 to 6, wherein said rank of human capital includes rank of evaluation of number of employees, rank of ability of human resources, rank of motivation of human resources, rank of leadership of top management or rank of reliability.

9. The enterprise value evaluation device according to any one of claims 1 to 6, wherein said management-finance information includes information showing the size of the company such as the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis).

10. The enterprise value evaluation device according to any one of claims 1 to 6, wherein said management-finance information includes financial information of the company such as the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, research and development expenses, research and development expenses to sales volume ratio, research and development expenses to gross operating profit ratio, gross operating profit ratio or gross operating profit.

11. The enterprise value evaluation device according to any one of claims 1 to 6, wherein said patent information includes information regarding application related matters such as the number of filings, number of filings based on IPC, number of filings based on keywords, number of claims filed, years spent on examination requests, number of inventors, number of applicants, number of joint applications, number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn applications, number of abandoned applications, number of filings in each country, number of inventors in applications in each country, number of applicants in applications in each country, number of priority-claiming applications in each country, number of priority bases claimed in applications in each country or number of divisional applications in each country.

12. The enterprise value evaluation device according to any one of claims 1 to 6, wherein said patent information includes information regarding registration related matters such as the number of registrations, number of registrations based on IPC, number of registrations based on keywords, number of registered claims, years required for registration, registration rate, years spent on examination, number of applications in which preferential examination is conducted, number of rejections issued, number of amendments filed, number of amendments filed for formalities, number of written oppositions filed, number of appeals and trials, number of registrations for creating patent right, number of registrations for extending term of patent right, number of transferred patents, years of payment of patent fees, number of registrations in each country, years required for registration in each country, years spent on examination in each country, number of rejections issued in each country, number of amendments filed in each country, number of amendments filed for formalities in each country or number of written oppositions filed in each country.

13. An enterprise value evaluation device for calculating the validity of an enterprise value such as rank of stock price of a company to be researched, comprising:

management-finance information acquisition means for acquiring management-finance information for a period to be researched from a management-finance information database recording the management-finance information such as information showing the size of the company to be researched or financial information of the company to be researched;

market value information acquisition means for acquiring market value information for the period to be researched from a market value information database recording the market value information such as the rank of stock price, rank of brand value or rank of hidden assets of the company to be researched;

management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value based on the difference between said standardized management-finance information and said standardized market value information.

14. An enterprise value evaluation device for calculating the validity of an enterprise value such as rank of stock price of a company to be researched, comprising:

management-finance information acquisition means for acquiring management-finance information including information showing the size of the company such as the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis) of the company to be researched for a period to be researched from a management-finance information database recording the management-finance information such as information showing the size of the company to be researched or financial information of the company to be researched;

market value information acquisition means for acquiring market value information for the period to be researched from a market value information database recording the market value information such as the rank of stock price, rank of brand value or rank of hidden assets of the company to be researched;

management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value based on the difference between said standardized management-finance information and said standardized market value information.

15. An enterprise value evaluation device for calculating the validity of an enterprise value such as rank of stock price of a company to be researched, comprising:

management-finance information acquisition means for acquiring management-finance information including financial information of the company such as the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, research and development expenses, research and development expenses to sales volume ratio, research and development expenses to gross operating profit ratio, gross operating profit ratio or gross operating profit for a period to be researched from a management-finance information database recording the management-finance information such as information showing the size of the company to be researched or financial information of the company to be researched; market value information acquisition means for acquiring market value information for the period to be researched from a market value information database recording the market value information such as the rank of stock price, rank of brand value or rank of hidden assets of the company to be researched; management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value based on the difference between said standardized management-finance information and said standardized market value information.

16. An enterprise value evaluation device for calculating the validity of an enterprise value such as rank of stock price of a company to be researched, comprising:

management-finance information acquisition means for acquiring management-finance information for a period to be researched from a management-finance information database recording the management-finance information such as information showing the size of the company to be researched or financial information of the company to be researched; market value information acquisition means for acquiring market value information for the period to be researched from a market value information database recording the market value information such as the rank of stock price, rank of brand value or rank of hidden assets of the company to be researched; management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation; market value information standardization means for calculating the standardized market value information by calculating the average value and the standard deviation regarding the market value information for the period to be researched, subtracting the average value from the market value information for each period and thereafter dividing the outcome of this subtraction by the standard deviation; and validity calculation means for calculating the validity of the enterprise value by providing a prescribed width to a curve of said standardized management-finance information and then calculating the validity of the enterprise value based on the length of a curve of the market value information existing in said prescribed width.

**17.** An enterprise value evaluation device for calculating the validity of an enterprise value such as rank of stock price of a company to be researched, comprising:

management-finance information acquisition means for acquiring management-finance information including information showing the size of the company such as the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis) of the company to be researched for a period to be researched from a management-finance information database recording the management-finance information such as information showing the size of the company to be researched or financial information of the company to be researched;
market value information acquisition means for acquiring market value information for the period to be researched from a market value information database recording the market value information such as the rank of stock price, rank of brand value or rank of hidden assets of the company to be researched;
management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation;
market value information standardization means for calculating the standardized market value information by calculating the average value and the standard deviation regarding the market value information for the period to be researched, subtracting the average value from the market value information for each period and thereafter dividing the outcome of this subtraction by the standard deviation; and
validity calculation means for calculating the validity of the enterprise value by providing a prescribed width to a curve of said standardized management-finance information and then calculating the validity of the enterprise value based on the length of a curve of the market value information existing in said prescribed width.

**18.** An enterprise value evaluation device for calculating the validity of an enterprise value such as rank of stock price of a company to be researched, comprising:

management-finance information acquisition means for acquiring management-finance information including financial information of the company such as the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, research and development expenses, research and development expenses to sales volume ratio, research and development expenses to gross operating profit ratio, gross operating profit ratio or gross operating profit for a period to be researched from a management-finance information database recording the management-finance information such as information showing the size of the company to be researched or financial information of the company to be researched;
market value information acquisition means for acquiring market value information for the period to be researched from a market value information database recording the market value information such as the rank of stock price, rank of brand value or rank of hidden assets of the company to be researched;
management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation;
market value information standardization means for calculating the standardized market value information by calculating the average value and the standard deviation regarding the market value information for the period to be researched, subtracting the average value from the market value information for each period and thereafter dividing the outcome of this subtraction by the standard deviation; and
validity calculation means for calculating the validity of the enterprise value by providing a prescribed width to a curve of said standardized management-finance information and then calculating the validity of the enterprise value based on the length of a curve of the market value information existing in said prescribed width.

**19.** An enterprise value evaluation device for calculating the validity of an enterprise value such as rank of stock price of a company to be researched, comprising:

management-finance information acquisition means for acquiring management-finance information for a period to be researched from a management-finance information database recording the management-finance information such as information showing the size of the company to be researched or financial information of the company to be researched;

market value information acquisition means for acquiring market value information for the period to be researched from a market value information database recording the market value information such as the rank of stock price, rank of brand value or rank of hidden assets of the company to be researched;

management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to each of the curves of said standardized management-finance information and said standardized market value information, then calculating the area of the region surrounded by both curves having the widths, and then calculating the validity of the enterprise value based on the calculated area.

20. An enterprise value evaluation device for calculating the validity of an enterprise value such as rank of stock price of a company to be researched, comprising:

management-finance information acquisition means for acquiring management-finance information including information showing the size of the company such as the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis) of the company to be researched for a period to be researched from a management-finance information database recording the management-finance information such as information showing the size of the company to be researched or financial information of the company to be researched;

market value information acquisition means for acquiring market value information for the period to be researched from a market value information database recording the market value information such as the rank of stock price, rank of brand value or rank of hidden assets of the company to be researched;

management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to each of the curves of said standardized management-finance information and said standardized market value information, then calculating the area of the region surrounded by both curves having the widths, and then calculating the validity of the enterprise value based on the calculated area.

21. An enterprise value evaluation device for calculating the validity of an enterprise value such as rank of stock price of a company to be researched, comprising:

management-finance information acquisition means for acquiring management-finance information including financial information of the company such as the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, research and development expenses, research and development expenses to sales volume ratio, research and development expenses to gross operating profit ratio, gross operating profit ratio or gross operating profit for a period to be researched from a management-finance information database recording the management-finance information such as information showing the size of the company to be researched or financial information of the company to be researched;

market value information acquisition means for acquiring market value information for the period to be researched from a market value information database recording the market value information such as the rank of stock price, rank of brand value or rank of hidden assets of the company to be researched;

management-finance information standardization means for calculating the standardized management-finance information by calculating the average value and the standard deviation regarding the management-finance information for the period to be researched, subtracting the average value from the management-finance information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to each of the curves of said standardized management-finance information and said standardized market value information, then calculating the area of the region surrounded by both curves having the widths, and then calculating the validity of the enterprise value based on the calculated area.

22. An enterprise value evaluation device for calculating the validity of an enterprise value such as rank of stock price of a company to be researched, comprising:

patent information acquisition means for acquiring patent information for the period to be researched from a patent information database recording the patent information relating to patents or utility models filed by the company to be . researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

patent information standardization means for calculating the standardized patent information by calculating the average value and the standard deviation regarding the patent information for the period to be researched, subtracting the average value from the patent information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value based on the difference between said standardized patent information and said standardized market value information.

23. An enterprise value evaluation device for calculating the validity of an enterprise value such as rank of stock price of a company to be researched, comprising:

patent information acquisition means for acquiring patent information regarding application related matters such as the number of filings, number of filings based on IPC, number of filings based on keywords, number of claims filed, years spent on examination requests, number of inventors, number of applicants, number of joint applications, number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn applications, number of abandoned applications, number of filings in each country, number of inventors in applications in each country, number of applicants in applications in each country, number of priority-claiming applications in each country, number of priority bases claimed in applications in each country or number of divisional applications in each country for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

patent information standardization means for calculating the standardized patent information by calculating the average value and the standard deviation regarding the patent information for the period to be researched, subtracting the average value from the patent information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value based on the difference between said standardized patent information and said standardized market value information.

24. An enterprise value evaluation device for calculating the validity of an enterprise value such as rank of stock price of a company to be researched, comprising:

patent information acquisition means for acquiring patent information regarding registration related matters such as the number of registrations, number of registrations based on IPC, number of registrations based on keywords, number of registered claims, years required for registration, registration rate, years spent on examination, number of applications in which preferential examination is conducted, number of rejections issued, number of amendments filed, number of amendments filed for formalities, number of written oppositions filed, number of appeals and trials, number of registrations for creating patent right, number of registrations for extending term of patent right, number of transferred patents, years of payment of patent fees, number of registrations in each country, years required for registration in each country, years spent on examination in each country, number of rejections issued in each country, number of amendments filed in each country, number of amendments filed for formalities in each country or number of written oppositions filed in each country for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

patent information standardization means for calculating the standardized patent information by calculating the average value and the standard deviation regarding the patent information for the period to be researched, subtracting the average value from the patent information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value based on the difference between said standardized patent information and said standardized market value information.

25. An enterprise value evaluation device for calculating the validity of an enterprise value such as rank of stock price of a company to be researched, comprising:

patent information acquisition means for acquiring patent information for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

patent information standardization means for calculating the standardized patent information by calculating the average value and the standard deviation regarding the patent information for the period to be researched, subtracting the average value from the patent information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to a curve of said standardized patent information and then calculating the validity of the enterprise value based on the length of a curve of the market value information existing in said prescribed width.

26. An enterprise value evaluation device for calculating the validity of an enterprise value such as rank of stock price of a company to be researched, comprising:

patent information acquisition means for acquiring patent information regarding application related matters such as the number of filings, number of filings based on IPC, number of filings based on keywords, number of claims filed, years spent on examination requests, number of inventors, number of applicants, number of joint applications, number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn applications, number of abandoned applications, number of filings in each country, number of inventors in applications in each country, number of applicants in applications in each country, number of priority-claiming applications in each country, number of priority bases claimed in applications in each country or number of divisional applications in each country for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

patent information standardization means for calculating the standardized patent information by calculating the average value and the standard deviation regarding the patent information for the period to be researched, subtracting the average value from the patent information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to a curve of said standardized patent information and then calculating the validity of the enterprise value based on the length of a curve of the market value information existing in said prescribed width.

27. An enterprise value evaluation device for calculating the validity of an enterprise value such as rank of stock price of a company to be researched, comprising:

patent information acquisition means for acquiring patent information regarding registration related matters such as the number of registrations, number of registrations based on IPC, number of registrations based on keywords, number of registered claims, years required for registration, registration rate, years spent on examination, number of applications in which preferential examination is conducted, number of rejections issued, number of amendments filed, number of amendments filed for formalities, number of written oppositions filed, number of appeals and trials, number of registrations for creating patent right, number of registrations for extending term of patent right, number of transferred patents, years of payment of patent fees, number of registrations in each country, years required for registration in each country, years spent on examination in each country, number of rejections issued in each country, number of amendments filed in each country, number of amendments filed for formalities in each country or number of written oppositions filed in each country for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

patent information standardization means for calculating the standardized patent information by calculating the average value and the standard deviation regarding the patent information for the period to be researched, subtracting the average value from the patent information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to a curve of said standardized patent information and then calculating the validity of the enterprise value based on the length of a curve of the market value information existing in said prescribed width.

**28.** An enterprise value evaluation device for calculating the validity of an enterprise value such as rank of stock price of a company to be researched, comprising:

patent information acquisition means for acquiring patent information for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

patent information standardization means for calculating the standardized patent information by calculating the average value and the standard deviation regarding the patent information for the period to be researched, subtracting the average value from the patent information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to each of the curves of said standardized patent information and said standardized market value information, then calculating the area of the region surrounded by both curves having the widths, and then calculating the validity of the enterprise value based on the calculated area.

**29.** An enterprise value evaluation device for calculating the validity of an enterprise value such as rank of stock price of a company to be researched, comprising:

patent information acquisition means for acquiring patent information regarding application related matters such as the number of filings, number of filings based on IPC, number of filings based on keywords, number of claims filed, years spent on examination requests, number of inventors, number of applicants, number of joint applications, number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn applications, number of abandoned applications, number of filings in each country, number of inventors in applications in each country, number of applicants in applications in each country, number of priority-claiming applications in each country, number of priority bases claimed in applications in each country or number of divisional applications in each country for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

patent information standardization means for calculating the standardized patent information by calculating the average value and the standard deviation regarding the patent information for the period to be researched, subtracting the average value from the patent information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to each of the curves of said standardized patent information and said standardized market value information, then calculating the area of the region surrounded by both curves having the widths, and then calculating the validity of the enterprise value based on the calculated area.

30. An enterprise value evaluation device for calculating the validity of an enterprise value such as rank of stock price of a company to be researched, comprising:

patent information acquisition means for acquiring patent information regarding registration related matters such as the number of registrations, number of registrations based on IPC, number of registrations based on keywords, number of registered claims, years required for registration, registration rate, years spent on examination, number of applications in which preferential examination is conducted, number of rejections issued, number of amendments filed, number of amendments filed for formalities, number of written oppositions filed, number of appeals and trials, number of registrations for creating patent right, number of registrations for extending term of patent right, number of transferred patents, years of payment of patent fees, number of registrations in each country, years required for registration in each country, years spent on examination in each country, number of rejections issued in each country, number of amendments filed in each country, number of amendments filed for formalities in each country or number of written oppositions filed in each country for the period to be researched from a patent information database recording the patent information relating to patents or utility models filed by the company to be researched or registered patents or utility models owned by the company to be researched;

market value information acquisition means for acquiring market value information for the period to be researched from a market value information database recording the market value information such as the rank of stock price, rank of brand value or rank of hidden assets of the company to be researched;

patent information standardization means for calculating the standardized patent information by calculating the average value and the standard deviation regarding the patent information for the period to be researched, subtracting the average value from the patent information for each period and thereafter dividing the outcome of this subtraction by the standard deviation;

market value information standardization means for calculating the standardized market value information by calculating the average value and the standard deviation regarding the market value information for the period to be researched, subtracting the average value from the market value information for each period and thereafter dividing the outcome of this subtraction by the standard deviation; and

validity calculation means for calculating the validity of the enterprise value by providing a prescribed width to each of the curves of said standardized patent information and said standardized market value information, then calculating the area of the region surrounded by both curves having the widths, and then calculating the validity of the enterprise value based on the calculated area.

31. The enterprise value evaluation device according to any one of claims 13 to 30, wherein said rank of hidden assets includes rank of financial assets, rank of asset-impairment accounting, rank of market value claims, rank of human capital, rank of organizational capital or rank of related capital.

32. The enterprise value evaluation device according to claim 31, wherein said rank of human capital includes rank of evaluation of number of employees, rank of ability of human resources, rank of motivation of human resources, rank of leadership of top management or rank of reliability.

33. An enterprise value evaluation program to be executed with an enterprise value evaluation device comprising: management-finance information acquisition means for acquiring management-finance information; patent information acquisition means for acquiring patent information; market value information acquisition means for acquiring market value information; management-finance and patent correlation value calculation means for calculating a management-finance and patent correlation value as the correlation between the management-finance information and the patent information; management-finance and patent correlation value standardization means for calculating a standardized management-finance and patent correlation value; market value information standardization means for calculating the standardized market value information; validity calculation means for calculating the validity of an enterprise value; and information processing means capable of controlling said management-finance information acquisition means, patent information acquisition means, market value information acquisition means, management-finance and patent correlation value calculation means, management-finance and patent correlation value standardization means, market value information standardization means and validity calculation means, wherein said information processing means realizes:

a function for making said management-finance information acquisition means acquire management-finance information for a period to be researched from a management-finance information database recording the management-finance information such as information showing the size of a company to be researched or financial information of the company to be researched;

a function for making said patent information acquisition means acquire patent information for the period to be researched from a patent information database recording the patent information relating to patents or utility models filed by the company to be researched or registered patents or utility models owned by the company to be researched;

a function for making said market value information acquisition means acquire market value information for the period to be researched from a market value information database recording the market value information such as rank of stock price, rank of brand value or rank of hidden assets of the company to be researched;

a function for making said management-finance and patent correlation value calculation means calculate the management-finance and patent correlation value as the correlation between the acquired management-finance information and the acquired patent information;

a function for making said management-finance and patent correlation value standardization means calculate the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

a function for making said market value information standardization means calculate the standardized market value information by calculating the average value and the standard deviation regarding the market value information for the period to be researched, subtracting the average value from the market value information for each period and thereafter dividing the outcome of this subtraction by the standard deviation; and

a function for making said validity calculation means calculate the validity of the enterprise value based on the difference between said standardized management-finance and patent correlation value and said standardized market value information.

34. An enterprise value evaluation program to be executed with an enterprise value evaluation device comprising: management-finance information acquisition means for acquiring management-finance information; patent information acquisition means for acquiring patent information; market value information acquisition means for acquiring market value information; management-finance and patent correlation value calculation means for calculating a management-finance and patent correlation value; management-finance and patent correlation value standardization means for calculating a standardized management-finance and patent correlation value; market value information standardization means for calculating the standardized market value information; validity calculation means for calculating the validity of an enterprise value; and information processing means capable of controlling said management-finance information acquisition means, said patent information acquisition means, said market value information acquisition means, said management-finance and patent correlation value calculation means, said management-finance and patent correlation value standardization means, said market value information standardization means and said validity calculation means,

wherein said information processing means realizes:

a function for making said management-finance information acquisition means acquire management-finance information for a period to be researched from a management-finance information database recording the management-finance information such as information showing the size of a company to be researched or financial information of the company to be researched;

a function for making said patent information acquisition means acquire patent information for the period to be researched from a patent information database recording the patent information relating to patents or utility models filed by the company to be researched or registered patents or utility models owned by the company to be researched;

a function for making said market value information acquisition means acquire market value information for the period to be researched from a market value information database recording the market value information such as rank of stock price, rank of brand value or rank of hidden assets of the company to be researched;

a function for making said management-finance and patent correlation value calculation means calculate the management-finance and patent correlation value as the correlation between the acquired management-finance information and the acquired patent information;

a function for making said management-finance and patent correlation value standardization means calculate the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

a function for making said market value information standardization means calculate the standardized market value information by calculating the average value and the standard deviation regarding the market value information for the period to be researched, subtracting the average value from the market value information for each period and thereafter dividing the outcome of this subtraction by the standard deviation; and

a function for making said validity calculation means provide a prescribed width to a curve of said standardized management-finance and patent correlation value and then calculate the validity of the enterprise value based on the length of a curve of the market value information existing in said prescribed width.

**35.** An enterprise value evaluation program to be executed with an enterprise value evaluation device comprising: management-finance information acquisition means for acquiring management-finance information; patent information acquisition means for acquiring patent information; market value information acquisition means for acquiring market value information; management-finance and patent correlation value calculation means for calculating a management-finance and patent correlation value; management-finance and patent correlation value standardization means for calculating a standardized management-finance and patent correlation value; market value information standardization means for calculating the standardized market value information; validity calculation means for calculating the validity of an enterprise value; and information processing means capable of controlling said management-finance information acquisition means, said patent information acquisition means, said market value information acquisition means, said management-finance and patent correlation value calculation means, said management-finance and patent correlation value standardization means, said market value information standardization means and said validity calculation means,
wherein said information processing means realizes:

a function for making said management-finance information acquisition means acquire management-finance information for a period to be researched from a management-finance information database recording the management-finance information such as information showing the size of a company to be researched or financial information of the company to be researched;

a function for making said patent information acquisition means acquire patent information for the period to be researched from a patent information database recording the patent information relating to patents or utility models filed by the company to be researched or registered patents or utility models owned by the company to be researched;

a function for making said market value information acquisition means acquire market value information for the period to be researched from a market value information database recording the market value information such as rank of stock price, rank of brand value or rank of hidden assets of the company to be researched;

a function for making said management-finance and patent correlation value calculation means calculate the management-finance and patent correlation value as the correlation between the acquired management-finance information and the acquired patent information;

a function for making said management-finance and patent correlation value standardization means calculate the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

a function for making said market value information standardization means calculate the standardized market value information by calculating the average value and the standard deviation regarding the market value information for the period to be researched, subtracting the average value from the market value information for each period and thereafter dividing the outcome of this subtraction with the standard deviation; and

a function for making said validity calculation means provide a prescribed width to each of the curves of said standardized management-finance and patent correlation value and said standardized market value information, then calculate the area of the region surrounded by both curves having the widths, and then calculate the validity of the enterprise value based on the calculated area.

**36.** An enterprise value evaluation program to be executed with an enterprise value evaluation device comprising: management-finance information acquisition means for acquiring management-finance information; market value information acquisition means for acquiring market value information; management-finance information standardization means for calculating the standardized management-finance information; market value information standardization means for calculating the standardized market value information; validity calculation means for calculating the validity of an enterprise value; and information processing means capable of controlling said management-finance information acquisition means, said market value information acquisition means, said management-finance information standardization means, said market value information standardization means and said validity calculation

**46**

means,
wherein said information processing means realizes:

a function for making said management-finance information acquisition means acquire management-finance information for a period to be researched from a management-finance information database recording the management-finance information such as information showing the size of a company to be researched or financial information of the company to be researched;
a function for making said market value information acquisition means acquire market value information for the period to be researched from a market value information database recording the market value information such as rank of stock price, rank of brand value or rank of hidden assets of the company to be researched;
a function for making said management-finance information standardization means calculate the standardized management-finance information by calculating the average value and the standard deviation regarding the management-finance information for the period to be researched, subtracting the average value from the management-finance information for each period and thereafter dividing the outcome of this subtraction by the standard deviation;
a function for making said market value information standardization means calculate the standardized market value information by calculating the average value and the standard deviation regarding the market value information for the period to be researched, subtracting the average value from the market value information for each period and thereafter dividing the outcome of this subtraction by the standard deviation; and
a function for making said validity calculation means calculate the validity of the enterprise value based on the difference between said standardized management-finance information and said standardized market value information.

37. An enterprise value evaluation program to be executed with an enterprise value evaluation device comprising: management-finance information acquisition means for acquiring management-finance information; market value information acquisition means for acquiring market value information; management-finance information standardization means for calculating the standardized management-finance information; market value information standardization means for calculating the standardized market value information; validity calculation means for calculating the validity of an enterprise value; and information processing means capable of controlling said management-finance information acquisition means, said market value information acquisition means, said management-finance information standardization means, said market value information standardization means and said validity calculation means,
wherein said information processing means realizes:

a function for making said management-finance information acquisition means acquire management-finance information for a period to be researched from a management-finance information database recording the management-finance information such as information showing the size of a company to be researched or financial information of the company to be researched;
a function for making said market value information acquisition means acquire market value information for the period to be researched from a market value information database recording the market value information such as rank of stock price, rank of brand value or rank of hidden assets of the company to be researched;
a function for making said management-finance information standardization means calculate the standardized management-finance information by calculating the average value and the standard deviation regarding the management-finance information for the period to be researched, subtracting the average value from the management-finance information for each period and thereafter dividing the outcome of this subtraction by the standard deviation;
a function for making said market value information standardization means calculate the standardized market value information by calculating the average value and the standard deviation regarding the market value information for the period to be researched, subtracting the average value from the market value information for each period and thereafter dividing the outcome of this subtraction by the standard deviation; and
a function for making said validity calculation means provide a prescribed width to a curve of said standardized management-finance information and then calculate the validity of the enterprise value based on the length of a curve of the market value information existing in said prescribed width.

38. An enterprise value evaluation program to be executed with an enterprise value evaluation device comprising: management-finance information acquisition means for acquiring management-finance information; market value information acquisition means for acquiring market value information; management-finance information standardization means for calculating the standardized management-finance information; market value information stand-

47

ardization means for calculating the standardized market value information; validity calculation means for calculating the validity of an enterprise value; and information processing means capable of controlling said management-finance information acquisition means, said market value information acquisition means, said management-finance information standardization means, said market value information standardization means and said validity calculation means,

wherein said information processing means realizes:

a function for making said management-finance information acquisition means acquire management-finance information for a period to be researched from a management-finance information database recording the management-finance information such as information showing the size of a company to be researched or financial information of the company to be researched;

a function for making said market value information acquisition means acquire market value information for the period to be researched from a market value information database recording the market value information such as rank of stock price, rank of brand value or rank of hidden assets of the company to be researched;

a function for making said management-finance information standardization means calculate the standardized management-finance information by calculating the average value and the standard deviation regarding the management-finance information for the period to be researched, subtracting the average value from the management-finance information for each period and thereafter dividing the outcome of this subtraction by the standard deviation;

a function for making said market value information standardization means calculate the standardized market value information by calculating the average value and the standard deviation regarding the market value information for the period to be researched, subtracting the average value from the market value information for each period and thereafter dividing the outcome of this subtraction by the standard deviation; and

a function for making said validity calculation means provide a prescribed width to each of the curves of said standardized management-finance information and said standardized market value information, then calculate the area of the region surrounded by both curves having the widths, and then calculate the validity of the enterprise value based on the calculated area.

39. An enterprise value evaluation program to be executed with an enterprise value evaluation device comprising: patent information acquisition means for acquiring patent information; market value information acquisition means for acquiring market value information; patent information standardization means for calculating the standardized patent information; market value information standardization means for calculating the standardized market value information; validity calculation means for calculating the validity of an enterprise value; and information processing means capable of controlling said patent information acquisition means, said market value information acquisition means, said patent information standardization means, said market value information standardization means and said validity calculation means,

wherein said information processing means realizes:

a function for making said patent information acquisition means acquire patent information for the period to be researched from a patent information database recording the patent information relating to patents or utility models filed by the company to be researched or registered patents or utility models owned by the company to be researched;

a function for making said market value information acquisition means acquire market value information for the period to be researched from a market value information database recording the market value information such as rank of stock price, rank of brand value or rank of hidden assets of the company to be researched;

a function for making said patent information standardization means calculate the standardized patent information by calculating the average value and the standard deviation regarding the patent information for the period to be researched, subtracting the average value from the patent information for each period and thereafter dividing the outcome of this subtraction by the standard deviation;

a function for making said market value information standardization means calculate the standardized market value information by calculating the average value and the standard deviation regarding the market value information for the period to be researched, subtracting the average value from the market value information for each period and thereafter dividing the outcome of this subtraction by the standard deviation; and

a function for making said validity calculation means calculate the validity of the enterprise value based on the difference between said standardized patent information and said standardized market value information.

40. An enterprise value evaluation program to be executed with an enterprise value evaluation device comprising: patent information acquisition means for acquiring patent information; market value information acquisition means for acquiring market value information; patent information standardization means for calculating the standardized patent information; market value information standardization means for calculating the standardized market value information; validity calculation means for calculating the validity of an enterprise value; and information processing means capable of controlling said patent information acquisition means, said market value information acquisition means, said patent information standardization means, said market value information standardization means and said validity calculation means,
wherein said information processing means realizes:

a function for making said patent information acquisition means acquire patent information for the period to be researched from a patent information database recording the patent information relating to patents or utility models filed by the company to be researched or registered patents or utility models owned by the company to be researched;
a function for making said market value information acquisition means acquire market value information for the period to be researched from a market value information database recording the market value information such as rank of stock price, rank of brand value or rank of hidden assets of the company to be researched;
a function for making said patent information standardization means calculate the standardized patent information by calculating the average value and the standard deviation regarding the patent information for the period to be researched, subtracting the average value from the patent information for each period and thereafter dividing the outcome of this subtraction by the standard deviation;
a function for making said market value information standardization means calculate the standardized market value information by calculating the average value and the standard deviation regarding the market value information for the period to be researched, subtracting the average value from the market value information for each period and thereafter dividing the outcome of this subtraction by the standard deviation; and
a function for making said validity calculation means provide a prescribed width to a curve of said standardized patent information and then calculate the validity of the enterprise value based on the length of a curve of the market value information existing in said prescribed width.

41. An enterprise value evaluation program to be executed with an enterprise value evaluation device comprising: patent information acquisition means for acquiring patent information; market value information acquisition means for acquiring market value information; patent information standardization means for calculating the standardized patent information; market value information standardization means for calculating the standardized market value information; validity calculation means for calculating the validity of an enterprise value; and information processing means capable of controlling said patent information acquisition means, said market value information acquisition means, said patent information standardization means, said market value information standardization means and said validity calculation means,
wherein said information processing means realizes:

a function for making said patent information acquisition means acquire patent information for the period to be researched from a patent information database recording the patent information relating to patents or utility models filed by the company to be researched or registered patents or utility models owned by the company to be researched;
a function for making said market value information acquisition means acquire market value information for the period to be researched from a market value information database recording the market value information such as rank of stock price, rank of brand value or rank of hidden assets of the company to be researched;
a function for making said patent information standardization means calculate the standardized patent information by calculating the average value and the standard deviation regarding the patent information for the period to be researched, subtracting the average value from the patent information for each period and thereafter dividing the outcome of this subtraction by the standard deviation;
a function for making said market value information standardization means calculate the standardized market value information by calculating the average value and the standard deviation regarding the market value information for the period to be researched, subtracting the average value from the market value information for each period and thereafter dividing the outcome of this subtraction by the standard deviation; and
a function for making said validity calculation means provide a prescribed width to each of the curves of said standardized patent information and said standardized market value information, then calculate the area of the region surrounded by both curves having the widths, and then calculate the validity of the enterprise value based on the calculated area.

42. An enterprise value evaluation method employing an enterprise value evaluation device comprising: management-finance information acquisition means for acquiring management-finance information; patent information acquisition means for acquiring patent information; market value information acquisition means for acquiring market value information; management-finance and patent correlation value for calculating a management-finance and patent correlation value as the correlation between the management-finance information and patent information; management-finance and patent correlation value standardization means for calculating a standardized management-finance and patent correlation value; market value information standardization means for calculating the standardized market value information; and validity calculation means for calculating the validity of an enterprise value, comprising the steps of:

acquiring, by said management-finance information acquisition means, management-finance information for a period to be researched from a management-finance information database recording the management-finance information such as information showing the size of a company to be researched or financial information of the company to be researched;

acquiring, by said patent information acquisition means, patent information for the period to be researched from a patent information database recording the patent information relating to patents or utility models filed by the company to be researched or registered patents or utility models owned by the company to be researched;

acquiring, by said market value information acquisition means, market value information for the period to be researched from a market value information database recording the market value information such as rank of stock price, rank of brand value or rank of hidden assets of the company to be researched;

calculating, by said management-finance and patent correlation value calculation means, the management-finance and patent correlation value as the correlation between the acquired management-finance information and the acquired patent information;

calculating, by said management-finance and patent correlation value standardization means, the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

calculating, by said market value information standardization means, the standardized market value information by calculating the average value and the standard deviation regarding the market value information for the period to be researched, subtracting the average value from the market value information for each period and thereafter dividing the outcome of this subtraction by the standard deviation; and

calculating, by said validity calculation means, the validity of the enterprise value based on the difference between said standardized management-finance and patent correlation value and said standardized market value information.

43. An enterprise value evaluation method employing an enterprise value evaluation device comprising: management-finance information acquisition means for acquiring management-finance information; patent information acquisition means for acquiring patent information; market value information acquisition means for acquiring market value information; management-finance and patent correlation value calculation means for calculating a management-finance and patent correlation value; management-finance and patent correlation value standardization means for calculating a standardized management-finance and patent correlation value; market value information standardization means for calculating the standardized market value information; and validity calculation means for calculating the validity of an enterprise value, comprising the steps of:

acquiring, by said management-finance information acquisition means, management-finance information for a period to be researched from a management-finance information database recording the management-finance information such as information showing the size of a company to be researched or financial information of the company to be researched;

acquiring, by said patent information acquisition means, patent information for the period to be researched from a patent information database recording the patent information relating to patents or utility models filed by the company to be researched or registered patents or utility models owned by the company to be researched;

acquiring, by said market value information acquisition means, market value information for the period to be researched from a market value information database recording the market value information such as rank of stock price, rank of brand value or rank of hidden assets of the company to be researched;

calculating, by said management-finance and patent correlation value calculation means, the management-finance and patent correlation value as the correlation between the acquired management-finance information and the acquired patent information;

calculating, by said management-finance and patent correlation value standardization means, the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

calculating, by said market value information standardization means, the standardized market value information by calculating the average value and the standard deviation regarding the market value information for the period to be researched, subtracting the average value from the market value information for each period and thereafter dividing the outcome of this subtraction by the standard deviation; and

calculating the validity of the enterprise value by making said validity calculation means provide a prescribed width to a curve of said standardized management-finance and patent correlation value and then calculate the validity of the enterprise value based on the length of a curve of the market value information existing in said prescribed width.

44. An enterprise value evaluation method employing an enterprise value evaluation device comprising: management-finance information acquisition means for acquiring management-finance information; patent information acquisition means for acquiring patent information; market value information acquisition means for acquiring market value information; management-finance and patent correlation value calculation means for calculating a management-finance and patent correlation value; management-finance and patent correlation value standardization means for calculating a standardized management-finance and patent correlation value; market value information standardization means for calculating the standardized market value information; and validity calculation means for calculating the validity of an enterprise value, comprising the steps of:

acquiring, by said management-finance information acquisition means, management-finance information for a period to be researched from a management-finance information database recording the management-finance information such as information showing the size of a company to be researched or financial information of the company to be researched;

acquiring, by said patent information acquisition means, patent information for the period to be researched from a patent information database recording the patent information relating to patents or utility models filed by the company to be researched or registered patents or utility models owned by the company to be researched;

acquiring, by said market value information acquisition means, market value information for the period to be researched from a market value information database recording the market value information such as rank of stock price, rank of brand value or rank of hidden assets of the company to be researched;

calculating, by said management-finance and patent correlation value calculation means, the management-finance and patent correlation value as the correlation between the acquired management-finance information and the acquired patent information;

calculating, by said management-finance and patent correlation value standardization means, the standardized management-finance and patent correlation value by calculating the average value and the standard deviation regarding the management-finance and patent correlation value for the period to be researched, subtracting the average value from the management-finance and patent correlation value for each period and thereafter dividing the outcome of this subtraction by the standard deviation;

calculating, by said market value information standardization means, the standardized market value information by calculating the average value and the standard deviation regarding the market value information for the period to be researched, subtracting the average value from the market value information for each period and thereafter dividing the outcome of this subtraction with the standard deviation; and

calculating the validity of the enterprise value by making said validity calculation means provide a prescribed width to each of the curves of said standardized management-finance and patent correlation value and said standardized market value information, then calculate the area of the region surrounded by both curves having the widths, and then calculate the validity of the enterprise value based on the calculated area.

45. An enterprise value evaluation method employing an enterprise value evaluation device comprising: management-finance information acquisition means for acquiring management-finance information; market value information acquisition means for acquiring market value information; management-finance information standardization means for calculating the standardized management-finance information; market value information standardization means for calculating the standardized market value information; and validity calculation means for calculating the validity of an enterprise value, comprising the steps of:

acquiring, by said management-finance information acquisition means, management-finance information for a period to be researched from a management-finance information database recording the management-finance information such as information showing the size of a company to be researched or financial information of the company to be researched;

acquiring, by said market value information acquisition means, market value information for the period to be researched from a market value information database recording the market value information such as rank of stock price, rank of brand value or rank of hidden assets of the company to be researched;

calculating, by said management-finance information standardization means, the standardized management-finance information by calculating the average value and the standard deviation regarding the management-finance information for the period to be researched, subtracting the average value from the management-finance information for each period and thereafter dividing the outcome of this subtraction by the standard deviation;

calculating, by said market value information standardization means, the standardized market value information by calculating the average value and the standard deviation regarding the market value information for the period to be researched, subtracting the average value from the market value information for each period and thereafter dividing the outcome of this subtraction by the standard deviation; and

calculating, by said validity calculation means, the validity of the enterprise value based on the difference between said standardized management-finance information and said standardized market value information.

46. An enterprise value evaluation method employing an enterprise value evaluation device comprising: management-finance information acquisition means for acquiring management-finance information; market value information acquisition means for acquiring market value information; management-finance information standardization means for calculating the standardized management-finance information; market value information standardization means for calculating the standardized market value information; and validity calculation means for calculating the validity of an enterprise value, comprising the steps of:

acquiring, by said management-finance information acquisition means, management-finance information for a period to be researched from a management-finance information database recording the management-finance information such as information showing the size of a company to be researched or financial information of the company to be researched;

acquiring, by said market value information acquisition means, market value information for the period to be researched from a market value information database recording the market value information such as rank of stock price, rank of brand value or rank of hidden assets of the company to be researched;

calculating, by said management-finance information standardization means, the standardized management-finance information by calculating the average value and the standard deviation regarding the management-finance information for the period to be researched, subtracting the average value from the management-finance information for each period and thereafter dividing the outcome of this subtraction by the standard deviation;

calculating, by said market value information standardization means, the standardized market value information by calculating the average value and the standard deviation regarding the market value information for the period to be researched, subtracting the average value from the market value information for each period and thereafter dividing the outcome of this subtraction by the standard deviation; and

calculating the validity of the enterprise value by making said validity calculation means provide a prescribed width to a curve of said standardized management-finance information and then calculate the validity of the enterprise value based on the length of a curve of the market value information existing in said prescribed width.

47. An enterprise value evaluation method employing an enterprise value evaluation device comprising: management-finance information acquisition means for acquiring management-finance information; market value information acquisition means for acquiring market value information; management-finance information standardization means for calculating the standardized management-finance information; market value information standardization means for calculating the standardized market value information; and validity calculation means for calculating the validity of an enterprise value, comprising the steps of:

acquiring, by said management-finance information acquisition means, management-finance information for a period to be researched from a management-finance information database recording the management-finance information such as information showing the size of a company to be researched or financial information of the company to be researched;

acquiring, by said market value information acquisition means, market value information for the period to be researched from a market value information database recording the market value information such as rank of stock price, rank of brand value or rank of hidden assets of the company to be researched;

calculating, by said management-finance information standardization means, the standardized management-finance information by calculating the average value and the standard deviation regarding the management-finance information for the period to be researched, subtracting the average value from the management-finance information for each period and thereafter dividing the outcome of this subtraction by the standard deviation; calculating, by said market value information standardization means, the standardized market value information by calculating the average value and the standard deviation regarding the market value information for the period to be researched, subtracting the average value from the market value information for each period and thereafter dividing the outcome of this subtraction by the standard deviation; and calculating the validity of the enterprise value by making said validity calculation means provide a prescribed width to each of the curves of said standardized management-finance information and said standardized market value information, then calculate the area of the region surrounded by both curves having the widths, and then calculate the validity of the enterprise value based on the calculated area.

48. An enterprise value evaluation method employing an enterprise value evaluation device comprising: patent information acquisition means for acquiring patent information; market value information acquisition means for acquiring market value information; patent information standardization means for calculating the standardized patent information; market value information standardization means for calculating the standardized market value information; and validity calculation means for calculating the validity of an enterprise value, comprising the steps of:

acquiring, by said patent information acquisition means, patent information for the period to be researched from a patent information database recording the patent information relating to patents or utility models filed by the company to be researched or registered patents or utility models owned by the company to be researched; acquiring, by said market value information acquisition means, market value information for the period to be researched from a market value information database recording the market value information such as rank of stock price, rank of brand value or rank of hidden assets of the company to be researched; calculating, by said patent information standardization means, the standardized patent information by calculating the average value and the standard deviation regarding the patent information for the period to be researched, subtracting the average value from the patent information for each period and thereafter dividing the outcome of this subtraction by the standard deviation; calculating, by said market value information standardization means, the standardized market value information by calculating the average value and the standard deviation regarding the market value information for the period to be researched, subtracting the average value from the market value information for each period and thereafter dividing the outcome of this subtraction by the standard deviation; and calculating, by said validity calculation means, the validity of the enterprise value based on the difference between said standardized patent information and said standardized market value information.

49. An enterprise value evaluation method employing an enterprise value evaluation device comprising: patent information acquisition means for acquiring patent information; market value information acquisition means for acquiring market value information; patent information standardization means for calculating the standardized patent information; market value information standardization means for calculating the standardized market value information; and validity calculation means for calculating the validity of an enterprise value, comprising the steps of:

acquiring, by said patent information acquisition means, patent information for the period to be researched from a patent information database recording the patent information relating to patents or utility models filed by the company to be researched or registered patents or utility models owned by the company to be researched; acquiring, by said market value information acquisition means, market value information for the period to be researched from a market value information database recording the market value information such as rank of stock price, rank of brand value or rank of hidden assets of the company to be researched; calculating, by said patent information standardization means, the standardized patent information by calculating the average value and the standard deviation regarding the patent information for the period to be researched, subtracting the average value from the patent information for each period and thereafter dividing the outcome of this subtraction by the standard deviation; calculating, by said market value information standardization means, the standardized market value information by calculating the average value and the standard deviation regarding the market value information for the period to be researched, subtracting the average value from the market value information for each period and thereafter dividing the outcome of this subtraction by the standard deviation; and calculating the validity of the enterprise value by making said validity calculation means provide a prescribed width to a curve of said standardized patent information and then calculate the validity of the enterprise value based on the length of a curve of the market value information existing in said prescribed width.

**50.** An enterprise value evaluation method employing an enterprise value evaluation device comprising: patent information acquisition means for acquiring patent information; market value information acquisition means for acquiring market value information; patent information standardization means for calculating the standardized patent information; market value information standardization means for calculating the standardized market value information; and validity calculation means for calculating the validity of an enterprise value, comprising the steps of:

acquiring, by said patent information acquisition means, patent information for the period to be researched from a patent information database recording the patent information relating to patents or utility models filed by the company to be researched or registered patents or utility models owned by the company to be researched;

acquiring, by said market value information acquisition means, market value information for the period to be researched from a market value information database recording the market value information such as rank of stock price, rank of brand value or rank of hidden assets of the company to be researched;

calculating, by said patent information standardization means, the standardized patent information by calculating the average value and the standard deviation regarding the patent information for the period to be researched, subtracting the average value from the patent information for each period and thereafter dividing the outcome of this subtraction by the standard deviation;

calculating, by said market value information standardization means, the standardized market value information by calculating the average value and the standard deviation regarding the market value information for the period to be researched, subtracting the average value from the market value information for each period and thereafter dividing the outcome of this subtraction by the standard deviation; and

calculating the validity of the enterprise value by making said validity calculation means provide a prescribed width to each of the curves of said standardized patent information and said standardized market value information, then calculate the area of the region surrounded by both curves having the widths, and then calculate the validity of the enterprise value based on the calculated area.

FIG. 1

FIG. 2

FIG. 3

(a) MANAGEMENT-FINANCE INFORMATION

| (A) Information on Size of Company | (B) Financial Information of Company | (C) Combined Information of Company |
|---|---|---|
| Number of employees | Sales volume | Sales volume per employee |
| Number of officers | Sales profit | Research and development expenses per employee |
| Capital | Operating profit | Sales profit per employee |
| Number of plants/offices | Gross operating profit | Operating profit per employee |
| Ground floor area | Sales profit ratio | Gross operating profit per employee |
| Total floor area | Operating profit ratio | |
| Ownership ratio of premises | Gross operating profit ratio | |
| Ownership ratio of building | Total market value to total assets ratio | |
| Number of employees (consolidated basis) | Total market value to stockholders' equity ratio | |
| Number of officers (consolidated basis) | Total market value to sales volume ratio | |
| Capital (consolidated basis) | Total market value to gross operating profit ratio | |
| Number of plants/offices (consolidated basis) | Total market value to operating profit ratio | |
| Ground floor area (consolidated basis) | Gross operating profit to total assets ratio | |
| Total floor area (consolidated basis) | Gross operating profit to stockholders' equity ratio | |
| Ownership ratio of premises (consolidated basis) | Operating profit to total assets ratio | |
| Ownership ratio of building (consolidated basis) | Operating profit to Stockholders' equity ratio | |
| | Stockholders' equity ratio | |
| | Balance of total market value and stockholders' equity | |
| | Research and development expenses | |
| | Research and development expenses to sales volume ratio | |
| | Research and development expenses to operating profit ratio | |
| | Research and development expenses to gross operating profit ratio | |

FIG. 4

(b) PATENT INFORMATION

| (A) Application Related Matters | (B) Registration Related Matters |
|---|---|
| Number of filings | Number of registrations |
| Number of filings based on IPC | Number of registrations based on IPC |
| Number of filings based on keywords | Number of registrations based on keywords |
| Number of claims filed | Number of registered claims |
| Years spent on examination requests | Years required for registration |
| Number of inventors | Registration rate |
| Number of applicants (number of joint applications) | Years spent on examination |
| Number of domestic priority-claiming applications | Number of applications in which preferential examination is conducted |
| Number of domestic priority bases claimed in applications | Number of rejections issued |
| Number of priority bases from foreign countries | Number of amendments filed |
| Number of applications in which an exception to loss of novelty is requested | Number of amendments filed (for formalities) |
| Number of applications in which examination is requested before laid-open | Number of written oppositions filed |
| Number of divisional applications | Number of appeals and trials |
| Number of withdrawn/abandoned applications | Number of registrations for creating patent right |
| Number of filings (in each country) | Number of registrations for extending term of patent right |
| Number of inventors in applications (in each country) | Number of transferred patents |
| Number of applicants in applications (in each country) | Years of payment of patent fees |
| Number of priority-claiming applications (in each country) | Number of registrations (in each country) |
| Number of priority bases claimed in applications (in each country) | Years required for registration (in each country) |
| Number of divisional applications (in each country) | Years spent on examination (in each country) |
| | Number of rejections issued (in each country) |
| | Number of amendments filed (in each country) |
| | Number of amendments filed (for formalities) (in each country) |
| | Number of written oppositions filed (in each country) |

**FIG. 5**

(A) RANK OF STOCK PRICE

| Rank of Stock Price | Stock Price Average (Converted at ¥50/share) of Unit Term (e.g., 1 Year) |
|---|---|
| 10 | ¥20,000 or more |
| 9 | ¥10,000 or more to less than ¥20,000 |
| 8 | ¥6,000 or more to less than ¥10,000 |
| 7 | ¥3,000 or more to less than ¥6,000 |
| 6 | ¥1,500 or more to less than ¥3,000 |
| 5 | ¥800 or more to less than ¥1,500 |
| 4 | ¥400 or more to less than ¥800 |
| 3 | ¥200 or more to less than ¥400 |
| 2 | ¥100 or more to less than ¥200 |
| 1 | ¥50 or more to less than ¥100 |
| 0 | less than ¥50 |

**FIG. 6**

(B) RANK OF BRAND VALUE

| Rank of Brand Value | Representation of Brand Value |
|---|---|
| 9 | Extremely Favorable Impression |
| 8 | Very Favorable Impression |
| 7 | Favorable Impression |
| 6 | Somewhat Favorable Impression |
| 5 | Normal |
| 4 | Somewhat Poor Impression |
| 3 | Poor Impression |
| 2 | Very Poor Impression |
| 1 | Extremely Poor Impression |

FIG. 7

| (Rank of Financial Assets) | (Financial Assets to Equity Capital Ratio) |
|---|---|
| 9 | 2.0 or more |
| 8 | 1.5 or more, less than 2.0 |
| 7 | 1.0 or more, less than 1.5 |
| 6 | 0.5 or more, less than 1.0 |
| 5 | 0.0 or more, less than 0.5 |
| 4 | -0.5 or more, less than 0.0 |
| 3 | -1.0 or more, less than -0.5 |
| 2 | -2.0 or more, less than -1.0 |
| 1 | Less than -2.0 |

FIG. 8

| (Rank of Asset-Impairment Accounting) | (Asset-Impairment Accounting to Equity Capital Ratio) |
|---|---|
| 9 | 2.0 or more |
| 8 | 1.5 or more, less than 2.0 |
| 7 | 1.0 or more, less than 1.5 |
| 6 | 0.5 or more, less than 1.0 |
| 5 | 0.0 or more, less than 0.5 |
| 4 | -0.5 or more, less than 0.0 |
| 3 | -1.0 or more, less than -0.5 |
| 2 | -2.0 or more, less than -1.0 |
| 1 | Less than -2.0 |

FIG. 9

| (Rank of Market Value Claims) | (Market Value Claims to Equity Capital Ratio) |
|---|---|
| 9 | 2.0 or more |
| 8 | 1.5 or more, less than 2.0 |
| 7 | 1.0 or more, less than 1.5 |
| 6 | 0.5 or more, less than 1.0 |
| 5 | 0.0 or more, less than 0.5 |
| 4 | −0.5 or more, less than 0.0 |
| 3 | −1.0 or more, less than −0.5 |
| 2 | −2.0 or more, less than −1.0 |
| 1 | Less than −2.0 |

FIG. 10

| (Evaluation of Number of Employees) | (Sales Volume)/(Number of Employees) Unit: ¥10,000,000/person |
|---|---|
| 9 | 3.0 or more |
| 8 | 2.0 or more, less than 3.0 |
| 7 | 1.5 or more, less than 2.0 |
| 6 | 1.2 or more, less than 1.5 |
| 5 | 1.0 or more, less than 1.2 |
| 4 | 0.8 or more, less than 1.0 |
| 3 | 0.5 or more, less than 0.8 |
| 2 | 0.2 or more, less than 0.5 |
| 1 | Less than 0.2 |

FIG. 11

| (Ability of Human Resources)<br>(Motivation of Human Resources)<br>(Leadership of Top Management)<br>(Reliability) | (Representation of Each Evaluation) |
|---|---|
| 9 | Extremely Favorable Impression |
| 8 | Very Favorable Impression |
| 7 | Favorable Impression |
| 6 | Somewhat Favorable Impression |
| 5 | Normal |
| 4 | Somewhat Poor Impression |
| 3 | Poor Impression |
| 2 | Very Poor Impression |
| 1 | Extremely Poor Impression |

FIG. 12

| (Evaluation of Product/Service Capital)<br>(Evaluation of Business Process Capital)<br>(Evaluation of Knowledge Technology Capital)<br>(Evaluation of Organizational Culture Capital)<br>(Evaluation of Organizational Personnel System Capital)<br>(Evaluation of Other Organizational Capital) | (Representation of Each Evaluation) |
|---|---|
| 9 | Extremely Favorable Impression |
| 8 | Very Favorable Impression |
| 7 | Favorable Impression |
| 6 | Somewhat Favorable Impression |
| 5 | Normal |
| 4 | Somewhat Poor Impression |
| 3 | Poor Impression |
| 2 | Very Poor Impression |
| 1 | Extremely Poor Impression |

FIG. 13

| (Customer Capital)<br>(Business Partner Capital)<br>(Other Related Capital) | (Representation of Each Evaluation) |
|---|---|
| 9 | Extremely Favorable Impression |
| 8 | Very Favorable Impression |
| 7 | Favorable Impression |
| 6 | Somewhat Favorable Impression |
| 5 | Normal |
| 4 | Somewhat Poor Impression |
| 3 | Poor Impression |
| 2 | Very Poor Impression |
| 1 | Extremely Poor Impression |

## FIG. 14

### (a) SPREAD OF MANAGEMENT-FINANCE INFORMATION

| (A) Information on Size of Company | (B) Financial Information of Company | (C) Combined Information of Company |
|---|---|---|
| Transition of number of employees | Transition of sales volume | Transition of sales volume per employee |
| Transition of number of officers | Transition of sales profit | Transition of research and development expenses per employee |
| Transition of capital | Transition of operating profit | Transition of sales profit per employee |
| Transition of number of plants/offices | Transition of gross operating profit | Transition of operating profit per employee |
| Transition of ground floor area | Transition of sales profit ratio | Transition of gross operating profit per employee |
| Transition of total floor area | Transition of operating profit ratio | |
| Transition of ownership ratio of premises | Transition of gross operating profit ratio | |
| Transition of ownership ratio of building | Transition of total market value to total assets ratio | |
| Transition of number of employees (consolidated basis) | Transition of total market value to stockholders' equity ratio | |
| Transition of number of officers (consolidated basis) | Transition of total market value to sales volume ratio | |
| Transition of capital (consolidated basis) | Transition of total market value to gross operating profit ratio | |
| Transition of number of plants/offices (consolidated basis) | Transition of total market value to operating profit ratio | |
| Transition of ground floor area (consolidated basis) | Transition of gross operating profit to total assets ratio | |
| Transition of total floor area (consolidated basis) | Transition of gross operating profit to stockholders' equity ratio | |
| Transition of ownership ratio of premises (consolidated basis) | Transition of operating profit to total assets ratio | |
| Transition of ownership ratio of building (consolidated basis) | Transition of operating profit to stockholders' equity ratio | |
| | Transition of stockholders' equity ratio | |
| | Transition of balance of total market value and stockholders' equity | |
| | Transition of research and development expenses | |
| | Transition of research and development expenses to sales volume ratio | |
| | Transition of research and development expenses to operating profit ratio | |
| | Transition of research and development expenses to gross operating profit ratio | |

FIG. 15

(b) SPREAD OF PATENT INFORMATION

| (A) Application Related Matters | (B) Registration Related Matters |
|---|---|
| Transition of Number of filings | Transition of number of registrations |
| Transition of number of filings based on IPC | Transition of number of registrations based on IPC |
| Transition of number of filings based on keywords | Transition of number of registrations based on keywords |
| Transition of number of claims filed | Transition of number of registered claims |
| Transition of years spent on examination requests | Transition of years required for registration |
| Transition of number of inventors | Transition of registration rate |
| Transition of number of applicants (number of joint applications) | Transition of years spent on examination |
| Transition of number of domestic priority-claiming applications | Transition of number of applications in which preferential examination is conducted |
| Transition of number of domestic priority bases claimed in applications | Transition of number of rejections issued |
| Transition of number of priority bases from foreign countries | Transition of number of amendments filed |
| Transition of number of applications in which an exception to loss of novelty is requested | Transition of number of amendments filed (for formalities) |
| Transition of number of applications in which examination is requested before laid-open | Transition of number of written oppositions filed |
| Transition of number of divisional applications | Transition of number of appeals and trials |
| Transition of number of withdrawn/abandoned applications | Transition of number of registrations for creating patent right |
| Transition of number of filings (in each country) | Transition of number of registrations for extending term of patent right |
| Transition of number of inventors in applications (in each country) | Transition of number of transferred patents |
| Transition of number of applicants in applications (in each country) | Transition of years of payment of patent fees |
| Transition of number of priority-claiming applications (in each country) | Transition of number of registrations (in each country) |
| Transition of number of priority bases claimed in applications (in each country) | Transition of years required for registration (in each country) |
| Transition of number of divisional applications (in each country) | Transition of years spent on examination (in each country) |
| | Transition of number of rejections issued (in each country) |
| | Transition of number of amendments filed (in each country) |
| | Transition of number of amendments filed (for formalities) (in each country) |
| | Transition of number of written oppositions filed (in each country) |

FIG. 16

(c) SPREAD OF MARKET VALUE INFORMATION

| (A) Transition of Rank of Stock Price |
| --- |
| (B) Transition of Rank of Brand Value |
| (C) Transition of Rank of Hidden Assets |

FIG. 17

S100
ENTERPRISE VALUE VALIDITY JUDGMENT PROCESSING

S102
SPREAD PROCESSING

S104
ACQUIRE MANAGEMENT-FINANCE INFORMATION AND PATENT INFORMATION

MANAGEMENT-FINANCE INFORMATION, PATENT INFORAMTION

(ENTERPRISE COMBINATION INFORMATION)

S106
SPREAD PROCESSING (TIME ADJUSTMENT PROCESSING)

S108
ACQUIRE CORRELATION BETWEEN MANAGEMENT-FINANCE INFORMATION AND PATENT INFORMATION AND CALCULATE MANAGEMENT-FINANCE AND PATENT CORRELATION VALUE

S110
STANDARDIZE MANAGEMENT-FINANCE AND PATENT CORRELATION VALUE

S112
ACQUIRE MARKET VALUE INFORMATION AND SPREAD IT

MARKET VALUE INFORMATION

S114
STANDARDIZE MARKET VALUE INFORMATION

S116
COMPARE MANAGEMENT-FINANCE AND PATENT CORRELATION VALUE WITH MARKET VALUE INFORMATION

S118
JUDGE VALIDITY OF MARKET VALUE INFORMATION

S120
DISPLAY AND OUTPUT VALIDITY OF MARKET VALUE INFORMATION

VALIDITY OF MARKET VALUE

S122
END

FIG. 18

TRANSITION OF SALES VOLUME OF COMPANY A

FIG. 19

TRANSITION OF NUMBER OF FILINGS OF COMPANY A

FIG. 20

TRANSITION OF NUMBER OF FILINGS OF COMPANY A (+2 YEARS)

FIG. 21

TRANSITION OF NUMBER OF FILINGS/SALES VOLUME OF COMPANY A

FIG. 22

TRANSITION OF NUMBER OF FILINGS/SALES VOLUME OF COMPANY A
(AVERAGE, STANDARD DEVIATION)

FIG. 23

TRANSITION OF NUMBER OF FILINGS/SALES VOLUME OF COMPANY A
($\pm 1/2\sigma$, $\pm\sigma$)

FIG. 24

TRANSITION OF RANK OF STOCK PRICE OF COMPANY A (EXAMPLE A)

FIG. 25

TRANSITION OF RANK OF STOCK PRICE OF COMPANY A
(AVERAGE, STANDARD DEVIATION) (EXAMPLE A)

FIG. 26

VALIDITY JUDGMENT
NUMBER OF FILINGS/SALES VOLUME VS. RANK OF STOCK PRICE OF
COMPANY A (EXAMPLE A)

FIG. 27

| SCOPE OF MANAGEMENT-FINANCE AND PATENT CORRELATION VALUE k (STANDARDIZED BY AVERAGE VALUE OF ALL DATA) | POSITION OF MARKET VALUE INFORMATION (STANDARDIZED BY AVERAGE VALUE OF ALL DATA) | OVERLAP SCORE |
|---|---|---|
| $+\sigma < k$ | t | 0 |
| $+(1/2)\sigma < k \leqq +\sigma$ | t | 0.5 |
| $0 < k \leqq +(1/2)\sigma$ | t | 1 |
| $k = 0$ | t | 1 |
| $-(1/2)\sigma \leqq k < 0$ | t | 1 |
| $-\sigma \leqq k < -(1/2)\sigma$ | t | 0.5 |
| $k < -\sigma$ | t | 0 |

FIG. 28

| OVERLAP SCORE | EVALUATION RESULT OF VALIDITY |
|---|---|
| 0.7 OR MORE UP TO 1.0 | VALID |
| MORE THAN 0.3 TO LESS THAN 0.7 | DIFFICULT TO SAY |
| 0.3 OR LESS DOWN TO 0.0 | NOT VALID |

FIG. 29

| SCORE OBTAINED BY MARKET VALUE INFORMATION CURVE | EVALUATION RESULT OF VALIDITY |
|---|---|
| 0.7 OR MORE UP TO 1.0 | VALID |
| MORE THAN 0.3 TO LESS THAN 0.7 | DIFFICULT TO SAY |
| 0.3 OR LESS DOWN TO 0.0 | NOT VALID |

FIG. 30

**VALIDITY JUDGMENT**
**NUMBER OF FILINGS/SALES VOLUME VS. RANK (AREA) OF STOCK PRICE**
**OF COMPANY A (EXAMPLE A)**

FIG. 31

**VALIDITY JUDGMENT**
**NUMBER OF FILINGS/SALES VOLUME VS. RANK (AREA) OF STOCK PRICE**
**OF COMPANY A (EXAMPLE A)**

## FIG. 32

**VALIDITY JUDGMENT**
**NUMBER OF FILINGS/SALES VOLUME VS. RANK (AREA) OF STOCK PRICE**
**OF COMPANY A (EXAMPLE A)**

## FIG. 33

**TRANSITION OF RANK OF STOCK PRICE OF COMPANY A (EXAMPLE B)**

73

FIG. 34

**TRANSITION OF RANK OF STOCK PRICE OF COMPANY A
(AVERAGE, STANDARD DEVIATION) (EXAMPLE B)**

FIG. 35

**VALIDITY JUDGMENT
NUMBER OF FILINGS/SALES VOLUME VS. RANK OF STOCK PRICE OF
COMPANY A (EXAMPLE B)**

FIG. 36

VALIDITY JUDGMENT
NUMBER OF FILINGS/SALES VOLUME VS. RANK (AREA) OF STOCK PRICE
OF COMPANY A (EXAMPLE B)

FIG. 37

TRANSITION OF RESEARCH AND DEVELOPMENT EXPENSES OF
COMPANY B

FIG. 38

TRANSITION OF NUMBER OF REGISTRATIONS OF COMPANY B

FIG. 39

TRANSITION OF NUMBER OF REGISTRATIONS OF COMPANY B
(+5 YEARS)

FIG. 40

**TRANSITION OF
RESEARCH AND DEVELOPMENT EXPENSES/NUMBER OF REGISTRATIONS
OF COMPANY B**

FIG. 41

**TRANSITION OF
RESEARCH AND DEVELOPMENT EXPENSES/NUMBER OF REGISTRATIONS
OF COMPANY B (AVERAGE, STANDARD DEVIATION)**

FIG. 42

**TRANSITION OF
RESEARCH AND DEVELOPMENT EXPENSES/NUMBER OF REGISTRATIONS
OF COMPANY B ($\pm 1/2\sigma$, $\pm\sigma$)**

FIG. 43

RANK CALCULATION TABLE OF HUMAN CAPITAL

| BREAKDOWN OF HUMAN CAPITAL | EVALUATION RANK | RANK STANDARD-IZATION (-5) | WEIGHT | WEIGHTED RANK |
|---|---|---|---|---|
| EVALUATION OF NUMBER OF EMPLOYEES | 7 | 2 | 1 | 2 |
| ABILITY OF HUMAN RESOURCES | 7 | 2 | 2.5 | 5 |
| MOTIVATION OF HUMAN RESOURCES | 5 | 0 | 1 | 0 |
| LEADERSHIP OF TOP MANAGEMENT | 3 | -2 | 2 | -4 |
| RELIABILITY | 3 | -2 | 1 | -2 |
| TOTAL | | | 7.5 | 1 |
| RANK (CALCULATION) OF HUMAN CAPITAL | | | | 0.133 |

FIG. 44

RANK CALCULATION TABLE OF HIDDEN ASSETS

| BREAKDOWN OF HIDDEN ASSETS | EVALUATION RANK | RANK STANDARD-IZATION (-5) | WEIGHT | WEIGHTED RANK |
|---|---|---|---|---|
| FINANCIAL ASSETS | 7 | 2 | 3 | 6 |
| ASSET-IMPAIRMENT ACCOUNTING | 6 | 1 | 1 | 1 |
| MARKET VALUE CLAIMS | 4 | -1 | 1 | -1 |
| HUMAN CAPITAL | 5.133 | 0.133 | 2 | 0.266 |
| ORGANIZATIONAL CAPITAL | 8 | 3 | 1 | 3 |
| RELATED CAPITAL | 7 | 2 | 2.5 | 5 |
| TOTAL | | | 10.5 | 14.266 |
| RANK (CALCULATION) OF HIDDEN ASSETS | | | | 1.359 |

FIG. 45

TRANSITION OF RANK OF HIDDEN ASSETS OF COMPANY B

FIG. 46

TRANSITION OF RANK OF HIDDEN ASSETS OF COMPANY B
(AVERAGE, STANDARD DEVIATION)

FIG. 47

VALIDITY JUDGMENT
RESEARCH AND DEVELOPMENT EXPENSES/NUMBER OF REGISTRATIONS
VS. RANK OF HIDDEN ASSETS

FIG. 48

Acquire Correlation between Spread of (a) Management-Finance Information and Spread of (b) Patent Information

| Transition of Correlation Value between Management-Finance Information and Patent Information | |
|---|---|
| (A) Transition of Correlation Value between Management-Finance Information and Patent Information (Application Related Matters) | (B) Transition of Correlation Value between Management-Finance Information and Patent Information (Registration Related Matters) |
| Transition of number of filings per employee | Transition of number of registrations per employee |
| Transition of average number of claims filed per employee | Transition of average number of claims registered per employee |
| Transition of number of filings to research and development expenses ratio | Transition of number of registrations to research and development expenses ratio |
| Transition of number of filings to sales volume ratio | Transition of number of registrations to sales volume ratio |
| Transition of number of filings to sales profit ratio | Transition of number of registrations to sales profit ratio |
| Transition of number of filings to operating profit ratio | Transition of number of registrations to operating profit ratio |
| Transition of number of filings to gross operating profit ratio | Transition of number of registrations to gross operating profit ratio |
| Transition of average number of claims filed to research and development expenses ratio | Transition of average number of claims registered to research and development expenses ratio |
| Transition of average number of claims filed to sales volume ratio | Transition of average number of claims registered to sales volume ratio |
| Transition of average number of claims filed to sales profit ratio | Transition of average number of claims registered to sales profit ratio |
| Transition of average number of claims filed to operating profit ratio | Transition of average number of claims registered to operating profit ratio |
| Transition of average number of claims filed to gross operating profit ratio | Transition of average number of claims registered to gross operating profit ratio |
| Transition of average years spent on examination requests to research and development expenses ratio | Transition of average years required for registration to research and development expenses ratio |
| Transition of average years spent on examination requests to sales volume ratio | Transition of average years required for registration to sales volume ratio |
| Transition of average years spent on examination requests to sales profit ratio | Transition of average years required for registration to sales profit ratio |
| Transition of average years spent on examination requests to operating profit ratio | Transition of average years required for registration to operating profit ratio |
| Transition of average years spent on examination requests to gross operating profit ratio | Transition of average years required for registration to gross operating profit ratio |
| Transition of average number of inventors in application to research and development expenses ratio | Transition of average number of inventors in registration to research and development expenses ratio |
| Transition of average number of inventors in application to sales volume ratio | Transition of average number of inventors in registration to sales volume ratio |
| Transition of average number of inventors in application to sales profit ratio | Transition of average number of inventors in registration to sales profit ratio |
| Transition of average number of inventors in application to operating profit ratio | Transition of average number of inventors in registration to operating profit ratio |
| Transition of average number of inventors in application to gross operating profit ratio | Transition of average number of inventors in registration to gross operating profit ratio |
| Transition of number of filings to research and development expenses (in each country) ratio | Transition of number of registrations to research and development expenses (in each country) ratio |
| Transition of number of filings to sales volume (in each country) ratio | Transition of number of registrations to sales volume (in each country) ratio |
| Transition of number of filings to sales profit (in each country) ratio | Transition of number of registrations to sales profit (in each country) ratio |
| Transition of number of filings to operating profit (in each country) ratio | Transition of number of registrations to operating profit (in each country) ratio |
| Transition of number of filings to gross operating profit (in each country) ratio | Transition of number of registrations to gross operating profit (in each country) ratio |
| Transition of average number of claims filed to research and development expenses (in each country) ratio | Transition of average number of claims registered to research and development expenses (in each country) ratio |
| Transition of average number of claims filed to sales volume (in each country) ratio | Transition of average number of claims registered to sales volume (in each country) ratio |
| Transition of average number of claims filed to sales profit (in each country) ratio | Transition of average number of claims registered to sales profit (in each country) ratio |
| Transition of average number of claims filed to operating profit (in each country) ratio | Transition of average number of claims registered to operating profit (in each country) ratio |
| Transition of average number of claims filed to gross operating profit (in each country) ratio | Transition of average number of claims registered to gross operating profit (in each country) ratio |

FIG. 49

Judge validity of enterprise value by comparing correlation value between management-finance information and patent information with market value information

| (A-1) Application Related Matters (Rank of Stock Price) |
|---|
| Validity of enterprise value judged by comparing transition of number of filings per employee with transition of rank of stock price |
| Validity of enterprise value judged by comparing transition of average number of claims filed per employee with transition of rank of stock price |
| Validity of enterprise value judged by comparing transition of number of filings to research and development expenses ratio with transition of rank of stock price |
| Validity of enterprise value judged by comparing transition of number of filings to sales volume ratio with transition of rank of stock price |
| Validity of enterprise value judged by comparing transition of number of filings to sales profit ratio with transition of rank of stock price |
| Validity of enterprise value judged by comparing transition of number of filings to operating profit ratio with transition of rank of stock price |
| Validity of enterprise value judged by comparing transition of number of filings to gross operating profit ratio with transition of rank of stock price |
| Validity of enterprise value judged by comparing transition of average number of claims filed to research and development expenses ratio with transition of rank of stock price |
| Validity of enterprise value judged by comparing transition of average number of claims filed to sales volume ratio with transition of rank of stock price |
| Validity of enterprise value judged by comparing transition of average number of claims filed to sales profit ratio with transition of rank of stock price |
| Validity of enterprise value judged by comparing transition of average number of claims filed to operating profit ratio with transition of rank of stock price |
| Validity of enterprise value judged by comparing transition of average number of claims filed to gross operating profit ratio with transition of rank of stock price |
| Validity of enterprise value judged by comparing transition of average years spent on examination requests to research and development expenses ratio with transition of rank of stock price |
| Validity of enterprise value judged by comparing transition of average years spent on examination requests to sales volume ratio with transition of rank of stock price |
| Validity of enterprise value judged by comparing transition of average years spent on examination requests to sales profit ratio with transition of rank of stock price |
| Validity of enterprise value judged by comparing transition of average years spent on examination requests to operating profit ratio with transition of rank of stock price |
| Validity of enterprise value judged by comparing transition of average years spent on examination requests to gross operating profit ratio with transition of rank of stock price |
| Validity of enterprise value judged by comparing transition of average number of inventors in application to research and development expenses ratio with transition of rank of stock price |
| Validity of enterprise value judged by comparing transition of average number of inventors in application to sales volume ratio with transition of rank of stock price |
| Validity of enterprise value judged by comparing transition of average number of inventors in application to sales profit ratio with transition of rank of stock price |
| Validity of enterprise value judged by comparing transition of average number of inventors in application to operating profit ratio with transition of rank of stock price |
| Validity of enterprise value judged by comparing transition of average number of inventors in application to gross operating profit ratio with transition of rank of stock price |
| Validity of enterprise value judged by comparing transition of number of filings to research and development expenses (in each country) ratio with transition of rank of stock price |
| Validity of enterprise value judged by comparing transition of number of filings to sales volume (in each country) ratio with transition of rank of stock price |
| Validity of enterprise value judged by comparing transition of number of filings to sales profit (in each country) ratio with transition of rank of stock price |
| Validity of enterprise value judged by comparing transition of number of filings to operating profit (in each country) ratio with transition of rank of stock price |
| Validity of enterprise value judged by comparing transition of number of filings to gross operating profit (in each country) ratio with transition of rank of stock price |
| Validity of enterprise value judged by comparing transition of average number of claims filed to research and development expenses (in each country) ratio with transition of rank of stock price |
| Validity of enterprise value judged by comparing transition of average number of claims filed to sales volume (in each country) ratio with transition of rank of stock price |
| Validity of enterprise value judged by comparing transition of average number of claims filed to sales profit (in each country) ratio with transition of rank of stock price |
| Validity of enterprise value judged by comparing transition of average number of claims filed to operating profit (in each country) ratio with transition of rank of stock price |
| Validity of enterprise value judged by comparing transition of average number of claims filed to gross operating profit (in each country) ratio with transition of rank of stock price |

## FIG. 50

Judge validity of enterprise value by comparing correlation value between management-finance information and patent information with market value information

| (B-1) Registration Related Matters (Rank of Stock Price) |
| --- |
| Validity of enterprise value judged by comparing transition of number of registrations per employee with transition of rank of stock price |
| Validity of enterprise value judged by comparing transition of average number of claims registered per employee with transition of rank of stock price |
| Validity of enterprise value judged by comparing transition of number of registrations to research and development expenses ratio with transition of rank of stock price |
| Validity of enterprise value judged by comparing transition of number of registrations to sales volume ratio with transition of rank of stock price |
| Validity of enterprise value judged by comparing transition of number of registrations to sales profit ratio with transition of rank of stock price |
| Validity of enterprise value judged by comparing transition of number of registrations to operating profit ratio with transition of rank of stock price |
| Validity of enterprise value judged by comparing transition of number of registrations to gross operating profit ratio with transition of rank of stock price |
| Validity of enterprise value judged by comparing transition of average number of claims registered to research and development expenses ratio with transition of rank of stock price |
| Validity of enterprise value judged by comparing transition of average number of claims registered to sales volume ratio with transition of rank of stock price |
| Validity of enterprise value judged by comparing transition of average number of claims registered to sales profit ratio with transition of rank of stock price |
| Validity of enterprise value judged by comparing transition of average number of claims registered to operating profit ratio with transition of rank of stock price |
| Validity of enterprise value judged by comparing transition of average number of claims registered to gross operating profit ratio with transition of rank of stock price |
| Validity of enterprise value judged by comparing transition of average years required for registration to research and development expenses ratio with transition of rank of stock price |
| Validity of enterprise value judged by comparing transition of average years required for registration to sales volume ratio with transition of rank of stock price |
| Validity of enterprise value judged by comparing transition of average years required for registration to sales profit ratio with transition of rank of stock price |
| Validity of enterprise value judged by comparing transition of average years required for registration to operating profit ratio with transition of rank of stock price |
| Validity of enterprise value judged by comparing transition of average years required for registration to gross operating profit ratio with transition of rank of stock price |
| Validity of enterprise value judged by comparing transition of average number of inventors in registration to research and development expenses ratio with transition of rank of stock price |
| Validity of enterprise value judged by comparing transition of average number of inventors in registration to sales volume ratio with transition of rank of stock price |
| Validity of enterprise value judged by comparing transition of average number of inventors in registration to sales profit ratio with transition of rank of stock price |
| Validity of enterprise value judged by comparing transition of average number of inventors in registration to operating profit ratio with transition of rank of stock price |
| Validity of enterprise value judged by comparing transition of average number of inventors in registration to gross operating profit ratio with transition of rank of stock price |
| Validity of enterprise value judged by comparing transition of number of registrations to research and development expenses (in each country) ratio with transition of rank of stock price |
| Validity of enterprise value judged by comparing transition of number of registrations to sales volume (in each country) ratio with transition of rank of stock price |
| Validity of enterprise value judged by comparing transition of number of registrations to sales profit (in each country) ratio with transition of rank of stock price |
| Validity of enterprise value judged by comparing transition of number of registrations to operating profit (in each country) ratio with transition of rank of stock price |
| Validity of enterprise value judged by comparing transition of number of registrations to gross operating profit (in each country) ratio with transition of rank of stock price |
| Validity of enterprise value judged by comparing transition of average number of claims registered to research and development expenses (in each country) ratio with transition of rank of stock price |
| Validity of enterprise value judged by comparing transition of average number of claims registered to sales volume (in each country) ratio with transition of rank of stock price |
| Validity of enterprise value judged by comparing transition of average number of claims registered to sales profit (in each country) ratio with transition of rank of stock price |
| Validity of enterprise value judged by comparing transition of average number of claims registered to operating profit (in each country) ratio with transition of rank of stock price |
| Validity of enterprise value judged by comparing transition of average number of claims registered to gross operating profit (in each country) ratio with transition of rank of stock price |

FIG. 51

Judge validity of enterprise value by comparing correlation value between management–finance information and patent information with market value information

| (A-2) Application Related Matters (Rank of Hidden Assets) |
|---|
| Validity of enterprise value judged by comparing transition of number of filings per employee with transition of rank of hidden assets |
| Validity of enterprise value judged by comparing transition of average number of claims filed per employee with transition of rank of hidden assets |
| Validity of enterprise value judged by comparing transition of number of filings to research and development expenses ratio with transition of rank of hidden assets |
| Validity of enterprise value judged by comparing transition of number of filings to sales volume ratio with transition of rank of hidden assets |
| Validity of enterprise value judged by comparing transition of number of filings to sales profit ratio with transition of rank of hidden assets |
| Validity of enterprise value judged by comparing transition of number of filings to operating profit ratio with transition of rank of hidden assets |
| Validity of enterprise value judged by comparing transition of number of filings to gross operating profit ratio with transition of rank of hidden assets |
| Validity of enterprise value judged by comparing transition of average number of claims filed to research and development expenses ratio with transition of rank of hidden assets |
| Validity of enterprise value judged by comparing transition of average number of claims filed to sales volume ratio with transition of rank of hidden assets |
| Validity of enterprise value judged by comparing transition of average number of claims filed to sales profit ratio with transition of rank of hidden assets |
| Validity of enterprise value judged by comparing transition of average number of claims filed to operating profit ratio with transition of rank of hidden assets |
| Validity of enterprise value judged by comparing transition of average number of claims filed to gross operating profit ratio with transition of rank of hidden assets |
| Validity of enterprise value judged by comparing transition of average years spent on examination requests to research and development expenses ratio with transition of rank of hidden assets |
| Validity of enterprise value judged by comparing transition of average years spent on examination requests to sales volume ratio with transition of rank of hidden assets |
| Validity of enterprise value judged by comparing transition of average years spent on examination requests to sales profit ratio with transition of rank of hidden assets |
| Validity of enterprise value judged by comparing transition of average years spent on examination requests to operating profit ratio with transition of rank of hidden assets |
| Validity of enterprise value judged by comparing transition of average years spent on examination requests to gross operating profit ratio with transition of rank of hidden assets |
| Validity of enterprise value judged by comparing transition of average number of inventors in application to research and development expenses ratio with transition of rank of hidden assets |
| Validity of enterprise value judged by comparing transition of average number of inventors in application to sales volume ratio with transition of rank of hidden assets |
| Validity of enterprise value judged by comparing transition of average number of inventors in application to sales profit ratio with transition of rank of hidden assets |
| Validity of enterprise value judged by comparing transition of average number of inventors in application to operating profit ratio with transition of rank of hidden assets |
| Validity of enterprise value judged by comparing transition of average number of inventors in application to gross operating profit ratio with transition of rank of hidden assets |
| Validity of enterprise value judged by comparing transition of number of filings to research and development expenses (in each country) ratio with transition of rank of hidden assets |
| Validity of enterprise value judged by comparing transition of number of filings to sales volume (in each country) ratio with transition of rank of hidden assets |
| Validity of enterprise value judged by comparing transition of number of filings to sales profit (in each country) ratio with transition of rank of hidden assets |
| Validity of enterprise value judged by comparing transition of number of filings to operating profit (in each country) ratio with transition of rank of hidden assets |
| Validity of enterprise value judged by comparing transition of number of filings to gross operating profit (in each country) ratio with transition of rank of hidden assets |
| Validity of enterprise value judged by comparing transition of average number of claims filed to research and development expenses (in each country) ratio with transition of rank of hidden assets |
| Validity of enterprise value judged by comparing transition of average number of claims filed to sales volume (in each country) ratio with transition of rank of hidden assets |
| Validity of enterprise value judged by comparing transition of average number of claims filed to sales profit (in each country) ratio with transition of rank of hidden assets |
| Validity of enterprise value judged by comparing transition of average number of claims filed to operating profit (in each country) ratio with transition of rank of hidden assets |
| Validity of enterprise value judged by comparing transition of average number of claims filed to gross operating profit (in each country) ratio with transition of rank of hidden assets |

## FIG. 52

Judge validity of enterprise value by comparing correlation value between management–finance information and patent information with market value information

| (B-2) Registration Related Matters (Rank of Hidden Assets) |
| --- |
| Validity of enterprise value judged by comparing transition of number of registrations per employee with transition of rank of hidden assets |
| Validity of enterprise value judged by comparing transition of average number of claims registered per employee with transition of rank of hidden assets |
| Validity of enterprise value judged by comparing transition of number of registrations to research and development expenses ratio with transition of rank of hidden assets |
| Validity of enterprise value judged by comparing transition of number of registrations to sales volume ratio with transition of rank of hidden assets |
| Validity of enterprise value judged by comparing transition of number of registrations to sales profit ratio with transition of rank of hidden assets |
| Validity of enterprise value judged by comparing transition of number of registrations to operating profit ratio with transition of rank of hidden assets |
| Validity of enterprise value judged by comparing transition of number of registrations to gross operating profit ratio with transition of rank of hidden assets |
| Validity of enterprise value judged by comparing transition of average number of claims registered to research and development expenses ratio with transition of rank of hidden assets |
| Validity of enterprise value judged by comparing transition of average number of claims registered to sales volume ratio with transition of rank of hidden assets |
| Validity of enterprise value judged by comparing transition of average number of claims registered to sales profit ratio with transition of rank of hidden assets |
| Validity of enterprise value judged by comparing transition of average number of claims registered to operating profit ratio with transition of rank of hidden assets |
| Validity of enterprise value judged by comparing transition of average number of claims registered to gross operating profit ratio with transition of rank of hidden assets |
| Validity of enterprise value judged by comparing transition of average years required for registration to research and development expenses ratio with transition of rank of hidden assets |
| Validity of enterprise value judged by comparing transition of average years required for registration to sales volume ratio with transition of rank of hidden assets |
| Validity of enterprise value judged by comparing transition of average years required for registration to sales profit ratio with transition of rank of hidden assets |
| Validity of enterprise value judged by comparing transition of average years required for registration to operating profit ratio with transition of rank of hidden assets |
| Validity of enterprise value judged by comparing transition of average years required for registration to gross operating profit ratio with transition of rank of hidden assets |
| Validity of enterprise value judged by comparing transition of average number of inventors in registration to research and development expenses ratio with transition of rank of hidden assets |
| Validity of enterprise value judged by comparing transition of average number of inventors in registration to sales volume ratio with transition of rank of hidden assets |
| Validity of enterprise value judged by comparing transition of average number of inventors in registration to sales profit ratio with transition of rank of hidden assets |
| Validity of enterprise value judged by comparing transition of average number of inventors in registration to operating profit ratio with transition of rank of hidden assets |
| Validity of enterprise value judged by comparing transition of average number of inventors in registration to gross operating profit ratio with transition of rank of hidden assets |
| Validity of enterprise value judged by comparing transition of number of registrations to research and development expenses (in each country) ratio with transition of rank of hidden assets |
| Validity of enterprise value judged by comparing transition of number of registrations to sales volume (in each country) ratio with transition of rank of hidden assets |
| Validity of enterprise value judged by comparing transition of number of registrations to sales profit (in each country) ratio with transition of rank of hidden assets |
| Validity of enterprise value judged by comparing transition of number of registrations to operating profit (in each country) ratio with transition of rank of hidden assets |
| Validity of enterprise value judged by comparing transition of number of registrations to gross operating profit (in each country) ratio with transition of rank of hidden assets |
| Validity of enterprise value judged by comparing transition of average number of claims registered to research and development expenses (in each country) ratio with transition of rank of hidden assets |
| Validity of enterprise value judged by comparing transition of average number of claims registered to sales volume (in each country) ratio with transition of rank of hidden assets |
| Validity of enterprise value judged by comparing transition of average number of claims registered to sales profit (in each country) ratio with transition of rank of hidden assets |
| Validity of enterprise value judged by comparing transition of average number of claims registered to operating profit (in each country) ratio with transition of rank of hidden assets |
| Validity of enterprise value judged by comparing transition of average number of claims registered to gross operating profit (in each country) ratio with transition of rank of hidden assets |

FIG. 53

Judge validity of enterprise value by comparing correlation value between management-finance information and patent information with market value information

| (A-3) Application Related Matters (Rank of Brand Value) |
|---|
| Validity of enterprise value judged by comparing transition of number of filings per employee with transition of rank of brand value |
| Validity of enterprise value judged by comparing transition of average number of claims filed per employee with transition of rank of brand value |
| Validity of enterprise value judged by comparing transition of number of filings to research and development expenses ratio with transition of rank of brand value |
| Validity of enterprise value judged by comparing transition of number of filings to sales volume ratio with transition of rank of brand value |
| Validity of enterprise value judged by comparing transition of number of filings to sales profit ratio with transition of rank of brand value |
| Validity of enterprise value judged by comparing transition of number of filings to operating profit ratio with transition of rank of brand value |
| Validity of enterprise value judged by comparing transition of number of filings to gross operating profit ratio with transition of rank of brand value |
| Validity of enterprise value judged by comparing transition of average number of claims filed to research and development expenses ratio with transition of rank of brand value |
| Validity of enterprise value judged by comparing transition of average number of claims filed to sales volume ratio with transition of rank of brand value |
| Validity of enterprise value judged by comparing transition of average number of claims filed to sales profit ratio with transition of rank of brand value |
| Validity of enterprise value judged by comparing transition of average number of claims filed to operating profit ratio with transition of rank of brand value |
| Validity of enterprise value judged by comparing transition of average number of claims filed to gross operating profit ratio with transition of rank of brand value |
| Validity of enterprise value judged by comparing transition of average years spent on examination requests to research and development expenses ratio with transition of rank of brand value |
| Validity of enterprise value judged by comparing transition of average years spent on examination requests to sales volume ratio with transition of rank of brand value |
| Validity of enterprise value judged by comparing transition of average years spent on examination requests to sales profit ratio with transition of rank of brand value |
| Validity of enterprise value judged by comparing transition of average years spent on examination requests to operating profit ratio with transition of rank of brand value |
| Validity of enterprise value judged by comparing transition of average years spent on examination requests to gross operating profit ratio with transition of rank of brand value |
| Validity of enterprise value judged by comparing transition of average number of inventors in application to research and development expenses ratio with transition of rank of brand value |
| Validity of enterprise value judged by comparing transition of average number of inventors in application to sales volume ratio with transition of rank of brand value |
| Validity of enterprise value judged by comparing transition of average number of inventors in application to sales profit ratio with transition of rank of brand value |
| Validity of enterprise value judged by comparing transition of average number of inventors in application to operating profit ratio with transition of rank of brand value |
| Validity of enterprise value judged by comparing transition of average number of inventors in application to gross operating profit ratio with transition of rank of brand value |
| Validity of enterprise value judged by comparing transition of number of filings to research and development expenses (in each country) ratio with transition of rank of brand value |
| Validity of enterprise value judged by comparing transition of number of filings to sales volume (in each country) ratio with transition of rank of brand value |
| Validity of enterprise value judged by comparing transition of number of filings to sales profit (in each country) ratio with transition of rank of brand value |
| Validity of enterprise value judged by comparing transition of number of filings to operating profit (in each country) ratio with transition of rank of brand value |
| Validity of enterprise value judged by comparing transition of number of filings to gross operating profit (in each country) ratio with transition of rank of brand value |
| Validity of enterprise value judged by comparing transition of average number of claims filed to research and development expenses (in each country) ratio with transition of rank of brand value |
| Validity of enterprise value judged by comparing transition of average number of claims filed to sales volume (in each country) ratio with transition of rank of brand value |
| Validity of enterprise value judged by comparing transition of average number of claims filed to sales profit (in each country) ratio with transition of rank of brand value |
| Validity of enterprise value judged by comparing transition of average number of claims filed to operating profit (in each country) ratio with transition of rank of brand value |
| Validity of enterprise value judged by comparing transition of average number of claims filed to gross operating profit (in each country) ratio with transition of rank of brand value |

## FIG. 54

Judge validity of enterprise value by comparing correlation value between management-finance information and patent information with market value information

| (B-3) Registration Related Matters (Rank of Brand Value) |
|---|
| Validity of enterprise value judged by comparing transition of number of registrations per employee with transition of rank of brand value |
| Validity of enterprise value judged by comparing transition of average number of claims registered per employee with transition of rank of brand value |
| Validity of enterprise value judged by comparing transition of number of registrations to research and development expenses ratio with transition of rank of brand value |
| Validity of enterprise value judged by comparing transition of number of registrations to sales volume ratio with transition of rank of brand value |
| Validity of enterprise value judged by comparing transition of number of registrations to sales profit ratio with transition of rank of brand value |
| Validity of enterprise value judged by comparing transition of number of registrations to operating profit ratio with transition of rank of brand value |
| Validity of enterprise value judged by comparing transition of number of registrations to gross operating profit ratio with transition of rank of brand value |
| Validity of enterprise value judged by comparing transition of average number of claims registered to research and development expenses ratio with transition of rank of brand value |
| Validity of enterprise value judged by comparing transition of average number of claims registered to sales volume ratio with transition of rank of brand value |
| Validity of enterprise value judged by comparing transition of average number of claims registered to sales profit ratio with transition of rank of brand value |
| Validity of enterprise value judged by comparing transition of average number of claims registered to operating profit ratio with transition of rank of brand value |
| Validity of enterprise value judged by comparing transition of average number of claims registered to gross operating profit ratio with transition of rank of brand value |
| Validity of enterprise value judged by comparing transition of average years required for registration to research and development expenses ratio with transition of rank of brand value |
| Validity of enterprise value judged by comparing transition of average years required for registration to sales volume ratio with transition of rank of brand value |
| Validity of enterprise value judged by comparing transition of average years required for registration to sales profit ratio with transition of rank of brand value |
| Validity of enterprise value judged by comparing transition of average years required for registration to operating profit ratio with transition of rank of brand value |
| Validity of enterprise value judged by comparing transition of average years required for registration to gross operating profit ratio with transition of rank of brand value |
| Validity of enterprise value judged by comparing transition of average number of inventors in registration to research and development expenses ratio with transition of rank of brand value |
| Validity of enterprise value judged by comparing transition of average number of inventors in registration to sales volume ratio with transition of rank of brand value |
| Validity of enterprise value judged by comparing transition of average number of inventors in registration to sales profit ratio with transition of rank of brand value |
| Validity of enterprise value judged by comparing transition of average number of inventors in registration to operating profit ratio with transition of rank of brand value |
| Validity of enterprise value judged by comparing transition of average number of inventors in registration to gross operating profit ratio with transition of rank of brand value |
| Validity of enterprise value judged by comparing transition of number of registrations to research and development expenses (in each country) ratio with transition of rank of brand value |
| Validity of enterprise value judged by comparing transition of number of registrations to sales volume (in each country) ratio with transition of rank of brand value |
| Validity of enterprise value judged by comparing transition of number of registrations to sales profit (in each country) ratio with transition of rank of brand value |
| Validity of enterprise value judged by comparing transition of number of registrations to operating profit (in each country) ratio with transition of rank of brand value |
| Validity of enterprise value judged by comparing transition of number of registrations to gross operating profit (in each country) ratio with transition of rank of brand value |
| Validity of enterprise value judged by comparing transition of average number of claims registered to research and development expenses (in each country) ratio with transition of rank of brand value |
| Validity of enterprise value judged by comparing transition of average number of claims registered to sales volume (in each country) ratio with transition of rank of brand value |
| Validity of enterprise value judged by comparing transition of average number of claims registered to sales profit (in each country) ratio with transition of rank of brand value |
| Validity of enterprise value judged by comparing transition of average number of claims registered to operating profit (in each country) ratio with transition of rank of brand value |
| Validity of enterprise value judged by comparing transition of average number of claims registered to gross operating profit (in each country) ratio with transition of rank of brand value |

| **INTERNATIONAL SEARCH REPORT** | International application No. |
|---|---|
| | PCT/JP2004/003423 |

**A. CLASSIFICATION OF SUBJECT MATTER**
Int.Cl⁷ G06F17/60

According to International Patent Classification (IPC) or to both national classification and IPC

**B. FIELDS SEARCHED**

Minimum documentation searched (classification system followed by classification symbols)
Int.Cl⁷ G06F17/60

Documentation searched other than minimum documentation to the extent that such documents are included in the fields searched

| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-15108 A (Nomura Holdings Kabushiki Kaisha), 18 January, 2002 (18.01.02), Abstract (Family: none) | 1-50 |
| A | WO 2000/75851 A1 (STOCKPRICEPREDICTOR COM. LLC.), 14 December, 2000 (14.12.00), Abstract & JP 2004-500617 A | 1-50 |
| A | JP 2002-24451 A (Yugen Kaisha Nittaku Seiko), 25 January, 2002 (25.01.02), Abstract (Family: none) | 1-50 |

☐ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 April, 2004 (27.04.04) | 18 May, 2004 (18.05.04) |

| Name and mailing address of the ISA/ | Authorized officer |
|---|---|
| Japanese Patent Office | |
| Facsimile No. | Telephone No. |

Form PCT/ISA/210 (second sheet) (January 2004)